(19) Europäisches Patentamt
European Patent Office
Office européen des brevets

(11) EP 2 202 904 B1

(12) EUROPEAN PATENT SPECIFICATION

(45) Date of publication and mention of the grant of the patent:
**02.10.2013 Bulletin 2013/40**

(51) Int Cl.:
***H04L 1/00*** *(2006.01)*

(21) Application number: **08022422.3**

(22) Date of filing: **23.12.2008**

# (54) A relay station and a decoder

Relaisstation und Dekodierer

Station de relais et décodeur

(84) Designated Contracting States:
**DE GB**

(43) Date of publication of application:
**30.06.2010 Bulletin 2010/26**

(73) Proprietor: **NTT DOCOMO, INC.**
**Tokyo 100-6150 (JP)**

(72) Inventors:
- **Zeitler, Georg**
  **81377 München (DE)**
- **Koetter, Ralf**
  **80634 München (DE)**
- **Bauch, Gerhard**
  **80799 München (DE)**
- **Widmer, Joerg**
  **81539 München (DE)**

(74) Representative: **Zimmermann, Tankred Klaus et al**
**Schoppe, Zimmermann, Stöckeler & Zinkler**
**Patentanwälte**
**Postfach 246**
**82043 Pullach bei München (DE)**

(56) References cited:
- **GEORG ZEITLER ET AL: "Design of network coding functions in multihop relay networks" TURBO CODES AND RELATED TOPICS, 2008 5TH INTERNATIONAL SYMPOSIUM ON, IEEE, PISCATAWAY, NJ, USA, 1 September 2008 (2008-09-01), pages 249-254, XP031353696 ISBN: 978-1-4244-2862-5**
- **RUIYUAN HU ET AL: "Practical Compress-Forward in User Cooperation: Wyner-Ziv Cooperation" INFORMATION THEORY, 2006 IEEE INTERNATIONAL SYMPOSIUM ON, IEEE, PI, 1 July 2006 (2006-07-01), pages 489-493, XP031032256 ISBN: 978-1-4244-0505-3**
- **TUYEN BUI ET AL: "A decode and forward cooperation scheme with soft relaying in wireless communication" SIGNAL PROCESSING ADVANCES IN WIRELESS COMMUNICATIONS, 2007. SPAWC 200 7. IEEE 8TH WORKSHOP ON, IEEE, PI, 1 June 2007 (2007-06-01), pages 1-5, XP031189409 ISBN: 978-1-4244-0954-9**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 202 904 B1

## Description

The present invention is in the field of wireless communication in a mobile communication system using relay stations.

Conventional relaying concepts comprise, for example, standard relaying methods as amplify-and-forward relaying, decode-and-forward relaying, respectively. While amplify-and-forward relaying has low delay on the expense of noise amplification, decode-and-forward relaying causes a processing delay at the relay station, due to decoding. Moreover, decoding errors at the relay station may have detrimental effects on decoding at the destination.

The designated purpose of a relay station in wireless networks is to facilitate the transmission of other users within the same cell, where one important benefit is provision of cooperative diversity as shown by A. Sendonaris, E. Erkip, and B. Aazhang, "Increasing uplink capacity via user cooperation diversity," in Proc. IEEE Int. Symp. on Information Theory, 1998. While the concept of network coding as shown by R. Ahlswede, N. Cai, S. R. Li, and R. W. Yeung, "Network information flow," IEEE Trans. Inf. Theory, vol. 46, no. 4, pp. 1204-1216, Apr. 2000 was originally developed to increase throughput in wireline networks, the application of network coding to wireless networks has been shown to effectively combat the effects of the fading channels shown by X. Bao and J. Li, "Matching code-on-graph with network-on-graph: Adaptive network coding for wireless relay networks," in Proc. 43rd Ann. Allerton Conf. on Communications, Control, and Computing, 2005, C. Hausl, F. Schreckenbach, I. Oikonomidis, G. Bauch, "Iterative network and channel decoding on a tanner graph," in Proc. 43rd Ann. Allerton Conf. on Communications, Control, and Computing, 2005 and Y. Chen, S. Kishore, and J. Li, "Wireless diversity through network coding," in Proc. IEEE Wireless Communications and Networking Conf., 2006 and L. Xiao, T. E. Fuja, J. Kliewer, and D. J. Costello, Jr., "Nested codes with multiple interpretations," in Proc. 40th Ann. Conf. on Information Sciences and Systems, 2006, thereby providing cooperative diversity.

A common assumption is that the relay node or relay station can recover the source messages perfectly, thus restricting the investigation to relaying protocols based on the decode-and-forward (DF) as shown by the strategy of T. M. Cover and A. A. El Gamal, "Capacity theorems for the relay channel," IEEE Trans. Inf. Theory, vol. IT-25, no. 5, pp. 572-584, Sep. 1979, G. Kramer, M. Gastpar, and P. Gupta, "Cooperative strategies and capacity theorems for relay networks," IEEE Trans. Inf. Theory, vol. 51, no. 9, pp. 3037-3063, Sep. 2005, and L. Sankaranarayanan, G. Kramer, and N. B. Mandayam, "Hierarchical sensor networks: Capacity bounds and cooperative strategies using the multiple-access relay network," in IEEE Conf. on Sensor Networks, 2004, or to the strategy that the relay does not transmit at all if residual errors remain after decoding, provided there exists an error detection scheme at the relay node.

Fig. 13 illustrates a scenario and a radio network which utilizes multi-hop relaying. Fig. 13 shows a source $s_1$ transmitting a symbol or a transmit word $x_1$, which is received by a relay station r and a destination d. Fig. 13 shows a second source $s_2$ transmitting a second symbol or a transmit word $x_2$, which is also received by the relay station r and a destination d. Moreover, the relay station r transmits a symbol $x_r$, which is also received by the destination.

Throughout, the multiple- access relay channel (MARC = Multiple Access Relay Channel) shown in Fig. 13 with two sources $s_1$, $s_2$, one relay r and the destination d will be considered. The network geometry is assumed to be such that the relay is closer to the destination than to the sources, so that the source- relay channel quality is too low to permit reliable decoding at the relay. The relay- destination link, however, can support a higher rate due to its proximity to the destination. For such a scenario, the relay can make use of ideas from network coding as described by R. Ahlswede, N. Cai, S. R. Li, and R. W. Yeung, "Network information flow, " IEEE Trans. Inf. Theory, vol. 46, no. 4, pp. 1204- 1216, Apr. 2000 to form the log- likelihood ratios (LLRs) of the network coded message $x_1 \oplus x_2$ and transmit these LLRs in an analog manner to the destination to significantly increase the receiver performance, as shown in S. Yang and R. Koetter, "Network coding over a noisy relay: a belief propagation approach, " in Proc. IEEE Int. Symp. on Information Theory, 2007.

Other approaches with respect to relaying can be found in A. D. Wyner and J. Ziv, "The rate-distortion function for source coding with side information at the decoder," IEEE Trans. Inf. Theory, vol. IT-22, no. 1, pp. 1-10, Jan. 1976, A. Chakrabarti, A. de Baynast, A. Sabharwal, and B. Aazhang, "Half-duplex estimate-and-forward relaying: Bounds and code design," in Proc. IEEE Int. Symp. on Information Theory, 2006, pp. 1239-1243, N. Tishby, F. C. Pereira, and W. Bialek, "The information bottleneck method," in Proc. 37th Ann. Allerton Conf. on Communications, Control, and Computing, 1999, and G. Zeitler, R. Koetter, G. Bauch, and J. Widmer, "Design of network coding functions in multihop relay networks," in Proc. 5th symposium Turbo Codes and Related Topics, 2008.

In E. Ayanoglu, et. al. "Diversity Coding of Transparent Self-Healing and Fault Tolerant Communication Networks", IEEE Transactions on Communications, Vol. 41, No. 11, November 1993, the authors disclose the concept of network coding, which is illustrated in Fig. 14. Fig. 14 shows a first encoder 1410 coding an information word $u_1$ to a first symbol or transmit word $x_1$, which is transmitted to a relay station 1450 and a destination 1470. Furthermore, Fig. 14 shows a second encoder 1420, which encodes a second information word $u_2$ to a second symbol or transmit word $x_2$, which is also transmitted to the relay station 1450 and the destination 1470. As indicated in Fig. 14 at the relay station 1450, two symbols are received, superimposed by additive white Gaussian noise $n_r$ (AWGN = Additive White Gaussian Noise). Two decoders are operative at the relay station 1450, which are labeled "decoder 1" 1451 and "decoder 2" 1452 in Fig. 14.

Ideally, the two decoders 1451 and 1452 decode the information words $u_1$ and $u_2$. The two decoded information words are then combined as indicated by addition 1453 in Fig. 14 and the combination is encoded by the encoder 1454 shown in Fig. 14. The encoded combined symbol $x_R$ is then transmitted from the relay station 1450 to the destination 1470, where it is superimposed by AWGN $n_B$. Three symbols or receive words are received at the destination 1470, namely $y_1$ from "encoder 1" 1410, $y_2$ from "encoder 2" 1420, and $y_R$ from the relay station 1450. At the destination 1470 joint decoding may be utilized in order to decode the information words $u_1$ and $u_2$. One disadvantage of the concept illustrated in Fig. 14 is the delay, which is associated with decoding the received signal at the relay station 1450 in order to derive the information words and with encoding the combination of said information words again at the relay station 1450.

Another conventional approach is illustrated in Fig. 15. Fig. 15 shows similar components as have been described with respect to Fig. 14, however, at the relay station 1450, instead of combining the decoded information words $u_1$ and $u_2$, a joint encoder 1455 is utilized. The joint encoder 1455 may have the advantage that an increased block length can be used, which may particularly be beneficial for iterative decoding. The joint encoder 1455 may enable increased diversity which may be exploited at the joint decoder at the destination 1470. However, high delays are still involved with decoding the received signals at the relay station and jointly encoding the decoded signals again, especially when increased block lengths are used. Another problem arises from decoding errors at the relay station 1450, which are re-encoded, and therewith extended or forwarded to the destination 1470.

Yet another conventional approach is illustrated in Fig. 16, which shows similar components as have already been introduced with respect to Figs. 14 and 15. Fig. 16 illustrates the approach of analog transmission from the relay station 1450 to the destination 1470, which may, for example, be implemented at a base station or a NodeB. The main difference with respect to the above explained concepts is that the decoders 1451 and 1452 at the relay station 1450 provide soft information in terms of log likelihood ratios (LLR = Log Likelihood Ratio) of the information words $u_1$ and $u_2$. An equation is shown at the top of Fig. 16, which provides insight into a LLR of a general information word $u$. In a general case, the information word $u$ may comprise only a single bit, which can take two values, namely +1 or -1. The so-called soft information can be determined by considering the quotient of the probability that the bit equals +1 and the probability that the bit equals -1, which is shown in the equation at the top of Fig. 16.

Taking the logarithm of the quotient linearizes the soft information and maps the quotient from the range of positive real number to the full range of the real numbers. Consequently, taking the sign of the LLR corresponds to a hard decision detector. The magnitude of the LLR corresponds to reliability information.

At the relay station 1450 in Fig. 16, the decoders 1451 and 1452 determine the LLRs of the corresponding information words $u_1$ and $u_2$. Moreover, Fig. 16 shows that the relay station 1450, the LLRs at the output of the second decoder 1452 are provided to an interleaver 1456, which interleaves the LLRs. The interleaved LLRs from the second decoder are then combined by the combiner 1457 before analog transmission is used to transmit information on the combination to the destination 1470. Reliability information, in terms of the LLRs is therewith provided to the joint decoder at the destination 1470. However, long delays still occur at the relay station 1450 in order to determine the soft information by the two decoders 1451 and 1452.

Fig. 17 illustrates the same scenario as Fig. 16, however, the details on the destination or NodeB are provided. As can be seen from Fig. 17, LLRs are determined at the destination 1470 for the three receive signals $y_1$, $y_2$, and $y_R$ by the three detectors 1471, 1472, and 1473. Fig. 17 illustrates the concept of joint iterative decoding. The log likelihood ratio provided by the detector 1471 is, in a first step, provided to a first decoder 1475, in order to determine LLRs on the information word $u_1$. The LLRs provided at the input of the decoder 1475 correspond to a-posteriori knowledge of the transmitted code words. At the output of the decoder 1475, a-priori knowledge on the information word $u_1$ is determined by evaluating the difference of the a-posteriori knowledge and the output of the decoder 1475. The a-priori knowledge is still available in terms of LLRs which can then be combined by the combiner 1476 with the LLRs determined by detector 1473 from the received signal $y_R$ on the combination determined at the relay station 1450.

The combination can, for example, be determined by determining a combined LLR for an XOR-combination of the information words $u_1$ and $u_2$. Subsequently, a derivation of the exact combination will be provided which is indicated by

"$\boxplus$".

. From the a-priori knowledge on the first information word and the LLR on the combination, a-posteriori knowledge on the second information word can be determined, which is de-interleaved by de-interleaver 1477. The de-interleaver 1477 corresponds to the interleaver 1456 at the relay station 1450. The de-interleaved LLR at the output of the de-interleaver 1477 can then be combined with the LLRs detected by detector 1472 from the second receive signal $y_2$, and provided as an input to the second decoder 1478. The second decoder 1478 then provides LLRs on the second information word $u_2$ at its output, from which the a-posteriori knowledge from the detector 1472 and the interleaver 1477 can be deducted for determining a-priori information, which may also be called extrinsic information.

After interleaving 1479, the interleaved LLRs can again be combined with the output of the detector 1473 by combiner 1480. A-posteriori information on the first information word $u_1$ is available at the output of the combiner 1480, which can again be combined with the a-posteriori knowledge at the output of the detector 1471. The above description corresponds to a first iteration loop of the joint iterative decoder, which is similar to the principle of turbo decoding. Multiple iteration loops may be carried out along the lines of the above description in order to determine more reliable information on the information words $u_1$ and $u_2$.

Fig. 18 illustrates the case, where at a relay station 1450 bad or weak radio channels are experienced and accordingly, LLRs are determined, which are equal or close to zero. Consequently, at the destination 1470, the LLRs determined by the detector 1473 equal zero, i.e. only very unreliable information is available. Consequently, the combinations carried out by combiners 1476 and 1480 also yield LLRs, which are zero. Therefore, within.the decoder, the LLRs of detector 1473 do not influence the LLRs determined by the detectors 1471 and 1472. In other words, if decoding at the relay station 1450 is very unreliable, decoding at the destination is solely based on the outputs of the detectors 1471 and 1472. The iterative process does not provide any benefits in this case.

Fig. 19 illustrates simulation results on the bit error rate (BER = Bit Error Rate) for the scenario, which is depicted on the left-hand side of Fig. 19. In this scenario two sources 1901 and 1902 transmit signals to a relay station 1903 and a destination 1904. Moreover, on all links signal-to-noise ratios (SNR = Signal-to-Noise Ratio) are given, namely, $SNR_{sr}$ on the links between the sources 1901 and 1902 and the relay station 1903, $SNR_{sd}$ on the links between the sources 1901 and 1902 and the destination 1904, and $SNR_{rd}$ for the link between the relay station 1903 and the destination 1904. On the right-hand side of the Fig. 19, a view chart depicts BER vs. SNR on the links between the sources 1901 and 1902 and the destination 1904. For the simulations, it was assumed that the links are symmetric, i.e. similar SNRs occur on the links of both sources 1901 and 1902 to the relay station 1903. Moreover, for the results depicted on the right-hand side of Fig. 19, it was assumed that $SNR_{sr}$=5dB and results are shown for different $SNR_{rd}$ between the relay station 1903 and the destination 1904. The results illustrate that significant benefits can be obtained in BER if the signal quality on the link between the relay station 1903 and the destination 1904 increases.

Fig. 20 illustrates similar simulation results. However, for the results in Fig. 20, it was assumed that the SNR on the links between the sources 1901 and 1903, and the relay station 1903 was 0dB, i.e. more errors occur at the relay station 1903 than for the case considered in Fig. 19. It can still, however, be observed that gains in BER can be obtained with increasing signal quality on the link between the relay station 1903 and the destination 1904.

Fig. 21 shows a similar scenario using analog transmission from the relay station 1450 as explained with the assistance of Fig. 16. At the bottom of Fig. 21 the combined LLR $L(u_R)$ is illustrated. It can be seen from the view chart at the bottom of Fig. 21 that the combined LLR is approximately Gaussian distributed. Since analog transmission is used, large transmit powers need to be utilized, in order to transmit the combined LLR reliably, considering that they are superimposed by AWGN as well.

Fig. 22 illustrates an option for at least partly overcoming the problem of having to utilize large transmission powers. At the relay station 1450, the combined LLRs are processed by signal processor 1458, in which the hyperbolic tangent of the combined LLR is determined and used for analog transmission, also referred to as soft bit transmission in the following. A similar option is illustrated in Fig. 23 in which a quantizer 1459 is used for quantizing the LLRs at the relay station 1450, 1903 respectively. Fig. 23 shows at the top on the right-hand side the scenario as it was discussed above, involving the two sources 1901 and 1902, the relay station 1903, and the destination 1904. For the simulation results depicted on the left-hand side of Fig. 23, it was assumed that the $SNR_{sr}$ of the links between the sources 1901 and 1902 and the relay station 1903 is 3dB. At the bottom right-hand side of Fig. 23, the details of the relay station 1450 or 1903 are depicted, in which the quantizer 1459 is shown.

In the view chart on the left-hand side the probability density of the LLR $L_R$ is shown assuming two quantizer regions separated by the dotted line. The two squares represent the quantizer values to be transmitted to the destination 1904. Having only two quantizer regions corresponds to transmitting only one bit per quantized value from the relay station 1903 to the destination 1904. In this scenario it can be observed that almost no degradation due to the quantization occurs with respect to the trans- or mutual information, i.e. almost no information is lost due to quatization.

Fig. 24 shows simulation results on the BER vs. the $SNR_{sd}$ on the link between the sources 1901 or 1902 and the destination 1904. For the simulations, it was assumed that the $SNR_{sr}$ between the sources 1901 and 1902 and the relay station 1903, is 3dB, for the $SNR_{rd}$ between the relay station 1903 and the destination 1904 0dB was assumed. The view chart on the left-hand side of Fig. 24 shows BER simulation results for analog transmission indicated by the square markers, soft bit analog transmission indicated by the triangular markers, and quantizer transmission using two quantizer regions, i.e. only one bit per quantizer value by the circular markers. It can be observed that the degradation, when using the quantized values, occurs only for high SNRs between the sources and the destination, whereas for rather low SNRs between the sources and the destination, transmitting the quantized value provides improvements in the BER, which is due to the AWGN taking higher effect on the analog transmission for low SNRs.

Fig. 25 illustrates another simulation scenario, in which five quantizer regions were assumed for a scenario, in which the $SNR_{sr}$=0dB, i.e. it is lower than in the above discussed scenario. Since five quantizer regions were assumed,

an average of 2.3bits have to be transmitted per quantized value after source coding. The view chart on the left-hand side of Fig. 25 shows the probability density of the LLRs at the input of the quantizer 1459, the quantizer regions are separated by the dotted lines, and the representative values are indicated by square markers.

Fig. 26 shows simulation results on the BER when $SNR_{sr}$=3dB is assumed for the links between the sources 1901 and 1902, and the relay station 1903, and an SNR of 0.44dB is assumed for the link between the relay station 1903 and the destination 1904. The view graph on the left-hand side of Fig. 26 shows simulation results for analog transmission indicated by square markers, for soft bit transmission indicated by triangular markers and quantized transmission by circular markers. The simulation results indicate that no degradation at all can be observed when quantization is used.

Fig. 27 illustrates another soft relay and network coding concept wherein quantized transmission from the relay station 1450 to the destination 1470 is used. An equation is illustrated at the top of Fig. 27, which details the combination of the LLRs by the combiner 1457. The output of the combiner 1457 corresponds to the LLR, which can be obtained by an XOR combination of the information words $u_1$ and $u_2$, and which is indicated in the equation at the top of Fig. 27 by an arrow operator pointing to the left. Moreover, Fig. 27 illustrates, within the relay station 1450, the quantizer 1459 for quantizing the combined LLRs to *Z*, the source coder 1460 for source coding the quantized combined LLRs and an encoder 1461 for channel encoding the source coded combined LLRs before transmission to the destination 1470.

In the example depicted in Fig. 27, it is the task of the quantizer 1459 to compress $L_r$ as much as possible while preserving the relevant information about $u_R = u_1 \oplus u_2$ in the quantized signal *Z*. This is expressed by the equation at the bottom of Fig. 27 which indicates that the distribution of the quantizer region *Z* for a given LLR should be chosen, so as to minimize the difference between trans-information $I(L_r,Z)$ between the LLR $L_r$ and the chosen quantizer *Z*, and the trans-information $I(U_r,Z)$ between the combined information words $U_r$ and the chosen quantizer *Z*, which is expressed in the equation in terms of a Lagrangian problem based on factor $\beta$.

Fig. 28 illustrates a similar scenario, but shows that if one of the links between the encoders 1410;1420 and the relay station 1450 degrades, which is exemplified as the link between encoder 1410 and the relay station 1450 in Fig. 28, the combined LLR becomes zero. Therefore, the SNR on the first hop, on the link between the sources and the relay station can be taken into account in the design of the quantizer.

Fig. 29 shows another relay station 1450 in which the LLRs are jointly quantized by quantizer 1459 in order to take the signal quality into account, for which Fig. 30 illustrates the details of the quantizer. On the left-hand side of Fig. 30, a quantizer for symmetric links is shown for which the mutual information after decoding equals 1.98bits. The relevant mutual information or trans-information after quantization equals 1.93bits, and since only two quantizer regions are utilized, only 1-bit is required for encoding the source encoded bits on the link between the relay station 1450 and the base station, or destination 1470. The quantizer regions are illustrated in the diagram at the top of Fig. 30 on the left hand side.

On the right-hand of Fig. 30, a quantizer for asymmetric links is shown, for which the mutual information after decoding equals 1.16bits. The relevant mutual information after quantization equals 1.08bits, and since five quantizer regions are utilized, an average of 2.1bits per source coded bit is required.

Summarizing the conventional concepts, relaying is a promising method in order to overcome coverage limitations at reasonable cost. However, straightforward relaying methods lead to a capacity penalty factor of 0.5, since a time slot has to be split into two hops. Another problem is the processing delay in the relay, which may lead to a non-tolerable increase in the round-trip delay, which dues to the decoding at the relay station according to the above described concepts. The alternative of an amplify-and-forward relaying method, which circumvents the decoding delay at the relay station, causes a lower processing delay, however, these schemes suffer from noise amplification in the relay.

George Zeitler et al. "Design of Network Coding Functions in Multihop Relay Networks", 5th International Symposium on Turbo Codes and Related Topics, 2008 discloses a wireless relay network with two sources, one relay and one destination. The authors propose to have the relay station provide reliability information in terms of log-likelihood ratios about coded bits received at the relay station in case of erroneous source to relay links. The approach is motivated by a rate distortion problem for the log-likelihood ratios obtained at the relay station.

Ruiyuan Hu et al. "Practical Compress-Forward in User Cooperation: Wyner-Ziv Cooperation" , ISIT, Seattle, USA, July 9 - 14, 2006 proposes a user cooperation scheme termed Wyner-Ziv Cooperation as a generalization of Slepian-Wolf cooperation in terms of a compress-forward concept. The authors show that the gains observed in computer simulations range up to 11.5 dB for the source to relay outage case and 3.5 dB on average, a strong testimony that is not only feasible but also beneficial to exploit Wyner-Ziv coding in user cooperation.

It is the object of the present invention to provide an improved concept for relaying.

The object is achieved by a relay station according to claim 1, a method for relaying according to claim 6, a decoder according to claim 17, a method for decoding according to claim 11, and a system according to claim 13.

Embodiments of the present invention are based on the finding that performance improvements can be achieved with respect to delay as well as with respect to error propagation, if the quantization rule at a relay station can be adapted to the signal quality of the received signals at the relay station, e.g. based on whether the signals at the relay station

have been received correctly or not. One of the findings is that the relay can use a quantizer from a set of available quantizers to compress its soft information, depending on the particular realizations of the channel fading on its incoming links, as for example, generally on an error detection mechanism for each incoming link to efficiently use the resources of the relay-destination link.

After soft decoding of a received signal, the relay station has soft information available about its received signal. This soft information can be quantized by an optimized quantizer and forwarded to the destination, where the quantization can be based on a quantization rule, which in turn, is based on an error or signal quality detection mechanism.

Embodiments of the present invention are further based on the finding that optionally, signals of multiple users can be quantized jointly, or a combination of them can be quantized at the relay station. At the destination, i.e. at the decoder, joint decoding for all users, which have been processed jointly at the relay station can be performed using an iterative algorithm. Embodiments can achieve the advantage that noise enhancement is prevented at the relay station, since explicitly computed soft information is forwarded by the relay, rather than an amplified version of the noisy received signal.

Moreover, embodiments may achieve improved transmission characteristics as the relay station may use one quantizer from a set of available quantizers to compress its soft information, depending on the error detection or quality determination scheme at the relay station, and in further embodiments, even on the particular signal qualities of the signals received. Embodiments may therefore enable an efficient use of the resources between the relay station and the destination by taking knowledge about the quality of the received signals into account.

Embodiments may achieve higher user satisfaction through higher throughputs and lower delays. Embodiments may provide coverage extensions with low cost relay stations and improved performance compared to conventional amplify-and-forward or decode-and-forward relay stations. Embodiments of systems carrying out said relaying concepts may provide diversity gain by using said relay stations and may realize low delay and high throughput, since the signals of multiple users can be processed, i.e. quantized, in combination or jointly with high efficiency at a relay station.

Embodiments may comprise a decoder, which can for example, be implemented at a destination, a base station, a NodeB, etc., for decoding the quantized information from a relay station, and therewith realizing the above-described benefits.

Embodiments of the present invention will be detailed using the accompanying figures, in which:

Fig. 1a shows a general overview of a system model;

Fig. 1b illustrates an embodiment of a relay station;

Fig. 2 illustrates an embodiment of a decoder;

Fig. 3 illustrates another embodiment of a decoder;

Fig. 4a illustrates an EXIT curve for a relay check node;

Fig. 4b provides a pseudocode on a first optimization algorithm;

Fig. 5 provides a pseudocode on a second optimization algorithm;

Fig. 6 illustrates two simulation scenarios;

Fig. 7 illustrates operations of an embodiment in the general case;

Fig. 8a illustrates operations of a relay check node in an embodiment;

Fig. 8b illustrates another embodiment of a relay station;

Fig. 8c illustrates two soft information distributions within one embodiment;

Fig. 9 illustrates simulation results;

Fig. 10 illustrates simulation results;

Fig. 11 illustrates simulation results;

Fig. 12a illustrates simulation results;

Fig. 12b illustrates one section of a decoding graph of an embodiment;

Fig. 12c illustrates one section of a decoding graph of an embodiment with messages;

Fig. 13 illustrates a general transmission scenario;

Fig. 14 illustrates a state of the art relaying concept;

Fig. 15 illustrates another state of the art relaying concept;

Fig. 16 illustrates another state of the art relaying concept;

Fig. 17 illustrates a state of the art joint iterative decoder;

Fig. 18 illustrates a joint iterative decoder in a scenario in which the source to relay channel is weak;

Fig. 19 illustrates simulation results of state of the art concepts;

Fig. 20 illustrates simulation results of state of the art concepts;

Fig. 21 illustrates another state of the art relaying concept;

Fig. 22 illustrates another state of the art relaying concept;

Fig. 23 illustrates a state of the art relaying concept with quantization;

Fig. 24 illustrates simulation results of a state of the art concept;

Fig. 25 illustrates another state of the art relaying concept with quantization;

Fig. 26 shows simulation results of state of the art concepts;

Fig. 27 shows another state of the art relaying concept;

Fig. 28 illustrates another state of the art relaying concept for a weak source to relay station channel;

Fig. 29 illustrates another state of the art relaying concept utilizing a quantizer; and

Fig. 30 illustrates quantizer dimensioning for a state of the art relaying concept.

In the following, embodiments of the present invention will be detailed based on the accompanying figures. In the figures, similar components or components having similar tasks will have similar reference signs. Generally, the following considerations will be carried out with respect to a scenario as it has already been explained and illustrated in Fig. 13. In the following, the expressions "relay", "relay station" and "relay apparatus" are used synonymously.

Due to the block fading nature, each channel realization of a radio channel can be viewed as an additive white Gaussian noise (AWGN) channel with some instantaneous signal-to-noise ratio (SNR). In embodiments the relay station can then select a suitable quantizer for the particular realization of the fading coefficients on the source-relay links based on error or signal quality detection and/or the values of $SNR_{sr,1}$ and $SNR_{sr,2}$. Each of the quantizers available at the relay may be designed with the information bottleneck method for the general (asymmetric) setting described in G. Zeitler, R. Koetter, G. Bauch, and J.Widmer, "On quantizer design for soft values in the multiple-access relay channel," submitted to the 2009 International Conference on Communications. Details of the quantizer design will be provided subsequently.

Generally in embodiments, for a given quantizer design framework for asymmetric source-relay channels, the performance of the relaying scheme using quantized transmission in a block fading environment can be evaluated. Further, to allow for easy integration of embodiments of relay stations in already existing mobile communication networks, the channel code specified in the UMTS will be used as described by European Telecommunications Standards Institute,

"Universal mobile telecommunications system (UMTS): Multiplexing and channel coding (FDD)," 3GPP TS 125.212 version 3.4.0, Tech. Rep., 2000, standard for protection of the individual links in the network.

Fig. 1a shows a general system model in which a first channel encoder 10a encodes an information word $u_1$ to a transmission symbol $x_1$, which is transmitted to a first channel 12a to a relay station 100. Moreover, the same transmission symbol $x_1$ is transmitted through a second radio channel 14a to the destination 300. The received signal at the destination 300 is termed $y_{d,1}$. Furthermore, Fig. 1a shows a second channel encoder 10b encoding an information word $u_2$ to a second transmission symbol $x_2$ which is transmitted through a second radio channel 12b to the relay station 100. The signals received at the relay station are termed $y_{r,1}$ for the signal received from the first channel encoder 10a and $y_{r,2}$ for the signal received from the second channel encoder. Moreover, the destination 300 receives a signal $y_{d,2}$ from the second channel encoder 10b through the channel 14b. The relay station 100 transmits a signal $x_r$ through channel 14c through which the received signal $y_r$ is received by the destination 300.

A network with three phases is considered, where the two sources and the relay broadcast their codewords over mutually orthogonal channels. Generally embodiments are not limited to such scenarios. The system model in Fig. 1a includes the block fading channels, so that the received signals at the relay and at the destination read as

$$\mathbf{y}_{r,i} = \frac{a_{sr,i}}{\sqrt{d_{sr,i}^{p}}}\mathbf{x}_i + \mathbf{n}_{sr,i}$$

$$\mathbf{y}_{d,i} = \frac{a_{sd,i}}{\sqrt{d_{sd,i}^{p}}}\mathbf{x}_i + \mathbf{n}_{sd,i}$$

$$\mathbf{y}_{d,i} = \frac{a_{rd}}{\sqrt{d_{rd}^{p}}}\mathbf{x}_r + \mathbf{n}_{rd},$$

where the noise variables follow a circular symmetric complex normal distribution with variances $\sigma^2$, respectively. The distances between the sources and the relay, between the sources and the destination, and between the relay and the destination are given by $d_{sr,i}$, $d_{sd,i}$, and $d_{rd}$, and the path- loss exponent is given by $p$. The fading coefficients $a_{sr,i}$, $a_{sd,i}$, and $a_{rd}$ are mutually independent and Rayleigh distributed with $E[|a_{sr,i}|^2] = E[|a_{sd,i}|^2] = E[|a_{rd}|^2] = 1$. The average values of the SNR on the different links are then given by

$$\rho_{sr,i} = \frac{P}{d_{sr,i}^{p}\sigma^2}$$

$$\rho_{sd,i} = \frac{P}{d_{sd,i}^{p}\sigma^2}$$

$$\rho_{rd} = \frac{P}{d_{rd}^{p}\sigma^2},$$

and the instantaneous SNRs depending on the particular realization of the fading coefficients are $\gamma_{sr,i} = |a_{sr,i}|^2\rho_{sr,i}$, $\gamma_{sd,i} = |a_{sd,i}|^2\rho_{sd,i}$ and $\gamma_{rd} = |a_{rd}|^2\rho_{rd}$. A common assumption is made that the transmitters only know the average values of the SNR for their corresponding channels, but not the realizations of the fading coefficients, and that the receivers know the instantaneous SNRs. In particular, the relay is assumed to have no knowledge, about neither the average, nor instantaneous SNRs, on the source- destination links.

Fig. 1b shows an embodiment of a relay station 100 for being operative in a mobile communication system. In general, embodiments of the relay station 100 may be operative in all kinds of radio communication systems, as for example, GSM (GSM = Global System for Mobile Communication), UMTS (UMTS = Universal Mobile Telecommunication System), LTE (LTE = Long Term Evolution), LTE-A (LTE-A = Long Term Evolution Advanced), WLAN (WLAN = Wireless

Local Area Network), etc.

The relay station 100 depicted in Fig. 1b comprises a receiver 110 for receiving a radio signal from a source, the radio signal comprising symbols representing encoded information, the encoded information being based on an encoding rule and comprising payload information and redundancy information. Referring back to Fig. 1a, such a symbol or transmit word may correspond to $x_1$ or $x_2$.

The relay station 100 further comprises a decoder 120 for determining soft information on the payload information and the redundancy information based on a symbol and a decoding rule associated with the encoding rule, the soft information comprising an information on a symbol and reliability information on the information on the symbol. Moreover, the relay station 100 comprises a signal quality detector 130 for detecting a signal quality measure based on the soft information to obtain a signal quality indication.

As shown in Fig. 1b, the relay station 100 further comprises a quantization rule selector 140 for selecting a quantization rule from a plurality of quantization rules based on the signal quality indication and a quantizer 150 for quantizing the soft information of the payload information based on the selected quantization rule to obtain quantized soft information. Furthermore, the relay station 100 comprises a transmitter 160 for transmitting the quantized soft information to a destination.

In embodiments, the relay station 100 may comprise a signal quality detector 130 which is further adapted for determining an error based on the soft information on the redundancy information to obtain an error indication and the quantization rule selector 140 can be adapted for selecting a quantization rule further based on the error indication. In embodiments the signal quality detector 130 may be adapted to obtain the error indication based on a CRC (CRC = Cyclic Redundancy Check). In other words the signal quality measure may correspond to an error measure and the signal quality indication may correspond to the error indication.

In other words, referring back to Fig. 1a, the relay station 100 may have a receiver 110 for receiving a radio signal $y_{r,1}$ through the radio channel 12a from the source or channel encoder 10a. The signal quality detector 130 may be adapted for determining the signal quality measure, which may for example correspond to a signal- to- noise ratio (SNR = Signal- to- Noise Ratio), a signal- to- noise- and- interference ratio (SINR = Signal- to- Noise- and- Interference Ratio), a signal- to- interference ratio (SIR = Signal- to- Interference Ratio), a transmission capacity, an outcome of a CRC, a bit- error rate (BER = Bit Error Rate), a frame error rate (FER = Frame Error Rate), etc., and the quantization rule selector 140 can then be adapted for taking into account the signal quality measure when selecting the quantization rule. Embodiments of the quantization rule selector 140 may base the selection of the quantization rule on one of or a combination of the group of an outcome of a CRC, a BER, an FER, a SNR, a SINR, a SIR, a transmission capacity, etc.

In embodiments, the receiver 110 can be adapted for receiving another radio signal from another source, the other radio signal comprising other symbols representing other encoded information, the other encoded information being based on another encoding rule and comprising other payload information and other redundancy information. In other words, referring to Fig. 1a, the relay station 100 may comprise a receiver 110 which is adapted for receiving another radio signal $\mathbf{y}_{r,2}$ from the encoder 10b, i.e. comprising another symbol.

In embodiments, the decoder 120 can be adapted for determining other soft information on the other payload information and the other redundancy information based on another symbol and another decoding rule the other decoding rule being associated with the other encoding rule, the other soft information comprising information on the other symbol, and reliability information on the information on the other symbol.

Furthermore, in embodiments, the signal quality detector 130 can be adapted for determining another signal quality measure based on the other soft information to obtain another signal quality indication and correspondingly the quantization rule selector 140 can be adapted for selecting the quantization rule further based on the other signal quality indication. The quantizer 150 can be adapted for quantizing a combination of the soft information on the payload information and the other soft information on the other payload information to obtain the quantized soft information and/or for jointly quantizing the soft information on the payload information and the other soft information on the other payload information to obtain the quantized soft information.

In embodiments, the signal quality detector 130 can be further adapted for determining another error based on the other soft information on the other redundancy information to obtain another error indication and the quantization rule selector 140 can be adapted for selecting the quantization rule further based on the other error indication.

In the following, channel coding at the sources, i.e. at the source and the other source, will be considered. For example, channel codes at the sources are rate 1/2 turbo codes, as specified in the UMTS Standard with information block length $k_1$ and $k_2$, respectively. In the following simulation results will be presented, for which it was assumed $k=k_1=k_2=2000$.

In an embodiment, the relay station performs soft decoding using its received words $\mathbf{y}_{r,1}$ and $\mathbf{y}_{r,2}$. Although the output of a turbo decoder does not consist of true LLRs but rather of the beliefs of the belief propagation decoder, the outputs of the soft decoders at the relay are still referred to as $\mathbf{L}_1$ and $\mathbf{L}_2$. From a high level point of view, the turbo decoder can be seen as a device generating beliefs about the corresponding codeword, and since some situations are focused on where the relay cannot decode error-free, it is of particular interest whether the beliefs produced by the turbo

decoder carry sufficient amount of mutual or trans-information about the code bits if reliable decoding is not possible. It was shown in P. E. Tawk, "Decoding of turbo codes for maximum extrinsic information at codes rates above capacity," Master's thesis, Technische Universität München, 2008 that this is the case, and moreover, that in those cases where the code rate is such that the decoder cannot decode error-free, a rather small number of iterations in the range of 4-6 iterations is sufficient.

Another effect observed is connected with the behavior of the mutual information between the decoder output and the codeword versus the number of iterations: in some cases, mutual information decreases again if the number of iterations is increased above a certain value. That effect, however, is fairly small, and therefore, although some of the stopping criteria found in the literature can be shown to halt the iterative process close to the maximal value of mutual information, a fairly small number of iterations at the relay are simply performed.

Fig. 2 shows an embodiment of a decoder 300 for decoding a first encoded codeword to obtain a first soft information on a first codeword and for decoding a second encoded codeword to obtain second soft information on the second codeword. The decoder 300 comprises a first soft decoder 310 for determining the first soft information on the first codeword based on the first encoded codeword, and a second soft decoder 320 for determining second soft information on the second codeword based on the second encoded codeword and on second a-priori information. Furthermore, the decoder 300 comprises a first soft information renderer 330 for providing the second a-priori information based on the first soft information and quantized soft information, the quantized soft information being based on a combination of the first codeword and the second codeword. Furthermore, the decoder 300 comprises a second soft information renderer 340 for providing first a-priori information based on the second a-priori information, the quantized soft information and the second soft information. The first soft decoder 310 is adapted for determining updated first soft information on the first codeword based on the first encoded codeword and the first a-priori information.

In embodiments, the first soft information renderer 330 can be adapted for providing updated second a-priori information based on the updated first soft information, the first a-priori information and the quantized soft information.

In embodiments, the first soft decoder 310 can be adapted for determining the first soft information in terms of an LLR, the second soft decoder 320 can be adapted for determining the second soft information in terms of an LLR, the first soft information renderer 330 can be adapted for providing the second a-priori information in terms of an LLR, and the second soft information renderer 340 can be adapted for providing the first a-priori information in terms of an LLR.

In embodiments, the first soft information renderer 330 can be adapted for determining the second a-priori information $\mathbf{L}_A^{(2)}$ by a de-interleaved version of

$$\mathbf{L}_A^{\prime(2)} = \mathbf{L}_E^{(1)} \boxplus \mathbf{L}_r,$$

wherein $\mathbf{L}_E^{(1)}$ is a combination of the first soft information and the first a-priori information, and $\mathbf{L}_r$ is quantized soft information, wherein the de-interleaving is based on a de-interleaving rule and the second soft information renderer 340 can be adapted for determining the first a-priori information $\mathbf{L}_A^{(1)}$ by

$$\mathbf{L}_A^{(1)} = \mathbf{L}_E^{\prime(2)} \boxplus \mathbf{L}_r,$$

wherein $\mathbf{L}_E^{\prime(2)}$ is an interleaved version of a combination of the second soft information and the second a-priori information, wherein the interleaving is based on an interleaving rule being inverse to the de-interleaving rule.

In embodiments, the decoder 300 may further comprise a receiver for receiving encoded quantized soft information and a decoder for decoding the encoded quantized soft information and a requantizer for providing the quantized soft information based on a quantization rule and the decoded encoded quantized soft information, wherein the receiver can be adapted for also receiving an information on the quantization rule.

In embodiments, the receiver can be adapted for being operative in a mobile communication system, for example, a cellular system similar to the above-mentioned mobile communication systems.

Fig. 3 illustrates a more detailed embodiment of an iterative decoder 300. Fig. 3 shows the first soft decoder 310 for determining first soft information at its output on the first codeword based on the first encoded codeword $\mathbf{y}_1$. The

first soft decoder 310 is also adapted for determining first soft information or updated first soft information on the first codeword based on the encoded first codeword $\mathbf{y}_1$, and first a-priori information $\mathbf{L}_A^{(1)}$. Fig. 3 shows the second soft decoder 320 for determining second soft information at its output on the second codeword based on the second encoded codeword $\mathbf{y}_2$ and on second a-priori information $\mathbf{L}_A^{(2)}$.

Moreover, Fig. 3 shows a first soft information renderer 330 for providing the second a- priori information $\mathbf{L}_A^{(2)}$ based on the first soft information provided by the first soft decoder 310 and quantized soft information $\mathbf{y}_r$ received from a relay station 100. Fig. 3 shows that the first soft information renderer 330 first determines first extrinsic information $\mathbf{L}_E^{(1)}$, for example, as a difference between the first soft information provided at the output of the first soft decoder 310 and the first a- priori information $\mathbf{L}_A^{(1)}$. Please note that in the present embodiment all soft information is considered in terms of LLRs. Furthermore, Fig. 3 illustrates that the first soft information renderer 330 has a relay check node 335 in which interleaved second a- priori information is determined, based on a combination of the extrinsic information $\mathbf{L}_E^{(1)}$ and the quantized soft information. Moreover, the first soft information renderer 330 operates a de-interleaver 338 which de- interleaves $\mathbf{L'}_A^{(2)}$ to obtain the second a- priori information $\mathbf{L}_A^{(2)}$.

Moreover, Fig. 3 shows the second soft information renderer 340 providing first a- priori information $\mathbf{L}_A^{(1)}$. The second soft information renderer 340 first determines second extrinsic information $\mathbf{L}_E^{(2)}$ based on a difference between the second soft information and the second a- priori information. The second soft information renderer 340 utilizes an interleaver 348 to interleave the second extrinsic information, and utilizes the relay check node 345 in order to combine the interleaved second extrinsic information $\mathbf{L'}_E^{(2)}$ and the quantized soft information $\mathbf{y}_r$ to obtain the first a- priori information $\mathbf{L}_A^{(1)}$.

At the destination, in an embodiment the decoder structure 300 is as shown in Fig. 3, where now, each soft decoder is a turbo decoder. Iterative decoding in this case consists of inner iterations of the turbo decoder, and outer iterations over the relay check nodes. Like at the relay, it was found that performing a rather small number (4-6) of inner iterations gave good results in terms of extrinsic information. In other words, in embodiments each of the soft decoders 310;320 may be implemented as a turbo decoder.

In the following, a quantizer design at the relay station will be explained. Due to the obvious resemblance of the decoder 300 with a normal turbo decoder, analysis tools like the Extrinsic Information Transfer (EXIT = EXtrinsic Information Transfer) chart as shown by S. ten Brink, "Convergence behavior of iteratively decoded parallel concatenated codes," IEEE Trans. Comm., vol. 49, no. 10, pp. 1727-1737, Oct. 2001, prove to be useful also for this distributed turbo decoder.

Although the iterative decoder consists of four components in total, the EXIT curves for the two decoders 310; 320 and the two relay check nodes 332;342 are the same due to the symmetry in the setup. Therefore, to obtain the EXIT chart for the entire decoder, it suffices to plot two curves only, one for the component decoder 310;320 and one for the relay check node 332;342. The EXIT curve of the relay node 332;342 describes how information at the output of one component decoder acting as input information $I_{in} = I\left(X_i; L_E^{(i)}\right)$ or the check node is transformed to $I_{out} = I\left(X_j; L_A^{(j)}\right), i, j \in \{1,2\}, i \neq j$, which is the information at the input to the other component decoder.

Fig. 4a illustrates an EXIT chart of a relay check node, which was determined for $SNR_{sr,1}=SNR_{sr,2}=0.5dB$, $SNR_{rd}=2.28dB$, and for three quantization regions. It turns out that the EXIT curve of the relay check node 332; 342 is almost a straight line never exceeding the diagonal of the EXIT chart, see Fig. 4a for an example. The higher the slope of the check node EXIT curve, the better the information from the relay node, with the curve approaching the diagonal for perfect reliability of the messages from the relay. Provided that the channel quality on the channels from the sources to the relay determines the amount of information available at the relay, the goal is then to find a way of forwarding that information to the destination such that the EXIT curve in the decoder has maximal slope, subject to a constraint on the

rate on the relay- destination link.

If $L_m \in$ l, this is equivalent to seeking a function $f: \mathcal{L} \rightarrow \mathcal{Z}$ for some finite alphabet $\mathcal{Z}$ that maximizes the amount of information obtainable at the destination about $X_m$, again subject to a rate constraint on the link from the relay to the destination. Direct analog transmission of $L_m$ as in S. Yang and R. Koetter, "Network coding over a noisy relay: a belief propagation approach, " in Proc. IEEE Int. Symp., on Information Theory, 2007, would be equivalent to setting $f(L_m) = L_m$, and there are other ways of soft information transmission in embodiments, e.g., transmitting a power-normalized version of $E[X_m|\tilde{Y}_{1,m}, \tilde{Y}_{2,m}]$ as a soft bit, as described in Y. Li, B. Vucetic, T. F. Wong, and M. Dohler, "Distributed turbo coding with soft information relaying in multihop relay networks, " IEEE Journal on Sel. Areas in Comm., vol. 24, no. 11, pp. 2040- 2050, Nov. 2006. For BPSK modulation, $E[X_m|\tilde{Y}_{1,m}, \tilde{Y}_{2,m}] = \tanh(L_m/2)$ . In the following, a different approach is taken, and set up the problem of finding the optimal function $f(L_m)$ as a rate distortion problem.

In the following, a design of the relay station function of an embodiment will be provided. Rate distortion theory dictates that, given a sequence of i.i.d. random variables $L_1, L_2, ..., L_n$ from the source alphabet $\ell$ distributed according to $p(\ell)$, the minimum rate required to represent the source at distortion D by a random variable Z from the reproduction alphabet $\mathcal{Z}$ is

$$R(D) = \min_{p(z|\ell)} I(L;Z) \quad s.t. \quad E\left[d\left(z,\ell\right)\right] \leq D$$

where $d: \mathcal{L} \times \mathcal{Z} \rightarrow \mathbb{R}_0^+$ is the distortion measure. In order to solve a rate distortion problem, the distortion measure has to be chosen and fixed in advance, and finding the right distortion measure for a particular problem is not an easy task in general. Given that fact, it seems to be equally hard to choose a distortion for the problem considered here, namely quantizing the LLRs at the relay node. Therefore, the approach taken by Tishby et al. in N. Tishby, F. C. Pereira, and W. Bialek, "The information bottleneck method, " in Proc. 37th Ann. Allerton Conf. on Communications, Control, and Computing, 1999 is followed, where the rate distortion problem is dealt with in a different way using the notion of relevance through another variable.

Instead of putting the constraint on the average distortion for some chosen distortion measure, the constraint is that the reproduction variable $Z$ should contain some minimum level of information about a third variable, the relevant variable, which, in some embodiments, is the random variable $X = X_1 \oplus X'_2$. This is exactly what the function of the relay node should be: given an LLR $L$, transmit a quantized version $Z$ that contains as much relevant information, which is information about $X$. That is, instead of forcing, e. g., the squared error between $L$ and $Z$ to be below some threshold, the goal is to preserve as much information as possible in $Z$ about $X$.

In the following, the information bottleneck method will be explained, which may in embodiments be used in order to determine the quantization rule. In the information bottleneck method, Tishby et al. take the following approach towards quantization of a random variable $L$. Given the joint distribution $p(x, \ell)$, the goal is to

$$\min_{p(z|\ell)} I(L;Z) \quad s.t. \quad I\left(X;D\right) \geq \tilde{D}, \tag{1}$$

where the constraint is now on preserving the relevant information $I(X; Z)$ . Since $X \leftrightarrow L \leftrightarrow Z$ form a Markov chain, clearly $I(X; Z) \leq I(X; L)$ due to the data processing inequality. That is, all that one can possibly aim for is preserving all the information available at the relay node about $X$ in the quantizer output $Z$. Therefore, $\tilde{D}$ has to satisfy $0 \leq \tilde{D} \leq I(X; L)$ .

Using that $p(x,\ell)$ is fixed and the Markov chain condition $X \leftrightarrow L \leftrightarrow Z$, one obtains that

$$
\begin{aligned}
I(X;Z) &= I(X;L) + \underbrace{I(X;Z \mid L)}_{=0} - I(X;L \mid Z) \\
&= I(X;L) - \sum_{x,\ell,z} p(x,\ell,z) \log\left( \frac{p(x,\ell \mid z)}{p(x \mid z)\,p(\ell \mid z)} \right) \\
&= I(X;L) - \sum_{\ell,z} p(\ell,z) \sum_{x} p(x \mid \ell) \log\left( \frac{p(x \mid \ell)}{p(x \mid z)} \right) \\
&= I(X;L) - \sum_{\ell,z} p(\ell,z) D\big(p(x \mid \ell) \,\|\, p(x \mid z)\big) \\
&= I(X;L) - E\big[D\big(p(x \mid \ell) \,\|\, p(x \mid z)\big)\big]
\end{aligned}
$$

Since $I(X; L)$ is fixed for a given $p(x, \ell)$, the minimization in (1) is equivalent to the standard rate distortion problem

$$
\min_{p(z|\ell)} I(L;Z) \ \ s.t. \ \ E\big[D\big(p(x \mid \ell) \,\|\, p(x \mid z)\big)\big] \le \hat{D}
$$

where now, the right distortion measure $d(\ell, z)$ is the relative entropy between $p(x|\ell)$ and $p(x|z)$, i.e.,

$$
\begin{aligned}
d(\ell,z) &= D\big(p(x|\ell) \,\|\, p(x|z)\big) \\
&= \sum_{x} p(x|\ell) \log \frac{p(x|\ell)}{p(x|z)},
\end{aligned}
$$

and $\tilde{D}=I(X; L) - \tilde{D}$. Note that by putting the constraint on $I(X; Z)$ as in (1), one arrives at an equivalent formulation as a rate distortion problem, for which the evidently right distortion measure $d(\ell, z)$ emerged as the relative entropy $D(p(x|$

$\ell) \| p(x|z))$.

Introducing the Lagrangian $M = I(L; Z) - \beta I(X; Z)$ for some $\beta>0$ and evaluating the Karush- Kuhn- Tucker (KKT) conditions, the optimal distribution $p(z|\ell)$ can be given an exact characterizing solution as described in N. Tishby, F. C. Pereira, and W. Bialek, "The information bottleneck method, " in Proc. 37th Ann. Allerton Conf. on Communications, Control, and Computing, 1999, and is shown to be

$$
p(z|\ell) = \frac{p(z)}{N(\ell,\beta)} \exp\Big(-\beta D\big(p(x|\ell) \,\|\, p(x|z)\big)\Big) \quad , \qquad (2)
$$

where $N(\ell, \beta)$ is a normalizing term ensuring that $p(z|\ell)$ is a probability distribution fulfilling $\Sigma_z p(z|\ell) = 1$. However, it is to be noted that the solution specified by (2) is an implicit solution only, since the probability distribution $p(z|\ell)$ is the only free variable, and both $p(z)$ and $p(x|z)$ are fully determined by $p(z|\ell)$.

Although the optimal distribution $p(z|\ell)$ cannot be obtained in closed form, an iterative optimization algorithm used in embodiments can be shown to converge to a local optimum. In essence, this algorithm is very similar to the Blahut-Arimoto algorithm described by R. E. Blahut, "Computation of channel capacity and rate-distortion functions," IEEE Trans. Inf. Theory, vol. IT-18, no. 4, pp. 460-473, Jul. 1972 for computing channel capacities and rate distortion functions, with the main difference that the algorithm for computing the mapping in the information bottleneck setting updates $p(x|z)$ as well. Fig. 4b provides a pseudo code for a respective iterative optimization algorithm.

In the following, the application of the information bottleneck method (IBM = Information Bottleneck Method) to the relay network according to one embodiment will be discussed.

The IBM can be used to compute a quantizer or quantization rule which, for a given source-relay SNR, maximizes the relevant information $I(X;Z)$, subject to a constraint on the rate on the relay destination link. To accomplish this, the parameter $\beta$ in the optimization algorithm has to be greatly larger than one to yield a deterministic mapping $p(z|\ell)$, and the distribution $p(x,\ell)$ is obtained for the particular value of $SNR_{sr}$. Summarizing, by designing the quantizer at the relay with the IBM, one can maximize the slope of the EXIT curve of the relay check node, thereby optimizing the convergence properties of the iterative decoder. Throughout, it is assumed that the rate of the quantizer chosen at the relay is such that the quantizer output $Z$ can be communicated reliably to the destination. In the following, the quantizer design on $\mathbf{L}_r$ will be referred to as the XOR-solution to the compression problem at the relay.

The above investigations can be seen as limited to the case where the source-relay links are symmetric with respect to the SNR. If however, the source-relay links are of different channel quality, then the reliability of $\mathbf{L}_r$ about the network coded message will be dominated by the user with the weaker source-relay channel. Therefore, in order for the relay to be able to handle asymmetric source-relay links effectively, the quantizer should be adapted to operate on $\mathbf{L}_1$ and $\mathbf{L}_2^{'}$ directly, and accordingly, the quantizer design algorithm as well.

In the following, a general embodiment will be considered and the quantizer design in the asymmetric case will be discussed. As in the symmetric case, the framework for the quantizer design will be provided by the IBM, but with a different expression as relevant information, whose choice will be motivated in the following. As mentioned above, the EXIT curve of the relay check node is almost a straight line with $I_{out}=I\ (X;\ Z)$ for $I_{in}=1$, and for the symmetric case considered above, the curves are the same for both check nodes in the decoder. In general however, these curves will be different. During the iterative decoding process, the component decoders 310; 320 and soft information renderers 330; 340 produce random variables $\mathbf{L}_E^{(1)}$ and $\mathbf{L}_E^{(2)}$ with some mutual information $I\left(X_i;L_E^{(i)}\right), i=1,2$, which is the input information to the corresponding relay check node. At this point, assuming error- free transmission of the quantizer output $Z$, it is to be noted that the relay check node in the receiver processes $Z$ and $L_E^{(i)}$ to produce a- priori information for the corresponding component decoder. Therefore, it may be preferred that the quantizer at the relay to be such that $I\left(X_i;L_E^{(j)}\right), i,j \in \{1,2\}, i \neq j$, is maximal, both for the information exchange from decoder 1 to decoder 2, and the information exchange from decoder 2 to decoder 1. Since

$$I\left(X_i;Z,L_E^{(j)}\right)=I\left(X_i;L_E^{(j)}\right)+I\left(X_i;Z\middle|L_E^{(j)}\right)=I\left(X_i;Z\middle|L_E^{(j)}\right),$$

one is left with maximizing $I\left(X_i;Z\middle|L_E^{(j)}\right)$. Due to the characteristic property of the relay check node of being almost a straight line, the problem simplifies to maximizing the output information for perfect input information $I_{in}=1$.

Now, perfect input information means that $I\left(X_i;L_E^{(i)}\right), i=1,2$, so that $X_i$ is known at the decoder output. Consequently, to allow maximal information transfer from decoder 1 to decoder 2, $I\ (X_2;\ Z|X_1)$ should be maximized, and analogously, for decoder 1 to receive maximal information from decoder 2, $I\ (X_1;\ Z|X_2)$ should be as large as possible.

Various combinations of these information expressions can be taken to form the relevant information term for the IBM. For example, choosing $I_{rel}=\min\ \{I\ (X_1;\ Z|X_2),\ I\ (X_2;\ Z|X_1)\ \}$ as the relevant information expression will aim for keeping the turbo loop in the iterative decoder running as long as possible. However, if one user has a very bad source-relay link, that choice of $I_{rel}$ also claims much of the rate of the relay- destination link for communicating very unreliable information about that users data. Therefore, it is proposed in some embodiments to take the average of $I\ (X_1;\ Z|X_2)$ and $I\ (X_2;\ Z|X_1)$ as the relevant information term, so that the relay can opportunistically allocate more of its rate to the user with the better source- relay channel. In terms of the IBM, to design a quantizer at the relay, one solves

$$\min_{p(z|\ell_1,\ell_2)} I(L_1;L_2,Z) \quad s.t. \quad I(X_1;Z|X_2)+I(X_2;Z|X_1) \geq \tilde{D} \tag{3}$$

where now, the relevant information is $I_{rel}=I(X_1; Z|X_2) + I(X_2; Z|X_1)$ . Rewriting $I_{rel}$ as

$$I_{rel} = 2I(X_1;X_2;Z) - I(X_1;Z) - I(X_2;Z)$$

allows another interpretation of the relevant information expression: choose the mapping $p(z|\ell_1, \ell_2)$ such that $Z$ contains as much information about the pair $(X_1, X_2)$ while carrying little information about $X_1$ and $X_2$ alone. For some multiplier $\beta>0$, the implicit solution to this problem can be shown to be

$$p(z|\ell_1,\ell_{,2}) =$$

$$\frac{p(z)}{N(\ell_1,\ell_{,2},\beta)}\exp\{-2\beta D(p(x_1,x_2|\ell_1,\ell_2)\|p(x_1,x_2|z))$$

$$+\beta D(p(x_1|\ell_1)\|p(x_1|z))+\beta D(p(x_2|\ell_2)\|p(x_2|z))\},$$

where $D(p\|q)$ is the relative entropy between $p$ and $q$, and $N(\ell_1, \ell_2, \beta)$ is a normalizing term ensuring that $p(z|\ell_1, \ell_2)$ is a valid probability distribution. To compute a locally optimal solution to (3), one can use an adapted version of the information bottleneck algorithm, summarized in Algorithm 2 in Fig. 5, restricting the embodiment to $\beta>>0$ to obtain a two- dimensional quantizer using the deterministic mapping $p(z|\ell_1, \ell_2)$ . Fig. 5 provides a pseudo- code of algorithm 2, which may be carried out at the quantizer 150.

The quantizer design in an embodiment may follow the above-described framwork using the general formulation of the information bottleneck method. Now, however, the distribution $p(z|\ell_1,\ell_2)$ has to be obtained numerically for the UMTS turbo code of rate 1/2, at various values of the SNR.

In the following, simulation results will be used to demonstrate the benefits of the above-described relaying concept involving the relay station 100 and the decoder 300 at the destination.

To assess the performance of the proposed relaying scheme with quantization at the relay in a block fading environment, the point-to-point link not using the relay is taken as a reference for this system. The information blocks $\mathbf{u}_1$ and $\mathbf{u}_2$ of length $k_1=k_2=2000$ are encoded with the UMTS turbo code of rate 1/3 and BPSK modulated yielding the signals $\mathbf{x}_1$ and $\mathbf{x}_2$ of length $m_1=m_2=6000$. Since the relay is absent, communication is taking place in two phases on two orthogonal channels from the sources to the destination.

In the system with the relay, as shown in Fig. 13, the sources use the UMTS turbo code to encode and BPSK modulate their messages $\mathbf{u}_1$ and $\mathbf{u}_2$ of length $k_1=k_2=2000$ into the transmit signals $\mathbf{x}_1$ and $\mathbf{x}_2$ of length $m_1=m_2=4000$. In the third phase, the relay sends $m_3=4000$ symbols from its modulation alphabet $\mathbf{M}$ , which is chosen to be 16-QAM.

Throughout, it is assumed that the relay station is to be placed much closer to the destination than to the sources. Moreover, it is assumed that the network to be symmetric such that $d_{sr,1}=d_{sr,2}=d_{sr}$ and $d_{sd,1}=d_{sd,2}=d_{sd}$. Note that the symmetry assumed here is only with respect to the distances and hence in terms of average SNR, but not in terms of instantaneous SNR. Hence, one has $\rho_{sr,1}=\rho_{sr,2}=\rho_{sr}$ and $\rho_{sd,1}=\rho_{sd,2}=\rho_{sd}$.

Fig. 6 illustrates two scenarios which are considered for the following simulations and which establish different fading cases. Fig. 6 illustrates the first case on the left-hand side in which two sources 61 and 62 transmit signals to the base station 63 and the destination 64, where in the first case the relay station 63 is located closer to the sources 61 and 62 than the destination 64. On the right-hand side of Fig. 6, case 2 is depicted which differs from case 1 in that the relay station 63 is farther away from the sources 61 and 62 than the destination 64.

For the simulations, it is considered having the two scenarios depicted in Fig. 6. In the first case, the relay is

placed between the sources and the destination such that the source- relay distance is 9/10 of the source- destination distance, so that $d_{sr}$= (9/10) $d_{sd}$. With a path- loss exponent of ρ=3.52 and the above relation for the distances, $\rho_{sr}=\rho_{sd}+35.2\log_{10}(10/9)$ is received. Due to the proximity of the relay to the destination, a fairly high SNR on the relay-destination link is assumed. Concretely, two possible locations for the relay are considered: the first one places the relay on the street level with no direct line- of- sight connection to the destination, making the relay- destination link Rayleigh block fading with average SNR of $\rho_{rd}=\rho_{sd}+15dB$. Alternatively, one can position the relay above the street level on the rooftop of a building, giving it a strong line- of- sight connection, which is modeled to be AWGN with average SNR $\rho_{rd}=10dB$.

In the second scenario, the relay is placed behind the base station, resulting in an even worse source- relay link. $d_{sr}$= (3/2) $d_{sd}$ is chosen so that $\rho_{sr}=\rho_{sd}+35.2\log_{10}(2/3)$, again with a path- loss coefficient of $p$=3.52. As in case 1, two scenarios for the placement of the relay were considered, above rooftop and below rooftop. Accordingly, the relay-destination link is either AWGN with $\rho_{rd}=10dB$ or Rayleigh block fading with $\rho_{rd}=\rho_{sd}+15dB$. Both the relay and the destination share a set of quantizers designed with the information bottleneck method. This set of quantizers can be computed offline for various values of $\gamma_{sr,1}$ and $\gamma_{sr,2}$. Assuming an error detection mechanism at the relay, the quantizers can be classified into three categories. First both users are decoded incorrectly at the relay, second only one user is decoded incorrectly at the relay, and third both users are decoded error- free.

Since the relay is assumed to be placed in the vicinity of the destination with a channel supporting a fairly high rate, it was opted for quantizers with $N$=4...6 quantization regions, thus making use of the available rate on the relay-destination link. In category 1 (residual errors in both users codewords), for every pair of instantaneous SNR values $\gamma_{sr,1}$ and $\gamma_{sr,2}$ in the set

$$\mathbf{S}=\{-8\text{ dB},-7\text{ dB},-6\text{ dB},-5\text{ dB},-4\text{ dB},-3.8\text{ dB},-3.6\text{ dB},-3.4\text{ dB},-3.2\text{ dB},-3\text{ dB},-2.8\text{ dB},-2.6\text{ dB},-2.4\text{ dB},-2.2\text{ dB},-2\text{ dB},-1.8\text{ dB}\}$$

one quantizer with $N$=5 regions is obtained. In category 2 (residual errors in one user's codeword), a quantizer with $N$ = 6 is computed for every value of the $\gamma_{sr,1}$ or $\gamma_{sr,2}$ in **S**.

Finally, there is one more quantizer for category 3 with $N$=4 regions. In total, since |$S$|=16 one therefore has

$$Q = 2\left(\sum_{i=1}^{16} +2\times 16+1=305\right)$$

quantizers available corresponding to the plurality of quantization rules in the present embodiment, where the additional factors of 2 are necessary to take into account the order of the two users.

In embodiments, the relay station 100 may comprise a transmitter 160 which is adapted for transmitting an information on the selected quantization rule to the destination. To perform decoding using the relay signal, the destination determines the quantizer used by the relay station 100 which in such embodiments is carried out by signaling the choice of the quantization rule or the quantizer to the destination or decoder 300, for example, by using 9 bits. In the following, it will be assumed that the signaling is perfect, i.e. the decoder 300 or destination is completely informed about the quantizer or quantization rule selected by the relay station 100.

Fig. 7 illustrates another embodiment for the general case. Fig. 7 shows an embodiment of the relay station 100, in which, for the sake of simplicity, the receiver 110 is not shown. Fig. 7 shows a decoder 120 for determining the soft information $\mathbf{L}_1$ and $\mathbf{L}_2$ based on the received symbols or words $\mathbf{y}_{r,1}$ and $\mathbf{y}_{r,2}$. The decoder 120 shown in Fig. 7 is implemented as two separate soft decoders 121 and 122, which is one configuration among multiple configurations in embodiments of the decoder 120. In a section 700, Fig. 7 shows an interleaver 701 and a quantizer core 702. For simplicity reasons, the section 700 comprises the signal quality detector 130, the quantization rule selector 140, and the quantizer 150, of which the details are not shown in Fig. 7. At the outcome of the quantizer 150 or quantizer core 702 the quantized soft information $Z$ is available, which is then provided to a source encoder 710. As depicted in Fig. 7, the source encoder 710 is comprised in the transmitter 160. In other words, in embodiments the transmitter 160 may further comprise a source coder 710 for source coding the quantized soft information $Z$. Moreover, in embodiments the transmitter 160 may comprise a channel encoder 720, for channel coding the source coder quantized soft information before transmitting according to Fig. 7. In embodiments, the channel coder 720 may be adapted to operating at adaptive coding rates. The channel coder 720 can be configured to adapt the coding rate to a transmission capacity of a radio link to the destination.

As shown in Fig. 7, after soft decoding, the relay chooses the right quantizer or quantization rule, performs

quantization yielding the quantizer output $Z = \mathcal{Z}^{m_3}$ followed by source encoding using an arithmetic encoder. The source coding is necessary at this point since the quantizer output symbols are not equally likely in general. Eventually, the source encoder output bits are channel encoded using the UMTS turbo code of appropriate rate and before being modulated using 16-QAM yielding the relay codeword $\mathbf{x}_r$ of length 4000. Note that the rate of the turbo code at the relay must be adaptive since the rate of the quantizer depends on the values of the instantaneous SNR.

In embodiments, the signal quality detector 130 may be adapted for detecting the error indication based on a cyclic redundancy check (CRC = Cyclic Redundancy Check).

At the decoder 300 site, the two relay check nodes, as described with the assistance of Fig. 3, may in turn consider the corresponding signal processing means at the decoder or destination site. Fig. 8a illustrates an embodiment of a relay check node 335 or 345 as explained in the above embodiments of the first soft information renderer 330 or the second soft information renderer 340, respectively.

As it has been explained for the above embodiments, the relay check node 335 or 345 depicted in Fig. 8a provides the first a-priori information $\mathbf{L}_A^{(1)}$, or an interleaved version of the second a-priori information $\mathbf{L}_A^{'(2)}$ based on the first extrinsic information $\mathbf{L}_E^{(1)}$ or an interleaved version of the second extrinsic information $\mathbf{L}_E^{'(2)}$ and the received quantized soft information $\mathbf{y}_r$. According to the above embodiment of the relay station 100, a channel decoder 805 may be comprised in the relay check node 335 or 345, in order to channel decode the encoded quantized soft information $\mathbf{y}_r$ to obtain decoded quantized soft information $\hat{\mathbf{u}}_r$. As indicated in Fig. 8a, a CRC check may also be carried out. From the channel decoded quantized soft information a source decoded version of the quantized soft information $\hat{Z}$ may be obtained by the source decoder 810 which can be comprised in embodiments of the relay check node 335 or 345, respectively. An LLR processor 815 may then be utilized to process the estimate of the quantized soft information $\hat{Z}$ and the extrinsic information to obtain the a-priori information.

Throughout, an error detection mechanism (e.g. CRC) or generally signal quality detection (SNR, SINR, BER, FER, etc.) is assumed, both at the relay and at the destination, for the signal received from the relay. At the relay, the error and/or signal quality detection is used to select the appropriate quantizer, and the destination uses the error or signal quality detection mechanism to decide whether to make use of the signal received from the relay, since, if errors are detected in $\hat{u}_r$ (cf. Fig. 8a), the entire received signal block of the relay is discarded to avoid error propagation through the source decoder.

Fig. 8b illustrates another embodiment of a relay station 100, embedded in a scenario as it has been discussed with respect to Fig. 1a. Fig. 8b depicts the details of the relay station 100 in which the error detector 130 is implemented as two separate error detectors 131 and 132 carrying out CRC checks on the first and second soft information output by the two decoders 121 and 122. In Fig. 8b, the quantizer core 702 is assumed to comprise the quantization rule selector 140 and the quantizer 150. Moreover, it is assumed that the two encoders 10a and 10b utilize turbo codes. On the left-hand side of Fig. 8b the typical waterfall behavior for the bit error rate (BER = Bit Error Rate) vs. the SNR is depicted. The embodiment of the relay station 100 of Fig. 8b shall illustrate that the quantizer, i.e. the quantization rule may depend on the SNRs on the source relay links, i.e. on the signal quality between encoders 10a and 10b, and the relay station, as well as on the SNR between the relay station and the destination 300. The error detector 130 and the CRC checks 131 and 132 illustrate that embodiments may select the quantization rules dependent on whether the transmission between a source 10a, 10b, and the relay station 100 was error free, or erroneous.

Fig. 8c shall illustrate the difference between the two cases of error free or erroneous decoding of the source to relay station signals in more detail. Fig. 8c illustrates the embodiment as depicted in Fig. 8b at the top, as well as two distributions of the soft information in terms of LLRs at the output of a decoder, on the left-hand side the error free decoding case is depicted, while on the right-hand side the case with the decoding errors is depicted. For both view graphs, UMTS turbo codes at a rate of 1/2 at an SNR of -2dB was assumed. On the left-hand side it can be seen that the probability, that values around 0 occur, is vanishing, which indicates the error free decoding case. On the right-hand side it can be seen that there is a probability that soft information of 0 value will occur, for which error free decoding is not possible.

In the following, numerical simulation results will be considered. Simulation results will be presented for the two cases illustrated in Fig. 6. Fig. 9 illustrates simulation results of the BER vs. the average source to destination SNR in dB for case 1, in which point-to-point transmission, a relay station to destination AWGN channel of 10dB, and a relay station-to-destination Rayleigh fading channel have been considered. Fig. 10 shows frame error rates (FER = Frame Error Rate) vs. SNRs on the source to destination or base station links, for the first case, for which different channel types have been considered, namely transmission with no relay station, transmission with a relay station to base station AWGN with 10dB SNR, and transmission with a relay station-to-base station Rayleigh fading channel. Fig. 11 illustrates

BERs vs. average source to destination SNR in dB for the second case, in which the same channel types have been considered, and consequently, Fig. 12a illustrates the corresponding frame error rates for the second case.

First, case 1 is considered, where the relay is placed between the sources and the destination. The BER is plotted and frame- error- rate (FER) of the reference point- to- point link and the system using the relay with the three types of relay- destination links in Figs. 9 and 10. As expected, the best performance is achieved if the relay- destination link does not experience fading, and it can be seen that in this case, diversity is achieved. However, it can be seen that diversity can be gained even if the relay- destination link is Rayleigh block fading, although at a slightly inferior performance than in a case where the relay- destination link is AWGN.

Placing the relay behind the destination in case 2, still allows a diversity gain in the system for both pure AWGN and Rayleigh fading on the relay- destination link, as shown in Figs. 11 and 12a. Now, however, for low values of the average SNR on the source destination links, the point- to- point connection slightly outperforms the relay system. This is owed to the fact that despite the low average source- destination SNR and large distance from the sources to the relay, the relay is allowed to send $m_3$=$m_2$=$m_1$=4000 symbols, thereby allotting the same amount of time for transmissions from the relay as to the two sources, although on average, very little information is received at the relay.

This may be considered in embodiments for proper allocation of the timing parameters to optimize the system performance. Embodiments may realize an adaptive relay station that quantizes the soft information obtained after decoding. Embodiments may therewith avoid noise amplification as being introduced by amplify-and-forward methods and embodiments may further avoid error propagation as introduced by decode-and-forward schemes. Embodiments may provide the advantages of increased reliability in fading environments and adaptive processing at the relay station, which is made dependent on realizations of the fading channels on the source relay links, the signal quality measures, respectively.

Embodiments may achieve advantages by introducing moderate signaling requirements for the quantizer choice between the relay station and the destination.

Embodiments of the present invention may especially be used in systems with a capacity-approaching FEC (FEC = Forward Error Correction) codes, as for example turbo codes or LDPC (LDPC = Low Density Parity Check Codes). Embodiments may overcome the problem of error propagation by forwarding soft information after decoding to the destination as it occurs for high performance codes in the form of turbo codes or LDPC codes.

Fig. 12b illustrates one section of the decoding graph, wherein on the left-hand side decoder 1 refers to the first soft decoder 310, and the decoder 2 on the right-hand side refers to the second soft decoder 320.

The nodes labeled $x_{1,m}$ and $x_{2,m}$ are two variable nodes of the two different component channel codes coupled by the quantization at the relay. The direct observations from the two sources are the function nodes $p\ (y_{d,1,m}|x_{1,m})$ and $p\ (y'_{d,2,m}|x'_{2,m})$, whereas the coupling through the quantization at the relay is expressed in the function node $p\ (x_{1,m}, x'_{2,m}|z_m)$ .

Since $Z$ is assumed to be available perfectly at the receiver, the destination exploits its knowledge of the quantizer chosen by the relay to obtain $p\ (x_1, x_2|z)$, which is among the output of the iterative optimization algorithm. Note that the function node $p\ (x_1, x_2|z)$ is the message passing equivalent of the LLR block 815 in Fig. 8a. To find processing rules for the LLRs $\mathbf{L}_E^{(1)}$ and $\mathbf{L}'^{(2)}_E$, the message passing rules are applied for function nodes to $p\ (x_1, x_2|z)$ . Using the definitions

$$L\left(x_{1,m}, x'_{2,m}=1|z_m\right)=\ln\left(\frac{p\left(x_{1,m}=1, x'_{2,m}=1|z_m\right)}{p\left(x_{1,m}=-1, x'_{2,m}=1|z_m\right)}\right) \quad (4a)$$

$$L\left(x_{1,m}=1, x'_{2,m}\mid z_m\right)=\ln\left(\frac{p\left(x_{1,m}=1, x'_{2,m}=1|z_m\right)}{p\left(x_{1,m}=1, x'_{2,m}=-1|z_m\right)}\right) \quad (4b)$$

$$L\left(x_{1,m}, x'_{2,m} = -1 \middle| z_m\right) = ln\left(\frac{p\left(x_{1,m} = 1, x'_{2,m} = -1 \middle| z_m\right)}{p\left(x_{1,m} = -1, x'_{2,m} = -1 \middle| z_m\right)}\right) \tag{4c}$$

$$L\left(x_{1,m} = -1, x'_{2,m} \middle| z_m\right) = ln\left(\frac{p\left(x_{1,m} = -1, x'_{2,m} = 1 \middle| z_m\right)}{p\left(x_{1,m} = -1, x'_{2,m} = -1 \middle| z_m\right)}\right) \tag{4d}$$

$$L\left(x_{1,m}, x'_{2,m} \middle| z_m\right) = ln\left(\frac{p\left(x_{1,m} = 1, x'_{2,m} = -1 \middle| z_m\right)}{p\left(x_{1,m} = -1, x'_{2,m} = 1 \middle| z_m\right)}\right), \tag{4e}$$

one obtains that

$$L'^{(2)}_{A,m} = \ln\left(\frac{1 + e^{L^{(1)}_{E,m}} e^{L\left(x_{1,m}, x'_{2,m} = 1 \middle| z_m\right)}}{e^{L^{(1)}_{E,m}} e^{L\left(x_{1,m}, x'_{2,m} \middle| z_m\right)} + e^{-L\left(x_{1,m} = -1, x'_{2,m} \middle| z_m\right)}}\right) \tag{5a}$$

$$L^{(1)}_{A,m} = \ln\left(\frac{1 + e^{L'^{(2)}_{E,m}} e^{L_m\left(x_{1,m} = 1, x'_{2,m} \middle| z_m\right)}}{e^{L'^{(2)}_{E,m}} e^{-L\left(x_{1,m}, x'_{2,m} \middle| z_m\right)} + e^{-L\left(x_{1,m} x'_{2,m} = -1 \middle| z_m\right)}}\right) \tag{5b}$$

A detailed derivation of the above expressions will be provided in the following.

Equation (5) is closely related to the boxplus computation in the symmetric case. Note that if

$$L\left(x_{1,m}, x'_{2,m} \middle| z_m\right) = 0, \quad -L\left(x_{1,m} = -1, x'_{2,m} \middle| z_m\right) = L\left(x_{1,m}, x'_{2,m} = 1 \middle| z_m\right)$$

and

$$-L\left(x_{1,m}, x'_{2,m} = -1 \middle| z_m\right) = L\left(x_{1,m} = 1, x'_{2,m} \middle| z_m\right),$$

they simplify to

$$L'^{(2)}_{A,m} = L^{(1)}_{E,m} \boxplus L\left(x_{1,m}, x'_{2,m} = 1 \middle| z_m\right)$$

$$L^{(1)}_{A,m} = L'^{(2)}_{E,m} \boxplus L_m\left(x_{1,m} = 1, x'_{2,m} \middle| z_m\right).$$

It turns out that application of the general quantizer design algorithm to symmetric SR channels can result in

a distribution $p(x_1,x_2|z)$ such that

$$L(x_{1,m},x'_{2,m}|z_m)=0,\quad -L(x_{1,m}=-1,x'_{2,m}|z_m)=L(x_{1,m},x'_{2,m}=1|z_m),$$

and

$$-L(x_{1,m},x'_{2,m}=-1|z_m)=L(x_{1,m}=1,x'_{2,m}|z_m),$$

so that the XOR-solution is recovered in those situations without computing $\mathbf{L}_r$ first.

In the following, a derivation of the message passing rules for the general case, as mentioned above, will be provided with the assistance of Fig. 12c, one section of a decoding graph was chosen which includes the messages which will be introduced in the following.

Expressions on how LLRs are exchanged are derived by the component codes connected by the function node $p(x_1, x_2|z)$ . Some definitions are needed before proceeding. Let $x_{1,m}$ be the m- th element of $\mathbf{x}_1$, and let $x'_{2,m}$ be the m- th element of $\mathbf{x}'_2$, and assume that $x_{1,m}$ and $x'_{2,m}$ are connected by $p(x_{1,m}, x'_{2,m}|z_m)$ . Let $\mu A(x_{1,m})$ and $\mu_E(x'_{2,m})$ be the messages from and to the check node, respectively, as shown in Fig. 12c. Further, define $L^{(1)}_{A,m}=\ln\left(\mu_A(x_{1,m}=1)/\mu_A(x_{1,m}=-1)\right)$ and $L'^{(2)}_{E,m}=\ln\left(\mu_E(x'_{2,m}=1)/\mu_E(x'_{2,m}=-1)\right)$. Fig. 12c shows one section of the decoding graph with the corresponding messages.

The message passing rules for function nodes are applied in the following to compute $L^{(1)}_{A,m}$. Since

$$\mu_A(x_{1,m})=\sum_{x_2\in\{+1,-1\}}p(x_{1,m},x_2,z_m)\mu_E(x_2)=\sum_{x_2\in\{+1,-1\}}p(x_{1,m},x_2|z_m)p(z_m)\mu_E(x_2)$$

one obtains

$$\begin{aligned}
&L^{(1)}_{A,m}=\\
&=\ln\left(\frac{\mu_A(x_{1,m}=1)}{\mu_A(x_{1,m}=-1)}\right)\\
&=\ln\left(\frac{p(x_{1,m}=1,x'_{2,m}=1|z_m)\mu_E(x'_{2,m}=1)+p(x_{1,m}=1,x'_{2,m}=-1|z_m)\mu_E(x'_{2,m}=-1)}{p(x_{1,m}=-1,x'_{2,m}=1|z_m)\mu_E(x'_{2,m}=1)+p(x_{1,m}=-1,x'_{2,m}=-1|z_m)\mu_E(x'_{2,m}=-1)}\right)\\
&=\ln\left(\frac{1+\dfrac{p(x_{1,m}=1,x'_{2,m}=1|z_m)\mu_E(x'_{2,m}=1)}{p(x_{1,m}=1,x'_{2,m}=-1|z_m)\mu_E(x'_{2,m}=-1)}}{\dfrac{p(x_{1,m}=-1,x'_{2,m}=1|z_m)\mu_E(x'_{2,m}=1)}{p(x_{1,m}=1,x'_{2,m}=-1|z_m)\mu_E(x'_{2,m}=-1)}+\dfrac{p(x_{1,m}=-1,x'_{2,m}=-1|z_m)}{p(x_{1,m}=1,x'_{2,m}=-1|z_m)}}\right)
\end{aligned}$$

Using the definitions in Eq. (4), one obtains that

$$L_{A,m}^{(1)} = \ln\left( \frac{1 + e^{L_{E,m}^{(2)}} e^{L_m(x=1,x'_{2,m}|z_m)}}{e^{L'^{(2)}_{E,m}} e^{-L(x_{1,m},x'_{2,m}|z_m)} + e^{-L(x_{1,m}x'_{2,m}=-1|z_m)}} \right).$$

Along the lines of the derivations above, one can also compute

$$L'^{(2)}_{A,m} = \ln\left( \frac{1 + e^{L_{E,m}^{(1)}} e^{L(x_{1,m},x'_{2,m}=1|z_m)}}{e^{L_{E,m}^{(1)}} e^{L(x_{1,m},x'_{2,m}|z_m)} + e^{-L(x_{1,m}=-1,x'_{2,m}|z_m)}} \right),$$

where

$$L'^{(2)}_{A,m} = \ln\left(\mu_A\left(x'_{2,m}=1\right) / \mu_A\left(x'_{2,m}=-1\right)\right)$$

and

$$L_{E,m}^{(1)} = \ln\left(\mu_E\left(x_{1,m}=1\right) / \mu_E\left(x_{1,m}=-1\right)\right).$$

Embodiments of the present invention may utilize the quantizer design framework which was introduced above for the received LLRs at the relay in symmetric AWGN channels using, for example, the IBM. Furthermore, embodiments may extend this method to the general case, i.e. lifting the symmetry requirement on the source-relay channels. Embodiments may, therefore, provide the advantage that efficient processing may be carried out at the relay station for several users jointly. Moreover, low delay may be achieved since no decoding has to be performed at the relay and noise amplification can be avoided.

Depending on certain implementation requirements of the inventive methods, the inventive methods may be implemented in hardware or in software. The implementation can be formed using a digital storage medium, in particular a disc, a DVD or a CD, having an electronically readable control signal stored thereon which cooperates with the programmable computer, such that the inventive methods are performed. Generally, the present invention is therefore a computer program product with a program code for a machine-readable carrier, the program code being operative for performing the inventive methods when the computer program runs on a computer. In other words, the inventive methods are therefore a computer program having a program code for performing at least one of the inventive methods when the computer program runs on a computer.

## Claims

1. A relay station (100) for being operative in a mobile communication system, comprising
a receiver (110) for receiving a radio signal from a source, the radio signal comprising symbols representing encoded information, the encoded information being based on an encoding rule and comprising payload information and redundancy information, wherein the receiver (110) is adapted for receiving another radio signal from another source, the other radio signal comprising other symbols representing other encoded information, the other encoded information being based on another encoding rule and comprising other payload information and other redundancy information;
a decoder (120) for determining soft information on the payload information and the redundancy information based on a symbol and a decoding rule associated with the encoding rule, the soft information comprising an information on the symbol and reliability information on the information on the symbol, wherein the decoder (120) is adapted for determining other soft information on the other payload information and the other redundancy information based on an other symbol and an other decoding rule associated with the other encoding rule, the other soft information

comprising an information on the other symbol and reliability information on the information on the other symbol; **characterised by** further comprising:

a signal quality detector (130) for detecting a signal quality measure based on the soft information to obtain a signal quality indication, wherein the signal quality detector (130) is adapted for detecting another signal quality measure based on the other soft information to obtain another signal quality indication;
a quantization rule selector (140) for selecting a quantization rule from a plurality of quantization rules based on the signal quality indication and based on the other signal quality indication;
a quantizer (150) for quantizing a combination of the soft information on the payload information and the other soft information on the other payload information to obtain quantized soft information or for jointly quantizing the soft information on the payload information and the other soft information on the other payload information based on the selected quantization rule to obtain the quantized soft information; and
a transmitter (160) for transmitting the quantized soft information to a destination, wherein the transmitter (160) is adapted for transmitting an information on the selected quantization rule.

**2.** The relay station (100) of claim 1, wherein the signal quality detector (130) is further adapted for determining an error based on the soft information on the redundancy information to obtain an error indication and wherein the quantization rule selector (140) is adapted for selecting the quantization rule further based on the error indication, wherein the signal quality detector (130) is further adapted for determining another error based on the other soft information on the other redundancy information to obtain another error indication, and wherein the quantization rule selector (140) is adapted for selecting the quantization rule further based on the other error indication.

**3.** The relay station (100) of one of the claims 1 to 2, wherein the transmitter (160) further comprises a source coder for source coding the quantized soft information and a channel coder for channel coding the source coded quantized soft information before transmitting.

**4.** The relay station (100) of claim 3, wherein the channel coder operates at an adaptive coding rate, the channel coder being configured to adapt the coding rate to a transmission capacity of a radio link to the destination.

**5.** The relay station (100) of one of the claims 2 to 4, wherein the signal quality detector (130) is adapted for detecting the error indication or the other error indication based on a cyclic redundancy check.

**6.** A method for relaying in a mobile communication system, comprising the steps of:

receiving a radio signal from a source, the radio signal comprising symbols representing encoded information, the encoded information being based on an encoder rule and comprising payload information and redundancy information;
receiving another radio signal from another source, the other radio signal comprising other symbols representing other encoded information, the other encoded information being based on another encoding rule and comprising other payload information and other redundancy information;
determining soft information on the payload information and the redundancy information based on a symbol and a decoding rule associated with the encoding rule, the soft information comprising an information on the symbol and reliability information on the information on the symbol;
determining other soft information on the other payload information and the other redundancy information based on another symbol and another decoding rule associated with the other encoding rule, the other soft information comprising an information on the other symbol and reliability information on the information on the other symbol; **characterised by** :

detecting a signal quality measure based on the soft information to obtain a signal quality indication;
detecting another signal quality measure based on the other soft information to obtain another signal quality indication;
selecting a quantization rule from a plurality of quantization rules based on the signal quality indication and based on the other signal quality indication;
quantizing a combination of the soft information on the payload information and the other soft information on the other payload information base on the selected quantization rule to obtain quantized soft information or for jointly quantizing the soft information on the payload information and the other soft information on the other payload information based on the selected quantization rule to obtain the quantized soft information;
transmitting the quantized soft information to a destination; and

transmitting an information on the selected quantization rule.

**7.** A decoder (300) for decoding a first encoded codeword to obtain first soft information on a first codeword $\boldsymbol{x}_1$ and for decoding a second encoded codeword to obtain second soft information on a second codeword $\boldsymbol{x}_2$, comprising a first soft decoder (310) for determining the first soft information on the first codeword $\boldsymbol{x}_1$ based on the first encoded codeword, wherein the first soft decoder (310) is adapted for determining the first soft information in terms of an LLR; a second soft decoder (320) for determining the second soft information on the second codeword $\boldsymbol{x}_2$ based on the second encoded codeword and second a- priori information $\boldsymbol{L}_A^{(2)}$, wherein the second soft decoder (320) is adapted for determining the second soft information in terms of an LLR;

a first soft information renderer (330) for providing the second a- priori information $\boldsymbol{L}_A^{(2)}$ based on the first soft information and quantized soft information $\boldsymbol{z}$, the quantized soft information being based on a combination of the first codeword and the second codeword, wherein the first soft information renderer (330) is adapted for providing the second a- priori information $\boldsymbol{L}_A^{(2)}$ in terms of an LLR and for determining the second a- priori information $\boldsymbol{L}_A^{(2)}$ by a de- interleaved version of

$$L'^{(2)}_{A,m} = \ln\left(\frac{1+e^{L^{(1)}_{E,m}}e^{L(x_{1,m},x'_{2,m}=1|z_m)}}{e^{L^{(1)}_{E,m}}e^{L(x_{1,m},x'_{2,m}|z_m)}+e^{-L(x_{1,m}=-1,x'_{2,m}|z_m)}}\right),$$

wherein m is an index within a word, $\mathbf{x'}_2$ being an interleaved version of $\mathbf{x}_2$, wherein the quantized soft information $\boldsymbol{z}$ is such that $x_{1,m}$ and $x'_{2,m}$ are associated by the probability density $p\,(x_{1,m}, x'_{2,m}|z_m)$, wherein $\boldsymbol{L}_{E,m}^{(1)}$ is a combination of the first soft information and first a- priori information $\boldsymbol{L}_A^{(1)}$, and wherein

$$L\left(x_{1,m},x'_{2,m}=1|z_m\right)=\ln\left(\frac{p\left(x_{1,m}=1,x'_{2,m}=1|z_m\right)}{p\left(x_{1,m}=-1,x'_{2,m}=1|z_m\right)}\right),$$

$$L\left(x_{1,m},x'_{2,m}|z_m\right)=\ln\left(\frac{p\left(x_{1,m}=1,x'_{2,m}=-1|z_m\right)}{p\left(x_{1,m}=-1,x'_{2,m}=1|z_m\right)}\right),$$

$$L\left(x_{1,m}=-1,x'_{2,m}|z_m\right)=\ln\left(\frac{p\left(x_{1,m}=-1,x'_{2,m}=1|z_m\right)}{p\left(x_{1,m}=-1,x'_{2,m}=-1|z_m\right)}\right);$$

a second soft information renderer (340) for providing the first a- priori $\boldsymbol{L}_A^{(1)}$ information based on the second a- priori information $\boldsymbol{L}_A^{(2)}$, the quantized soft information $z$ and the second soft information, wherein the second soft information renderer (340) is adapted for providing the first a- priori information $\boldsymbol{L}_A^{(1)}$ in terms of an LLR, wherein

$$L_{A,m}^{(1)} = \ln\left(\frac{1 + e^{L_{E,m}^{\prime(2)}} e^{L_m(x_{1,m}=1, x'_{2,m}|z_m)}}{e^{L_{E,m}^{\prime(2)}} e^{-L(x_{1,m}, x'_{2,m}|z_m)} + e^{-L(x_{1,m} x'_{2,m}=-1|z_m)}}\right),$$

wherein $L_{E,m}^{\prime(2)}$ is an interleaved version of a combination of the second soft information and the second a- priori information $L_A^{(2)}$ and

$$L\left(x_{1,m} = 1, x'_{2,m} \mid z_m\right) = \ln\left(\frac{p\left(x_{1,m} = 1, x'_{2,m} = 1 \middle| z_m\right)}{p\left(x_{1,m} = 1, x'_{2,m} = -1 \middle| z_m\right)}\right),$$

$$L\left(x_{1,m}, x'_{2,m} = -1 \middle| z_m\right) = \ln\left(\frac{p\left(x_{1,m} = 1, x'_{2,m} = -1 \middle| z_m\right)}{p\left(x_{1,m} = -1, x'_{2,m} = -1 \middle| z_m\right)}\right),$$

wherein the first soft decoder (310) is adapted for determining updated first soft information on the first codeword $\boldsymbol{x}_1$ based on the encoded first codeword and the first a- priori information $L_A^{(1)}$.

**8.** The decoder (300) of claim 7, wherein the first soft information renderer (330) is adapted for providing updated second a-priori information based on the updated first soft information, the first a-priori information $L_A^{(1)}$ and the quantized soft information $\boldsymbol{z}$.

**9.** The decoder (300) of one of the claims 7 or 8, further comprising a receiver for receiving an encoded quantized soft information and a decoder for decoding the encoded quantized soft information and a re-quantizer for providing the quantized soft information based on a quantization rule and the decoded encoded quantized soft information, wherein the receiver is further adapted for receiving an information on the quantization rule.

**10.** The decoder (300) of one of the claims 7 to 9, wherein the receiver is adapted for receiving in a cellular mobile communication system.

**11.** A method for decoding a first encoded codeword to obtain first soft information on a first codeword $\boldsymbol{x}_1$ and for decoding a second encoded codeword to obtain second soft information on a second codeword $\boldsymbol{x}_2$, comprising the steps of
determining the first soft information on the first codeword $\boldsymbol{x}_1$ based on the first encoded codeword in terms of an LLR;
determining second soft information on the second codeword $\boldsymbol{x}_2$ based on the second encoded codeword and second a- priori information $\mathbf{L}_A^{(2)}$ in terms of an LLR;

providing the second a- priori information $\mathbf{L}_A^{(2)}$ in terms of an LLR based on the first soft information and quantized soft information $\boldsymbol{z}$, the quantized soft information $\boldsymbol{z}$ being based on a joint quantization of the first codeword $\boldsymbol{x}_1$ and the second codeword $\boldsymbol{x}_2$ and determining the second a- priori information $L_A^{(2)}$ by a de- interleaved version of

$$L'^{(2)}_{A,m} = \ln\left(\frac{1+e^{L^{(1)}_{E,m}}e^{L(x_{1,m},x'_{2,m}=1|z_m)}}{e^{L^{(1)}_{E,m}}e^{L(x_{1,m},x'_{2,m}|z_m)}+e^{-L(x_{1,m}=-1,x'_{2,m}|z_m)}}\right),$$

wherein m is an index within a word, $\mathbf{x'_2}$ being an interleaved version of $\mathbf{x_2}$, wherein the quantized soft information $\boldsymbol{z}$ is such that $x_{1,m}$ and $x'_{2,m}$ are associated by the probability density $p(x_{1,m}, x'_{2,m}|z_m)$, wherein $\boldsymbol{L}^{(1)}_{E,m}$ is a combination of the first soft information and first a- priori information $\boldsymbol{L}^{(1)}_{A}$, and wherein

$$L\left(x_{1,m},x'_{2,m}=1\middle|z_m\right)=\ln\left(\frac{p\left(x_{1,m}=1,x'_{2,m}=1\middle|z_m\right)}{p\left(x_{1,m}=-1,x'_{2,m}=1\middle|z_m\right)}\right),$$

$$L\left(x_{1,m},x'_{2,m}\middle|z_m\right)=\ln\left(\frac{p\left(x_{1,m}=1,x'_{2,m}=-1\middle|z_m\right)}{p\left(x_{1,m}=-1,x'_{2,m}=1\middle|z_m\right)}\right),$$

$$L\left(x_{1,m}=-1,x'_{2,m}\middle|z_m\right)=\ln\left(\frac{p\left(x_{1,m}=-1,x'_{2,m}=1\middle|z_m\right)}{p\left(x_{1,m}=-1,x'_{2,m}=-1\middle|z_m\right)}\right);$$

providing first a- priori information $\boldsymbol{L}^{(1)}_{A}$ in terms of an LLR based on the second a- priori information $\boldsymbol{L}^{(2)}_{A}$, the quantized soft information $\boldsymbol{z}$ and the second soft information, wherein

$$L^{(1)}_{A,m} = \ln\left(\frac{1+e^{L'^{(2)}_{E,m}}e^{L_m(x_{1,m}=1,x'_{2,m}|z_m)}}{e^{L'^{(2)}_{E,m}}e^{-L(x_{1,m},x'_{2,m}|z_m)}+e^{-L(x_{1,m},x'_{2,m}=-1|z_m)}}\right),$$

wherein $\boldsymbol{L}'^{(2)}_{E,m}$ is an interleaved version of a combination of the second soft information and the second a- priori information $\boldsymbol{L}^{(2)}_{A}$ and

$$L\left(x_{1,m}=1,x'_{2,m}\mid z_m\right)=\ln\left(\frac{p\left(x_{1,m}=1,x'_{2,m}=1\middle|z_m\right)}{p\left(x_{1,m}=1,x'_{2,m}=-1\middle|z_m\right)}\right),$$

$$L\left(x_{1,m},x'_{2,m}=-1\middle|z_m\right)=\ln\left(\frac{p\left(x_{1,m}=1,x'_{2,m}=-1\middle|z_m\right)}{p\left(x_{1,m}=-1,x'_{2,m}=-1\middle|z_m\right)}\right);$$

and
determining updated first soft information on the first codeword $\boldsymbol{x}_1$ based on the encoded first codeword and the first a- priori information $\boldsymbol{L}_A^{(1)}$.

**12.** Computer program having a program code for performing one of the methods according to claim 6 or 11, when the program runs on a computer or processor.

**13.** System comprising a relay station (100) according to one of the claims 1 to 5 and a decoder (300) according to one of the claims 7 to 10.

**Patentansprüche**

**1.** Eine Weiterleitungsstation (100), um bei einem Mobilkommunikationssystem wirksam zu sein, die folgende Merkmale aufweist:

einen Empfänger (110) zum Empfangen eines Funksignals von einer Quelle, wobei das Funksignal Symbole aufweist, die codierte Informationen darstellen, wobei die codierten Informationen auf einer Codierungsregel beruhen und Nutzlastinformationen und Redundanzinformationen aufweisen, wobei der Empfänger (110) zum Empfangen eines anderen Funksignals von einer anderen Quelle angepasst ist, wobei das andere Funksignal andere Symbole aufweist, die andere codierte Informationen darstellen, wobei die anderen codierten Informationen auf einer anderen Codierungsregel beruhen und andere Nutzlastinformationen und andere Redundanzinformationen aufweisen;
einen Decodierer (120) zum Bestimmen weicher Informationen über die Nutzlastinformationen und die Redundanzinformationen auf der Basis eines Symbols und einer der Codierungsregel zugeordneten Decodierungsregel, wobei die weichen Informationen Informationen über das Symbol und Zuverlässigkeitsinformationen über die Informationen über das Symbol aufweisen, wobei der Decodierer (120) zum Bestimmen anderer weicher Informationen über die anderen Nutzlastinformationen und die anderen Redundanzinformationen auf der Basis eines anderen Symbols und einer anderen Decodierungsregel, die der anderen Codierungsregel zugeordnet ist, angepasst ist, wobei die anderen weichen Informationen Informationen über das andere Symbol und Zuverlässigkeitsinformationen über die Informationen über das andere Symbol aufweisen;
**dadurch gekennzeichnet, dass** sie ferner folgende Merkmale aufweist:

einen Signalqualitätsdetektor (130) zum Erfassen eines Signalqualitätsmaßes auf der Basis der weichen Informationen, um eine Signalqualitätsangabe zu erhalten, wobei der Signalqualitätsdetektor (130) zum Erfassen eines anderen Signalqualitätsmaßes auf der Basis der anderen weichen Informationen, um eine andere Signalqualitätsangabe zu erhalten, angepasst ist;
einen Quantisierungsregelselektor (140) zum Auswählen einer Quantisierungsregel aus einer Mehrzahl von Quantisierungsregeln auf der Basis der Signalqualitätsangabe und auf der Basis der anderen Signalqualitätsangabe;
einen Quantisierer (150) zum Quantisieren einer Kombination der weichen Informationen über die Nutzlastinformationen und der anderen weichen Informationen über die anderen Nutzlastinformationen, um quantisierte weiche Informationen zu erhalten, oder zum gemeinsamen Quantisieren der weichen Informationen über die Nutzlastinformationen und der anderen weichen Informationen über die anderen Nutzlastinformationen auf der Basis der ausgewählten Quantisierungsregel, um die quantisierten weichen Informationen zu erhalten; und
einen Sender (160) zum Senden der quantisierten weichen Informationen an einen Zielort, wobei der Sender (160) zum Senden von Informationen über die ausgewählte Quantisierungsregel angepasst ist.

**2.** Die Weiterleitungsstation (100) gemäß Anspruch 1, bei der der Signalqualitätsdetektor (130) ferner zum Bestimmen eines Fehlers auf der Basis der weichen Informationen über die Redundanzinformationen, um eine Fehlerangabe zu erhalten, angepasst ist, und bei der der Quantisierungsregelselektor (140) zum Auswählen der Quantisierungsregel ferner auf der Basis der Fehlerangabe angepasst ist, wobei der Signalqualitätsdetektor (130) ferner zum Bestimmen eines anderen Fehlers auf der Basis der anderen weichen Informationen über die anderen Redundanzinformationen, um eine andere Fehlerangabe zu erhalten, angepasst ist, und wobei der Quantisierungsregelselektor (140) zum Auswählen der Quantisierungsregel ferner auf der Basis der anderen Fehlerangabe angepasst ist.

**3.** Die Weiterleitungsstation (100) gemäß einem der Ansprüche 1 bis 2, bei der der Sender (160) ferner einen Quellencodierer zum Quellencodieren der quantisierten weichen Informationen und einen Kanalcodierer zum Kanalcodieren der quellencodierten quantisierten weichen Informationen vor dem Senden aufweist.

**4.** Die Weiterleitungsstation (100) gemäß Anspruch 3, bei der der Kanalcodierer bei einer adaptiven Codierungsrate arbeitet, wobei der Kanalcodierer dazu konfiguriert ist, die Codierungsrate an eine Sendekapazität einer Funkverbindung zu dem Zielort anzupassen.

**5.** Die Weiterleitungsstation (100) gemäß einem der Ansprüche 2 bis 4, bei der der Signalqualitätsdetektor (130) zum Erfassen der Fehlerangabe oder der anderen Fehlerangabe auf der Basis einer zyklischen Redundanzprüfung angepasst ist.

**6.** Ein Verfahren zum Weiterleiten bei einem Mobilkommunikationssystem, das folgende Schritte aufweist:

Empfangen eines Funksignals von einer Quelle, wobei das Funksignal Symbole aufweist, die codierte Informationen darstellen, wobei die codierten Informationen auf einer Codiererregel beruhen und Nutzlastinformationen und Redundanzinformationen aufweisen;
Empfangen eines anderen Funksignals von einer anderen Quelle angepasst ist,
wobei das andere Funksignal andere Symbole aufweist, die andere codierte Informationen darstellen, wobei die anderen codierten Informationen auf einer anderen Codierungsregel beruhen und andere Nutzlastinformationen und andere Redundanzinformationen aufweisen;
Bestimmen weicher Informationen über die Nutzlastinformationen und die Redundanzinformationen auf der Basis eines Symbols und einer der Codierungsregel zugeordneten Decodierungsregel, wobei die weichen Informationen Informationen über das Symbol und Zuverlässigkeitsinformationen über die Informationen über das Symbol aufweisen;
Bestimmen anderer weicher Informationen über die anderen Nutzlastinformationen und die anderen Redundanzinformationen auf der Basis eines anderen Symbols und einer anderen Decodierungsregel, die der anderen Codierungsregel zugeordnet ist, wobei die anderen weichen Informationen Informationen über das andere Symbol und Zuverlässigkeitsinformationen über die Informationen über das andere Symbol aufweisen;
**gekennzeichnet durch**:

Erfassen eines Signalqualitätsmaßes auf der Basis der weichen Informationen, um eine Signalqualitätsangabe zu erhalten;
Erfassen eines anderen Signalqualitätsmaßes auf der Basis der anderen weichen Informationen, um eine andere Signalqualitätsangabe zu erhalten;
Auswählen einer Quantisierungsregel aus einer Mehrzahl von Quantisierungsregeln auf der Basis der Signalqualitätsangabe und auf der Basis der anderen Signalqualitätsangabe;
Quantisieren einer Kombination der weichen Informationen über die Nutzlastinformationen und der anderen weichen Informationen über die anderen Nutzlastinformationen auf der Basis der ausgewählten Quantisierungsregel, um quantisierte weiche Informationen zu erhalten, oder zum gemeinsamen Quantisieren der weichen Informationen über die Nutzlastinformationen und der anderen weichen Informationen über die anderen Nutzlastinformationen auf der Basis der ausgewählten Quantisierungsregel, um die quantisierten weichen Informationen zu erhalten;
Senden der quantisierten weichen Informationen an einen Zielort; und
Senden von Informationen über die ausgewählte Quantisierungsregel.

**7.** Ein Decodierer (300) zum Decodieren eines ersten codierten Codewortes, um erste weiche Informationen über ein erstes Codewort $x_1$ zu erhalten, und zum Decodieren eines zweiten codierten Codewortes, um zweite weiche Informationen über ein zweites Codewort $x_2$ zu erhalten, der folgende Merkmale aufweist:

einen ersten weichen Decodierer (310) zum Bestimmen der ersten weichen Informationen über das erste Codewort $x_1$ auf der Basis des ersten codierten Codeworts, wobei der erste weiche Decodierer (310) zum Bestimmen der ersten weichen Informationen bezüglich eines LLR (LLR = log-likelihood ratio, logarithmiertes Wahrscheinlichkeitsverhältnis) angepasst ist;
einen zweiten weichen Decodierer (320) zum Bestimmen der zweiten weichen Informationen über das zweite Codewort $\boldsymbol{x_2}$ auf der Basis des zweiten codierten Codeworts und zweiter a-priori-Informationen $\boldsymbol{L_A^{(2)}}$, wobei der zweite weiche Decodierer (320) zum Bestimmen der zweiten weichen Informationen bezüglich eines LLR angepasst ist;

eine erste Weiche-Informationen-Wiedergabevorrichtung (330) zum Bereitstellen der zweiten a-priori-Informationen $L_A^{(2)}$ auf der Basis der ersten weichen Informationen und quantisierten weichen Informationen ***z***, wobei die quantisierten weichen Informationen auf einer Kombination des ersten Codeworts und des zweiten Codeworts beruhen, wobei die Weiche-Informationen-Wiedergabevorrichtung (330) zum Bereitstellen der zweiten a-priori-Informationen $L_A^{(2)}$ bezüglich eines LLR und zum Bestimmen der zweiten a-priori-Informationen $L_A^{(2)}$ anhand einer entschachtelten Version von

$$L'^{(2)}_{A,m} = \ln\left(\frac{1+e^{L_{E,m}^{(1)}}e^{L(x_{1,m},x'_{2,m}=1|z_m)}}{e^{L_{E,m}^{(1)}}e^{L(x_{1,m},x'_{2,m}|z_m)}+e^{-L(x_{1,m}=-1,x'_{2,m}|z_m)}}\right)$$

angepasst ist,

wobei $m$ ein Index innerhalb eines Wortes ist, $\mathbf{x'}_2$ eine verschachtelte Version von $\mathbf{x_2}$ ist, wobei die quantisierten weichen Informationen $z$ derart sind, dass $x_{1,m}$ und $x'_{2,m}$ durch die Wahrscheinlichkeitsdichte $p\,(x_{1,m}, x'_{2,m}\,|z_m)$ zugeordnet werden, wobei $\mathbf{L}_{E,m}^{(1)}$ eine Kombination der ersten weichen Informationen und erster a- priori-Informationen $L_A^{(1)}$ ist und wobei

$$L\left(x_{1,m}, x'_{2,m}=1|z_m\right) = \ln\left(\frac{p\left(x_{1,m}=1, x'_{2,m}=1|z_m\right)}{p\left(x_{1,m}=-1, x'_{2,m}=1|z_m\right)}\right),$$

$$L\left(x_{1,m}, x'_{2,m}|z_m\right) = \ln\left(\frac{p\left(x_{1,m}=1, x'_{2,m}=-1|z_m\right)}{p\left(x_{1,m}=-1, x'_{2,m}=1|z_m\right)}\right),$$

$$L\left(x_{1,m}=-1, x'_{2,m}|z_m\right) = \ln\left(\frac{p\left(x_{1,m}=-1, x'_{2,m}=1|z_m\right)}{p\left(x_{1,m}=-1, x'_{2,m}=-1|z_m\right)}\right);$$

eine zweite Weiche-Informationen-Wiedergabevorrichtung (340) zum Bereitstellen der ersten a-priori-Informationen $L_A^{(1)}$ auf der Basis der zweiten a-priori-Informationen $\mathbf{L}_A^{(2)}$, der quantisierten weichen Informationen z und der zweiten weichen Informationen, wobei die zweite Weiche-Informationen-Wiedergabevorrichtung (340) zum Bereitstellen der ersten a-priori-Informationen $L_A^{(1)}$ bezüglich eines LLR angepasst ist, wobei

$$L_{A,m}^{(1)} = \ln\left(\frac{1+e^{L'^{(2)}_{E,m}}e^{L_m(x_{1,m},=1,x'_{2,m}|z_m)}}{e^{L'^{(2)}_{E,m}}e^{-L(x_{1,m},x'_{2,m}|z_m)}+e^{-L(x_{1,m}x'_{2,m}=-1|z_m)}}\right),$$

wobei $L'^{(2)}_{E,m}$ eine verschachtelte Version einer Kombination der zweiten weichen Informationen und der zweiten a-priori-Informationen $\boldsymbol{L}_A^{(2)}$ ist und

$$L\left(x_{1,m}=1,x'_{2,m}\mid z_m\right)=\ln\left(\frac{p\left(x_{1,m}=1,x'_{2,m}=1\middle|z_m\right)}{p\left(x_{1,m}=1,x'_{2,m}=-1\middle|z_m\right)}\right),$$

$$L\left(x_{1,m},x'_{2,m}=-1\middle|z_m\right)=\ln\left(\frac{p\left(x_{1,m}=1,x'_{2,m}=-1\middle|z_m\right)}{p\left(x_{1,m}=-1,x'_{2,m}=-1\middle|z_m\right)}\right),$$

wobei der erste weiche Decodierer (310) zum Bestimmen aktualisierter erster weicher Informationen über das erste Codewort $x_1$ auf der Basis des codierten ersten Codeworts und der ersten a-priori-Informationen $\boldsymbol{L}_A^{(1)}$ angepasst ist.

**8.** Der Decodierer (300) gemäß Anspruch 7, bei dem die erste Weiche-Informationen-Wiedergabevorrichtung (330) zum Bereitstellen aktualisierter zweiter a-priori-Informationen auf der Basis der aktualisierten ersten weichen Informationen, der ersten a-priori-Informationen $\boldsymbol{L}_A^{(1)}$ und der quantisierten weichen Informationen *z* angepasst ist.

**9.** Der Decodierer (300) gemäß einem der Ansprüche 7 oder 8, der ferner einen Empfänger zum Empfangen codierter quantisierter weicher Informationen und einen Decodierer zum Decodieren der codierten quantisierten weichen Informationen und einen Neuquantisierer zum Bereitstellen der quantisierten weichen Informationen auf der Basis einer Quantisierungsregel und der decodierten codierten quantisierten weichen Informationen aufweist, wobei der Empfänger ferner zum Empfangen von Informationen über die Quantisierungsregel angepasst ist.

**10.** Der Decodierer (300) gemäß einem der Ansprüche 7 bis 9, bei dem der Empfänger zum Empfangen in einem zellularen Mobilkommunikationssystem angepasst ist.

**11.** Ein Verfahren zum Decodieren eines ersten codierten Codeworts, um erste weiche Informationen über ein erstes Codewort $\boldsymbol{x}_1$ zu erhalten, und zum Decodieren eines zweiten codierten Codeworts, um zweite weiche Informationen über ein zweites Codewort $\boldsymbol{x}_2$ zu erhalten, wobei das Verfahren folgende Schritte aufweist:

Bestimmen der ersten weichen Informationen über das erste Codewort $\mathbf{x}_1$ auf der Basis des ersten codierten Codeworts bezüglich eines LLR;

Bestimmen zweiter weicher Informationen über das zweite Codewort $\boldsymbol{x}_2$ auf der Basis des zweiten codierten Codeworts und zweiter a-priori-Informationen $\mathbf{L}_A^{(2)}$ bezüglich eines LLR;

Bereitstellen der zweiten a-priori-Informationen $\boldsymbol{L}_A^{(2)}$ bezüglich eines LLR auf der Basis der ersten weichen Informationen und quantisierten weichen Informationen z, wobei die quantisierten weichen Informationen $\boldsymbol{z}$ auf einer gemeinsamen Quantisierung des ersten Codeworts $\boldsymbol{x}_1$ und des zweiten Codeworts $x_2$ beruhen, und Bestimmen der zweiten a-priori-Informationen $\boldsymbol{L}_A^{(2)}$ anhand einer entschachtelten Version von

$$L'^{(2)}_{A,m} = \ln\left( \frac{1 + e^{L^{(1)}_{E,m}} e^{L(x_{1,m}, x'_{2,m}=1|z_m)}}{e^{L^{(1)}_{E,m}} e^{L(x_{1,m}, x'_{2,m}|z_m)} + e^{-L(x_{1,m}=-1, x'_{2,m}|z_m)}} \right),$$

wobei $m$ ein Index innerhalb eines Wortes ist, $\mathbf{x'_2}$ eine verschachtelte Version von $\mathbf{x_2}$ ist, wobei die quantisierten weichen Informationen $z$ derart sind, dass $x_{1,m}$ und $x'_{2,m}$ durch die Wahrscheinlichkeitsdichte $p$ ($x_{1,m}$, $x'_{2,m}$ $|z_m$) zugeordnet werden, wobei $\mathbf{L}^{(1)}_{E,m}$ eine Kombination der ersten weichen Informationen und erster a- priori-Informationen $\boldsymbol{L}^{(1)}_{A}$ ist und wobei

$$L(x_{1,m}, x'_{2,m} = 1|z_m) = \ln\left( \frac{p(x_{1,m} = 1, x'_{2,m} = 1|z_m)}{p(x_{1,m} = -1, x'_{2,m} = 1|z_m)} \right),$$

$$L(x_{1,m}, x'_{2,m}|z_m) = \ln\left( \frac{p(x_{1,m} = 1, x'_{2,m} = -1|z_m)}{p(x_{1,m} = -1, x'_{2,m} = 1|z_m)} \right),$$

$$L(x_{1,m} = -1, x'_{2,m}|z_m) = \ln\left( \frac{p(x_{1,m} = -1, x'_{2,m} = 1|z_m)}{p(x_{1,m} = -1, x'_{2,m} = -1|z_m)} \right);$$

Bereitstellen erster a-priori-Informationen $\boldsymbol{L}^{(1)}_{A}$ bezüglich eines LLR auf der Basis der zweiten a-priori-Informationen $\mathbf{L}^{(2)}_{A}$, der quantisierten weichen Informationen z und der zweiten weichen Informationen, wobei

$$L^{(1)}_{A,m} = \ln\left( \frac{1 + e^{L'^{(2)}_{E,m}} e^{L_m(x_{1,m,}=1, x'_{2,m}|z_m)}}{e^{L'^{(2)}_{E,m}} e^{-L(x_{1,m}, x'_{2,m}|z_m)} + e^{-L(x_{1,m} x'_{2,m}=-1|z_m)}} \right),$$

wobei $L'^{(2)}_{E,m}$ eine verschachtelte Version einer Kombination der zweiten weichen Informationen und der zweiten a-priori-Informationen $\boldsymbol{L}^{(2)}_{A}$ ist und

$$L\left(x_{1,m}=1,x'_{2,m} \mid z_m\right)=\ln\left(\frac{p\left(x_{1,m}=1,x'_{2,m}=1\middle|z_m\right)}{p\left(x_{1,m}=1,x'_{2,m}=-1\middle|z_m\right)}\right),$$

$$L\left(x_{1,m},x'_{2,m}=-1\middle|z_m\right)=\ln\left(\frac{p\left(x_{1,m}=1,x'_{2,m}=-1\middle|z_m\right)}{p\left(x_{1,m}=-1,x'_{2,m}=-1\middle|z_m\right)}\right);$$

und

Bestimmen aktualisierter erster weicher Informationen über das erste Codewort $\boldsymbol{x}_1$ auf der Basis des codierten ersten Codeworts und der ersten a-priori-Informationen $\boldsymbol{L}_A^{(1)}$.

**12.** Computerprogramm, das einen Programmcode zum Ausführen eines der Verfahren gemäß Anspruch 6 oder 11, wenn das Programm auf einem Computer oder Prozessor abläuft, aufweist.

**13.** System, das eine Weiterleitungsstation (100) gemäß einem der Ansprüche 1 bis 5 und einen Decodierer (300) gemäß einem der Ansprüche 7 bis 10 aufweist.

**Revendications**

**1.** Station relais (100) destinée à être opérationnelle dans un système de communication mobile, comprenant
un récepteur (110) destiné à recevoir un signal radioélectrique d'une source, le signal radioélectrique comprenant des symboles représentant des informations codées, les informations codées étant basées sur une règle de codage et comprenant une information de charge utile et une information de redondance, où le récepteur (110) est adapté pour recevoir un autre signal radioélectrique d'une autre source, l'autre signal radioélectrique comprenant d'autres symboles représentant d'autres informations codées, les autres informations codées étant basées sur une autre règle de codage et comprenant une autre information de charge utile et une autre information de redondance;
un décodeur (120) destiné à déterminer des informations douces sur l'information de charge utile et l'information de redondance sur base d'un symbole et d'une règle de décodage associée à la règle de codage, les informations douces comprenant une information sur le symbole et une information de fiabilité sur l'information sur le symbole, où le décodeur (120) est adapté pour déterminer d'autres informations douces sur l'autre information de charge utile et l'autre information de redondance sur base d'un autre symbole et d'une autre règle de décodage associée à l'autre règle de codage, les autres informations douces comprenant une information sur l'autre symbole et une information de fiabilité sur l'information sur l'autre symbole;
**caractérisée par le fait qu'**elle comprend par ailleurs:

un détecteur de qualité de signal (130) destiné à détecter une mesure de qualité de signal sur base des informations douces, pour obtenir une indication de qualité de signal, où le détecteur de qualité de signal (130) est adapté pour détecter une autre mesure de qualité de signal sur base des autres informations douces, pour obtenir une autre indication de qualité de signal;
un sélecteur de règle de quantification (140) destiné à sélectionner une règle de quantification parmi une pluralité de règles de quantification sur base de l'indication de qualité de signal et sur base de l'autre indication de qualité de signal;
un quantificateur (150) destiné à quantifier une combinaison des informations douces sur l'information de charge utile et des autres informations douces sur l'autre information de charge utile, pour obtenir des informations douces quantifiées ou pour quantifier conjointement les informations douces sur l'information de charge utile et les autres informations douces sur l'autre information de charge utile sur base de la règle de quantification sélectionnée, pour obtenir des informations douces quantifiées; et
un émetteur (160) destiné à transmettre les informations douces quantifiées à une destination, où l'émetteur (160) est adapté pour transmettre une information sur la règle de quantification sélectionnée.

2. Station relais (100) selon la revendication 1, dans laquelle le détecteur de qualité de signal (130) est par ailleurs adapté pour déterminer une erreur sur base des informations douces sur l'information de redondance, pour obtenir une indication d'erreur et dans laquelle le sélecteur de règle de quantification (140) est adapté pour sélectionner la règle de quantification par ailleurs sur base de l'indication d'erreur, dans laquelle le détecteur de qualité de signal (130) est par ailleurs adapté pour déterminer une autre erreur sur base des autres informations douces sur l'autre information de redondance, pour obtenir une autre indication d'erreur, et dans laquelle le sélecteur de règle de quantification (140) est adapté pour sélectionner la règle de quantification par ailleurs sur base de l'autre indication d'erreur.

3. Station relais (100) selon l'une des revendications 1 à 2, dans laquelle l'émetteur (160) comprend par ailleurs un codeur de source destiné à coder de source les informations douces quantifiées et un codeur de canal destiné à coder par canal les informations douces quantifiées codées de source avant la transmission.

4. Station relais (100) selon la revendication 3, dans laquelle le codeur de canal fonctionne à une vitesse de codage adaptative, le codeur de canal étant configuré pour adapter la vitesse de codage à une capacité de transmission d'une liaison radio à la destination.

5. Station relais (100) selon l'une des revendications 2 à 4, dans laquelle le détecteur de qualité de signal (130) est adapté pour détecter l'indication d'erreur ou l'autre indication d'erreur sur base d'une vérification de redondance cyclique.

6. Procédé pour relayer dans un système de communication mobile, comprenant les étapes consistant à:

recevoir un signal radioélectrique d'une source, le signal radioélectrique comprenant des symboles représentant des informations codées, les informations codées étant basées sur une règle de codage et comprenant une information de charge utile et une information de redondance;
recevoir un autre signal radioélectrique d'une autre source, l'autre signal radioélectrique comprenant d'autres symboles représentant d'autres informations codées, les autres informations codées étant basées sur une autre règle de codage et comprenant une autre information de charge utile et une autre information de redondance;
déterminer les informations douces sur l'information de charge utile et l'information de redondance sur base d'un symbole et d'une règle de décodage associée à la règle de codage, les informations douces comprenant une information sur le symbole et une information de fiabilité sur l'information sur le symbole;
déterminer les autres informations douces sur l'autre information de charge utile et l'autre information de redondance sur base d'un autre symbole et d'une autre règle de décodage associée à l'autre règle de codage, les autres informations douces comprenant une information sur l'autre symbole et une information de fiabilité sur l'information sur l'autre symbole;
**caractérisé par** le fait de
détecter une mesure de qualité de signal sur base des informations douces, pour obtenir une indication de qualité de signal;
détecter une autre mesure de qualité de signal sur base des autres informations douces, pour obtenir une autre indication de qualité de signal;
sélectionner une règle de quantification parmi une pluralité de règles de quantification sur base de l'indication de qualité de signal et sur base de l'autre indication de qualité de signal;
quantifier une combinaison des informations douces sur l'information de charge utile et des autres informations douces sur l'autre information de charge utile sur base de la règle de quantification sélectionnée, pour obtenir des informations douces quantifiées ou pour quantifier conjointement les informations douces sur l'information de charge utile et les autres information douces sur l'autre information de charge utile sur base de la règle de quantification sélectionnée, pour obtenir des informations douces quantifies;
transmettre les informations douces quantifiées à une destination; et
transmettre une information sur la règle de quantification sélectionnée.

7. Décodeur (300) pour décoder un premier mot de code codé, pour obtenir une première information douce sur un premier mot de code $\mathbf{x}_1$ et pour décoder un deuxième mot de code codé, pour obtenir une deuxième information douce sur un deuxième mot de code $\mathbf{x}_2$, comprenant
un premier décodeur doux (310) destiné à déterminer la première information douce sur le premier mot de code $\mathbf{x}_1$ sur base du premier mot de code codé, où le premier décodeur doux (310) est adapté pour déterminer la première information douce en termes de LLR;

un deuxième décodeur doux (320) destiné à déterminer la deuxième information douce sur le deuxième mot de code $\mathbf{x}_2$ sur base du deuxième mot de code codé et d'une deuxième information à priori $\boldsymbol{L}_A^{(2)}$, où le deuxième décodeur doux (320) est adapté pour déterminer la deuxième information douce en termes de LLR;

un premier dispositif de rendu d'information douces (330) destiné à fournir la deuxième information à priori $\boldsymbol{L}_A^{(2)}$ sur base de la première information douce et de l'information douce quantifiée **z**, l'information douce quantifiée étant basée sur une combinaison du premier mot de code et du deuxième mot de code, où le premier dispositif de rendu d'informations douces (330) est adapté pour fournir la deuxième information à priori $\boldsymbol{L}_A^{(2)}$ en termes de LLR et pour déterminer la deuxième information à priori $\boldsymbol{L}_A^{(2)}$ par une version démêlée de

$$L_{A,m}^{'(2)} = \ln\left(\frac{1+e^{L_{E,m}^{(1)}}e^{L\left(x_{l,m}x_{2,m}^{'}=l|z_m\right)}}{e^{L_{E,m}^{(1)}}e^{L\left(x_{l,m}x_{2,m}^{'}l|z_m\right)}+e^{-L\left(x_{l,m}=-1,x_{2,m}^{'}l|z_m\right)}}\right),$$

où m est un indice dans un mot, $\mathbf{x'}_2$ étant une version entremêlée de $\mathbf{x}_2$, où l'information douce quantifiée **z** est telle que $x_{1,m}$ et $x'_{2,m}$ soient associés par la densité de probabilité p $(x_{1,m}, x'_{2,m}|z_m)$, où $\mathbf{L}_{E,m}^{(1)}$ est une combinaison de la première information douce et de la première information à priori $\boldsymbol{L}_A^{(1)}$, et où

$$L(x_{1,m}, x_{2,m}^{'} = 1|z_m) = \ln\left(\frac{p(x_{1,m} = 1, x_{2,m}^{'} = 1|z_m)}{p(x_{1,m} = -1, x_{2,m}^{'} = 1|z_m)}\right),$$

$$L(x_{1,m}, x_{2,m}^{'}|z_m) = \ln\left(\frac{p(x_{1,m} = 1, x_{2,m}^{'} = -1|z_m)}{p(x_{1,m} = -1, x_{2,m}^{'} = 1|z_m)}\right),$$

$$L(x_{1,m} = -1, x_{2,m}^{'}|z_m) = \ln\left(\frac{p(x_{1,m} = -1, x_{2,m}^{'} = 1|z_m)}{p(x_{1,m} = -1, x_{2,m}^{'} = -1|z_m)}\right) \quad ;$$

un deuxième dispositif de rendu d'informations douces (340) destiné à fournir la première information à priori $\boldsymbol{L}_A^{(1)}$ sur base de la deuxième information à priori $\boldsymbol{L}_A^{(2)}$, de l'information douce quantifiée **z** et de la deuxième information douce, où le deuxième dispositif de rendu d'informations douces (340) est adapté pour fournir la première information à priori $\boldsymbol{L}_A^{(1)}$ en termes de LLR, où

$$L_{A,m}^{(1)} = \ln\left(\frac{1+e^{L_{E,m}^{(2)}}e^{L_m\left(x_{1,m}=1x_{1,m}^{'}|z_m\right)}}{e^{L_{E,m}^{(2)}}e^{-L\left(x_{1,m}x_{2,m}^{'}|z_m\right)}+e^{-L\left(x_{1,m},x_{2,m}^{'}=-1|z_m\right)}}\right),$$

où $L_{E,m}^{'(2)}$ est une version entremêlée d'une combinaison de la deuxième information douce et de la deuxième

information à priori $\boldsymbol{L}_A^{(2)}$ et

$$L(x_{1,m}=1,x'_{2,m}|z_m)=\ln\left(\frac{p(x_{1,m}=1,x'_{2,m}=1|z_m)}{p(x_{1,m}=1,x'_{2,m}=-1|z_m)}\right),$$

$$L(x_{1,m}=1,x'_{2,m}-1|z_m)=\ln\left(\frac{p(x_{1,m}=1,x'_{2,m}=-1|z_m)}{p(x_{1,m}=-1,x'_{2,m}=-1|z_m)}\right),$$

où le premier décodeur doux (310) est adapté pour déterminer la première information douce mise à jour sur le premier mot de code $\mathbf{x}_1$ sur base du premier mot de code codé et de la première information à priori $\boldsymbol{L}_A^{(1)}$.

**8.** Décodeur (300) selon la revendication 7, dans lequel le premier dispositif de rendu d'informations douces (330) est adapté pour fournir une deuxième information à priori mise à jour sur base de la première information douce mise à jour, de la première information à priori $\boldsymbol{L}_A^{(1)}$ et de l'information douce quantifiée **z**.

**9.** Décodeur (300) selon l'une des revendications 7 ou 8, comprenant par ailleurs un récepteur destiné à recevoir une information douce quantifiée codée et un décodeur destiné à décoder les informations douces quantifiées et un requantificateur destiné à fournir les informations douces quantifiées sur base d'une règle de quantification et des informations douces quantifiées codées décodées, où le récepteur est par ailleurs adapté pour recevoir une information sur la règle de quantification.

**10.** Décodeur (300) selon l'une des revendications 7 à 9, dans lequel le récepteur est adapté pour recevoir dans un système de communication mobile cellulaire.

**11.** Procédé de décodage d'un premier mot de code codé, pour obtenir une première information douce sur un premier mot de code $\mathbf{x}_1$ et de décodage d'un deuxième mot de code codé, pour obtenir une deuxième information douce sur un deuxième mot de code $\mathbf{x}_2$, comprenant les étapes consistant à:

déterminer la première information douce sur le premier mot de code $\mathbf{x}_1$ sur base du premier mot de code codé en termes de LLR;
déterminer une deuxième information douce sur le deuxième mot de code $\mathbf{x}_2$ sur base du deuxième mot de code codé et de la deuxième information à priori $\boldsymbol{L}_A^{(2)}$ en termes de LLR;

fournir la deuxième information à priori $\boldsymbol{L}_A^{(2)}$ en termes de LLR sur base de la première information douce et de l'information douce quantifiée **z**, l'information douce quantifiée **z** étant basée sur une quantification combinée du premier mot de code $\mathbf{x}_1$ et du deuxième mot de code $\mathbf{x}_2$ et déterminer la deuxième information à priori $\boldsymbol{L}_A^{(2)}$ par une version démêlée de

$$L'^{(2)}_{A,m}=\ln\left(\frac{1+e^{L^{(1)}_{E,m}}e^{L\left(x_{1,m}x'_{2,m}=1|z_m\right)}}{e^{L^{(1)}_{E,m}}e^{L\left(x_{1,m}x'_{2,m}|z_m\right)}+e^{-L\left(x_{1,m}=-1,x'_{2,m}|z_m\right)}}\right),$$

où m est une indice dans un mot, $\mathbf{x'_2}$ étant une version entremêlée de $\mathbf{x_2}$, où l'information douce quantifiée **z** est telle que $\mathbf{x}_{1,m}$ et $\mathbf{x'_{2,m}}$ soient associés par la densité de probabilité $p\,(x_{1,m}, x'_{2,m}\,|z_m)$ , où $\mathbf{L}^{(1)}_{E,m}$ est une combinaison de la première information douce et de la première information à priori $\boldsymbol{L}^{(1)}_{A}$ et où

$$L(x_{1,m}, x'_{2,m} = 1|z_m) = \ln\left(\frac{p(x_{1,m} = 1, x'_{2,m} = 1|z_m)}{p(x_{1,m} = -1, x'_{2,m} = 1|z_m)}\right),$$

$$L(x_{1,m}, x'_{2,m}|z_m) = \ln\left(\frac{p(x_{1,m} = 1, x'_{2,m} = -1|z_m)}{p(x_{1,m} = -1, x'_{2,m} = 1|z_m)}\right),$$

$$L(x_{1,m} = -1, x'_{2,m}|z_m) = \ln\left(\frac{p(x_{1,m} = -1, x'_{2,m} = 1|z_m)}{p(x_{1,m} = -1, x'_{2,m} = -1|z_m)}\right) \;;$$

fournir la première information à priori $\boldsymbol{L}^{(1)}_{A}$ en termes de LLR sur base de la deuxième information à priori $\boldsymbol{L}^{(2)}_{A}$ , de l'information douce quantifiée **z** et de la deuxième information douce, où

$$L^{(1)}_{A,m} = \ln\left(\frac{1 + e^{L^{(2)}_{E,m}} e^{L_m\left(x_{1,m}=1 x'_{1,m}|z_m\right)}}{e^{L^{(2)}_{E,m}} e^{-L\left(x_{1,m} x'_{2,m}|z_m\right)} + e^{-L\left(x_{1,m}, x'_{2,m}=-1|z_m\right)}}\right),$$

où $L'^{(2)}_{E,m}$ est une version entremêlée d'une combinaison de la deuxième information douce et de la deuxième information à priori $\boldsymbol{L}^{(2)}_{A}$ et

$$L(x_{1,m} = 1, x'_{2,m}|z_m) = \ln\left(\frac{p(x_{1,m} = 1, x'_{2,m} = 1|z_m)}{p(x_{1,m} = 1, x'_{2,m} = -1|z_m)}\right),$$

$$L(x_{1,m} = 1, x'_{2,m} - 1|z_m) = \ln\left(\frac{p(x_{1,m} = 1, x'_{2,m} = -1|z_m)}{p(x_{1,m} = -1, x'_{2,m} = -1|z_m)}\right) \;;$$

et
déterminer la première information douce mise à jour sur le premier mot de code $\mathbf{x_1}$ sur base du premier mot de code codé et de la première information à priori $\boldsymbol{L}^{(1)}_{A}$.

**12.** Programme d'ordinateur ayant un code de programme pour réaliser l'un des procédés selon la revendication 6 ou 11 lorsque le programme est exécuté sur un ordinateur ou un processeur.

**13.** Système comprenant une station relais (100) selon l'une des revendications 1 à 5 et un décodeur (300) selon l'une des revendications 7 à 10.

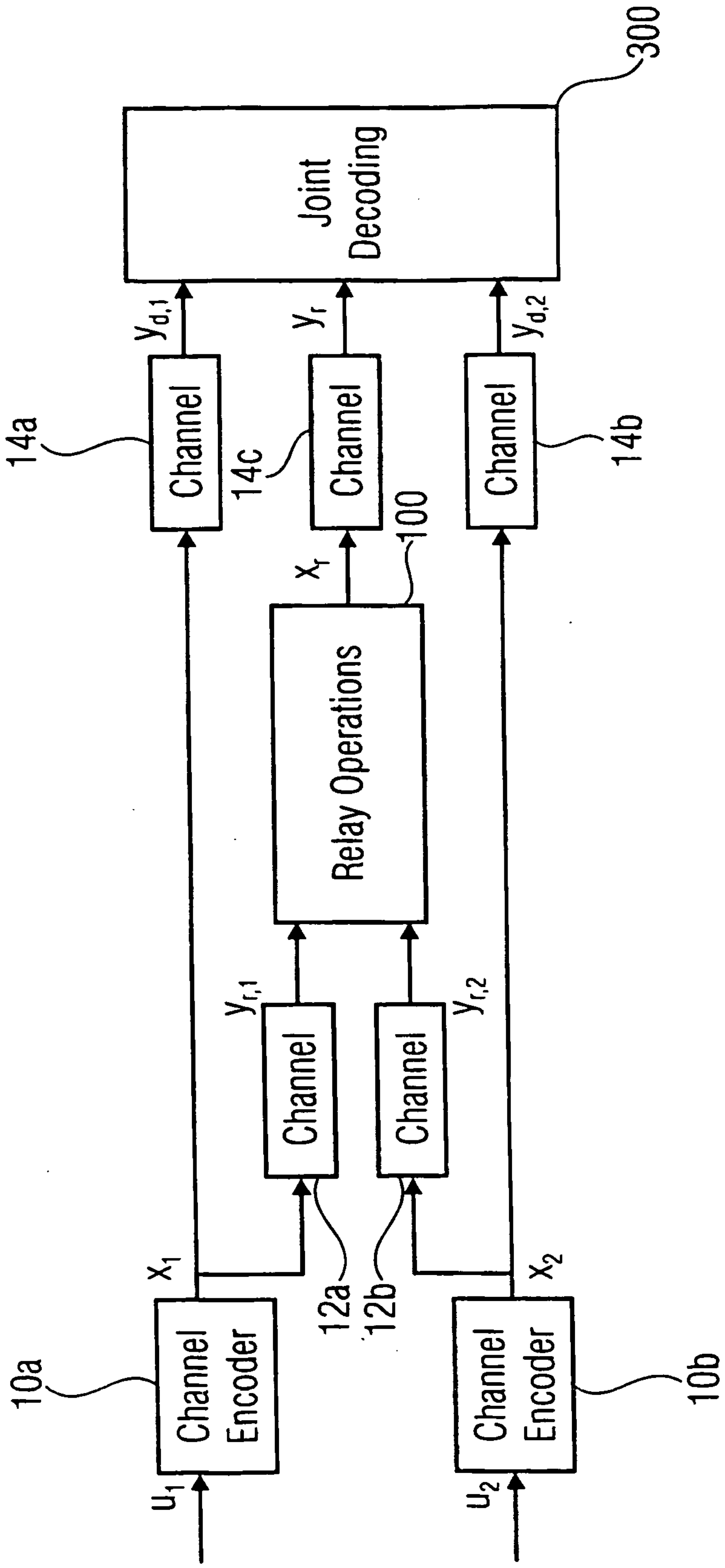
Joint
Decoding
300
$y_{d,1}$
$y_r$
$y_{d,2}$
Channel
14a
14c
Channel
Channel
14b
$x_r$
100
Relay Operations
$y_{r,1}$
$y_{r,2}$
Channel
Channel
$x_1$
$x_2$
12a
12b
10a
Channel
Encoder
Channel
Encoder
10b
$u_1$
$u_2$

FIG 1A

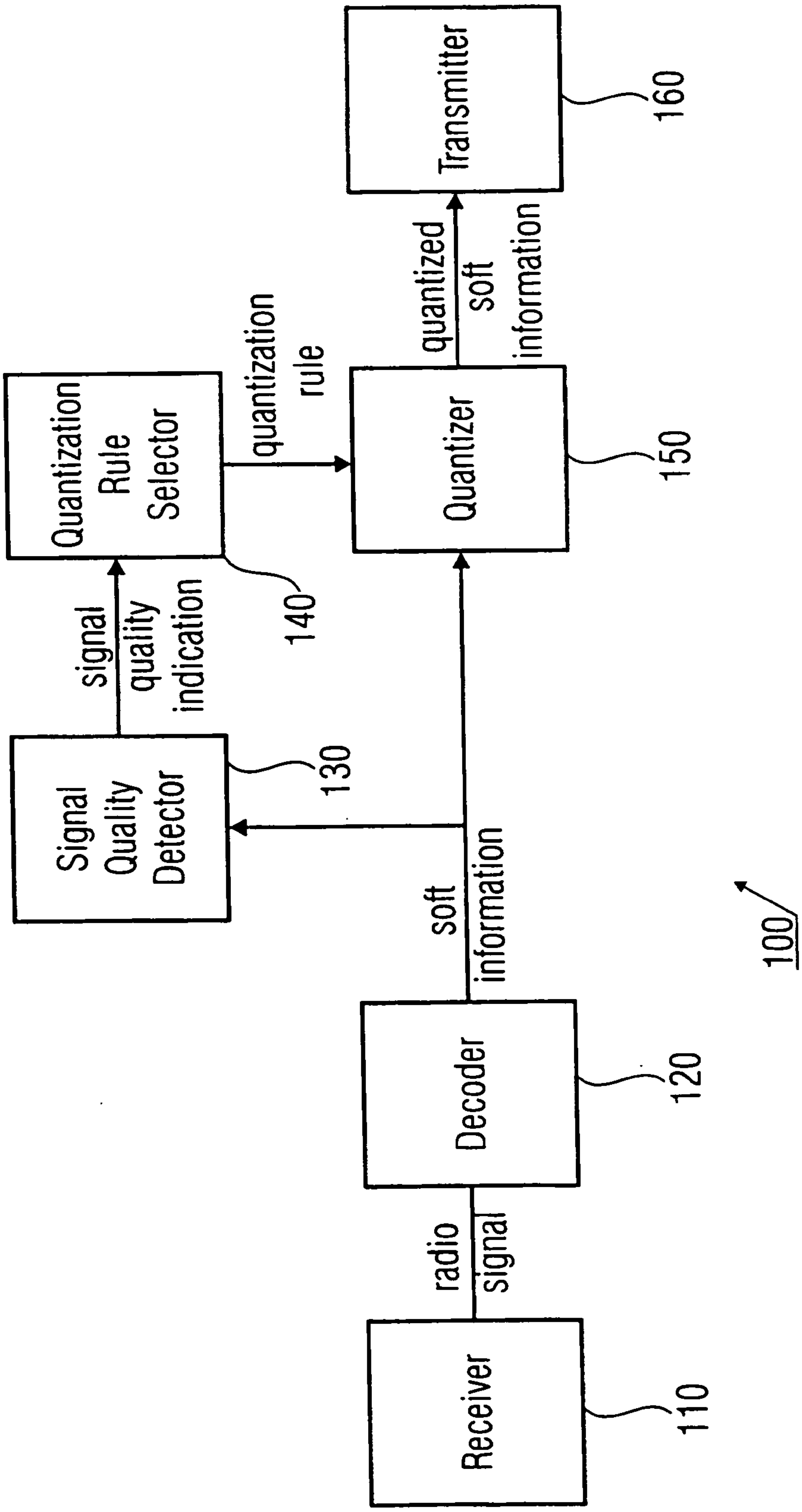
Receiver
110
radio signal
Decoder
120
soft information
Signal Quality Detector
130
signal quality indication
Quantization Rule Selector
140
quantization rule
Quantizer
150
quantized soft information
Transmitter
160
100

FIG 1B

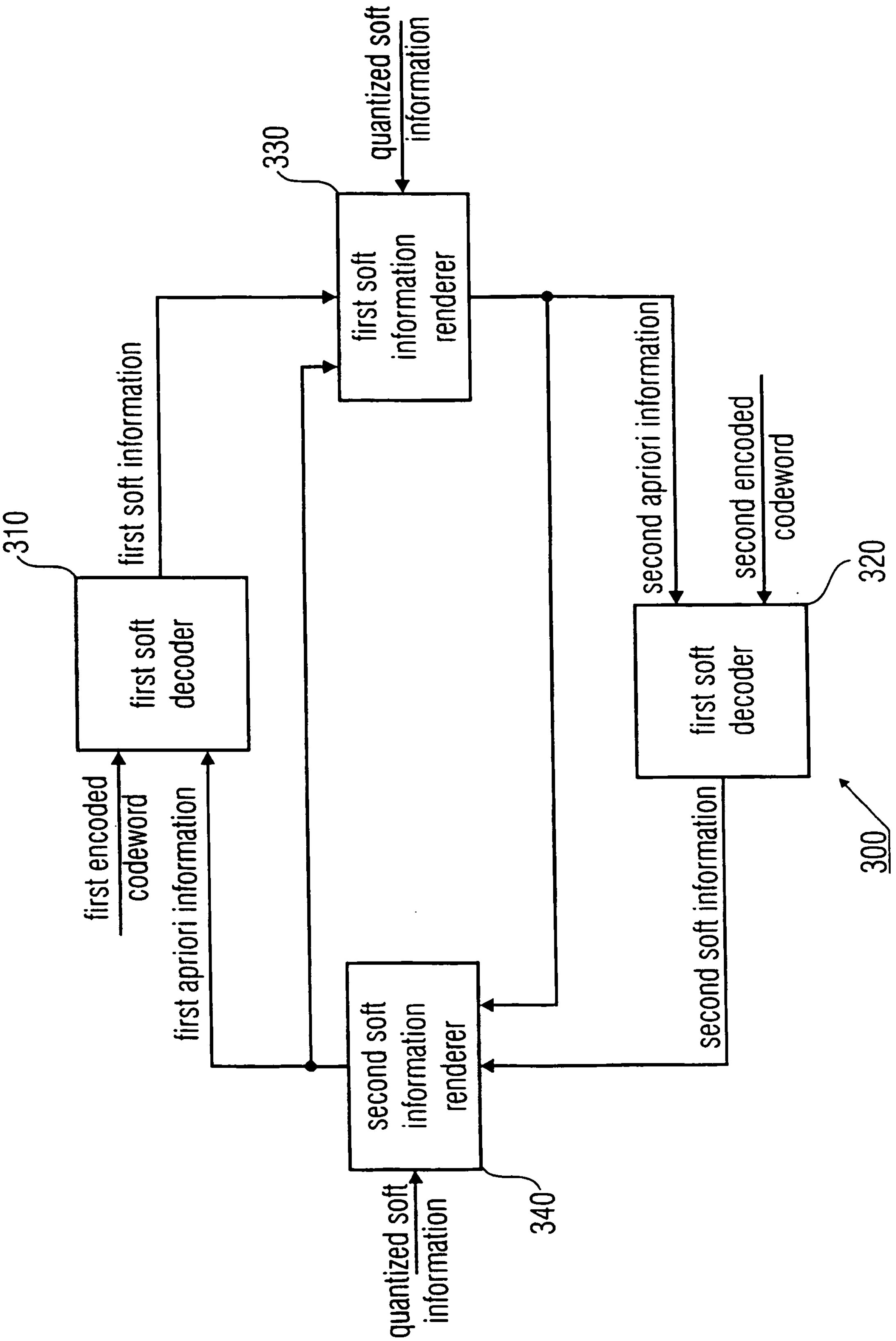
quantized soft information
330
first soft information renderer
first soft information
310
first soft decoder
first encoded codeword
first apriori information
second apriori information
second encoded codeword
320
first soft decoder
second soft information
second soft information renderer
quantized soft information
340
300

FIG 2

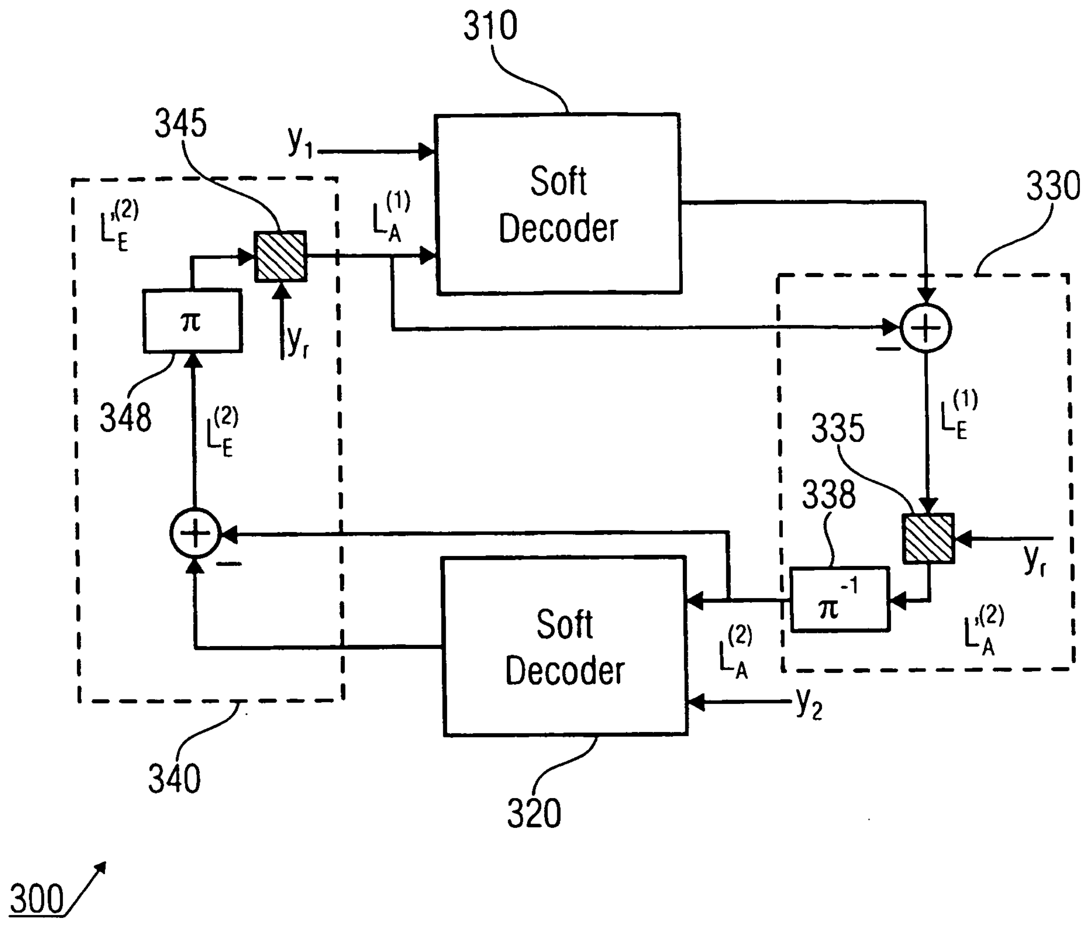
310
345
$y_1$
Soft Decoder
330
$L_A^{(1)}$
$L_E^{'(2)}$
π
$y_r$
348
$L_E^{(2)}$
$L_E^{(1)}$
335
338
$\pi^{-1}$
$y_r$
$L_A^{'(2)}$
Soft Decoder
$L_A^{(2)}$
$y_2$
340
320
300

FIG 3

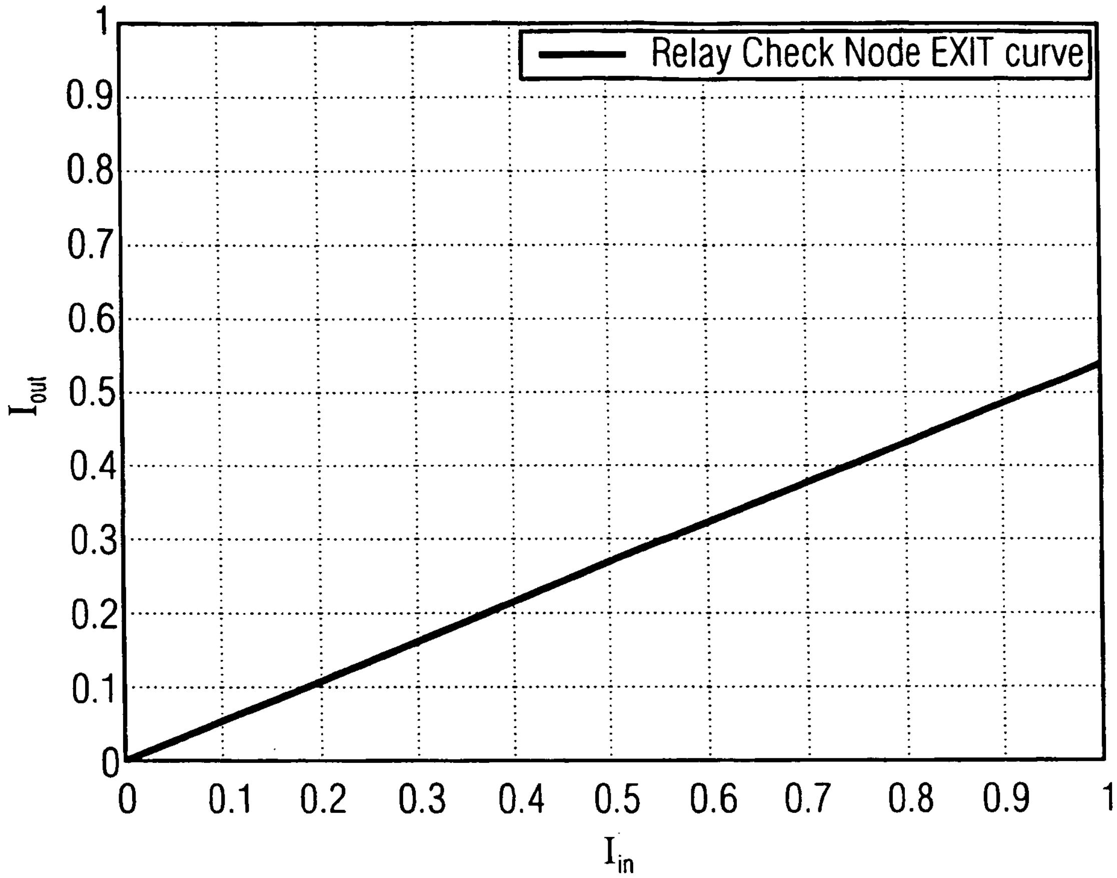
Relay Check Node EXIT curve
1
0.9
0.8
0.7
0.6
0.5
0.4
0.3
0.2
0.1
0
$I_{out}$
0
0.1
0.2
0.3
0.4
0.5
0.6
0.7
0.8
0.9
1
$I_{in}$

FIG 4A

**Algorithm 1** Algorithm to compute $p(z|l)$

**Input:** $p(x,l), \beta, N = |Z|, M$

**Initialization:** randomly choose $p(z|l)$, $i \leftarrow 0$

**while** $i \leq M$ **do**

$$p(z) \leftarrow \sum_l p(l)p(z|l)$$

$$p(x|z) \leftarrow \frac{1}{p(z)} \sum_l p(x,l)p(z|l)$$

$$p(z|l) \leftarrow \frac{p(z)}{N(l,\beta)} \exp(-\beta D(p(x|l)\,||\,p(x|z)))$$

$i \leftarrow i+1$

**end while**

FIG 4B

**Algorithm 2** Algorithm to compute $p(z|l_1,l_2)$

Input: $p(x_1,x_2,l_1,l_2),\beta,N = |Z|, M$

Initialization: randomly choose $p(z|l_1,l_2)$, $i \leftarrow 0$

**while** $i \leq M$ **do**

$$p(z) \leftarrow \sum_{l_1,l_2} p(l_1,l_2)p(z|l_1,l_2)$$

$$p(x_1,x_2|z) \leftarrow \frac{1}{p(z)} \sum_{l_1,l_2} p(x_1,x_2,l_1,l_2)p(z|l_1,l_2)$$

$$p(z|l_1,l_2) \leftarrow \frac{p(z)}{N(l_1,l_2,\beta)}$$

$$\exp\{-2\beta D(p(x_1,x_2|l_1,l_2)||p(x_1,x_2|z)) + \beta D(p(x_1|l_1)||p(x_1|z)) + \beta D(p(x_1|l_1)||p(x_1|z))\}$$

$i \leftarrow i+1$

**end while**

FIG 5

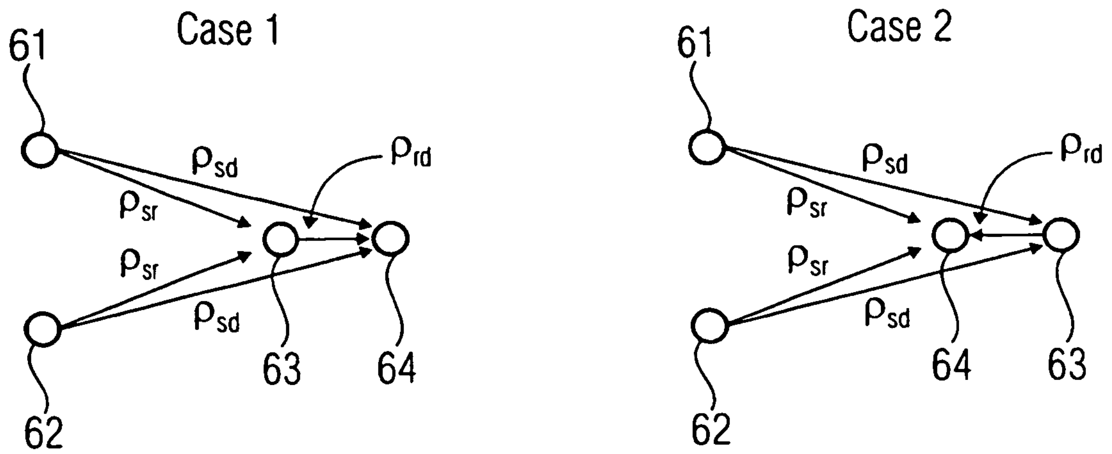
Case 1
61
ρsd
ρrd
ρsr
ρsr
ρsd
63
64
62
Case 2
61
ρsd
ρrd
ρsr
ρsr
ρsd
64
63
62

FIG 6

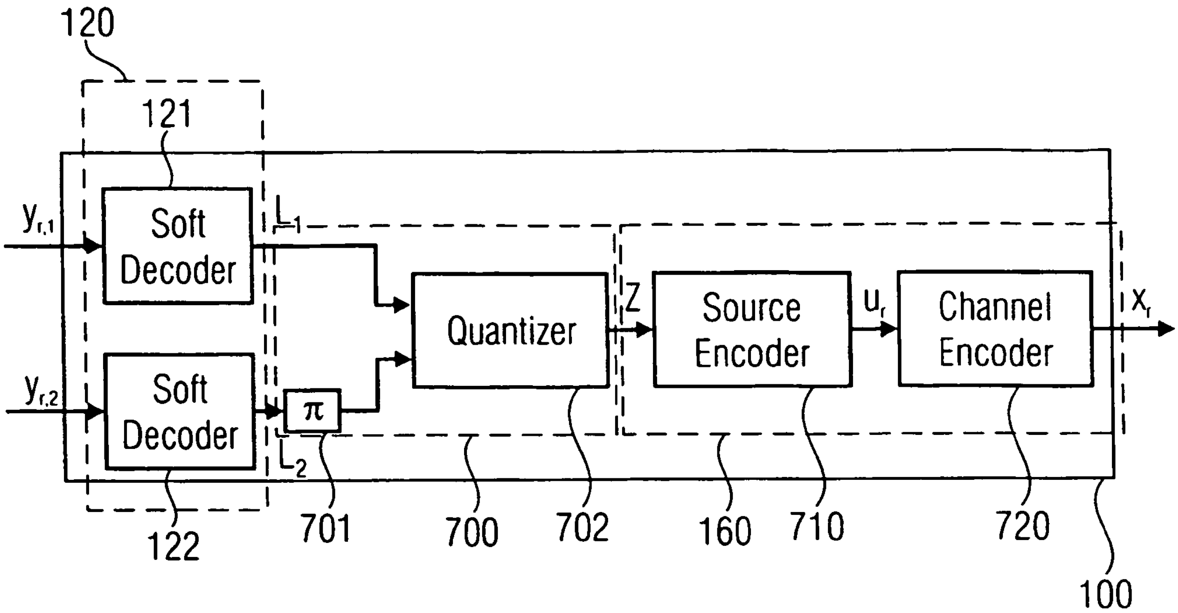
120
121
$y_{r,1}$
Soft Decoder
$y_{r,2}$
Soft Decoder
$L_1$
$L_2$
π
Quantizer
Z
Source Encoder
$u_r$
Channel Encoder
$x_r$
122
701
700
702
160
710
720
100

FIG 7

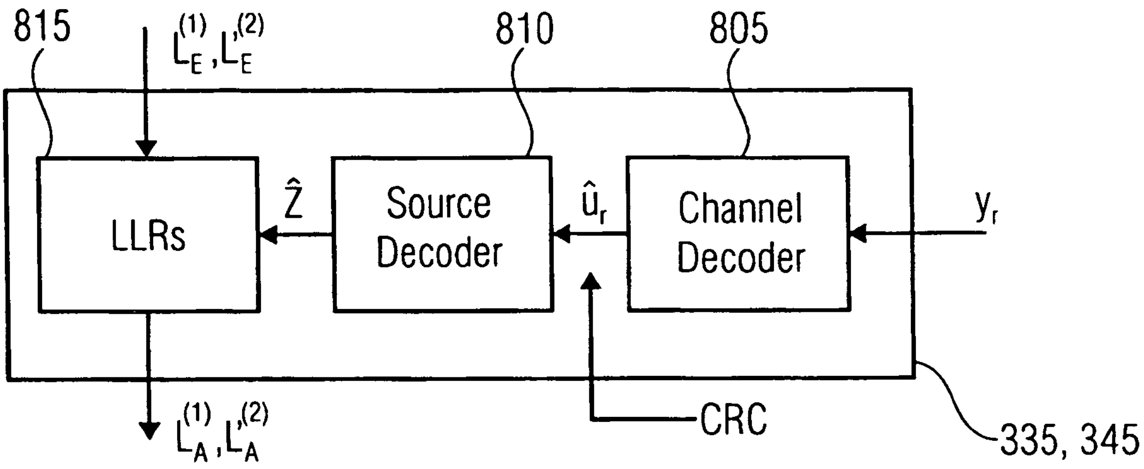
815
$L_E^{(1)}, L_E'^{(2)}$
810
805
LLRs
$\hat{Z}$
Source Decoder
$\hat{u}_r$
Channel Decoder
$y_r$
$L_A^{(1)}, L_A'^{(2)}$
CRC
335, 345

FIG 8A

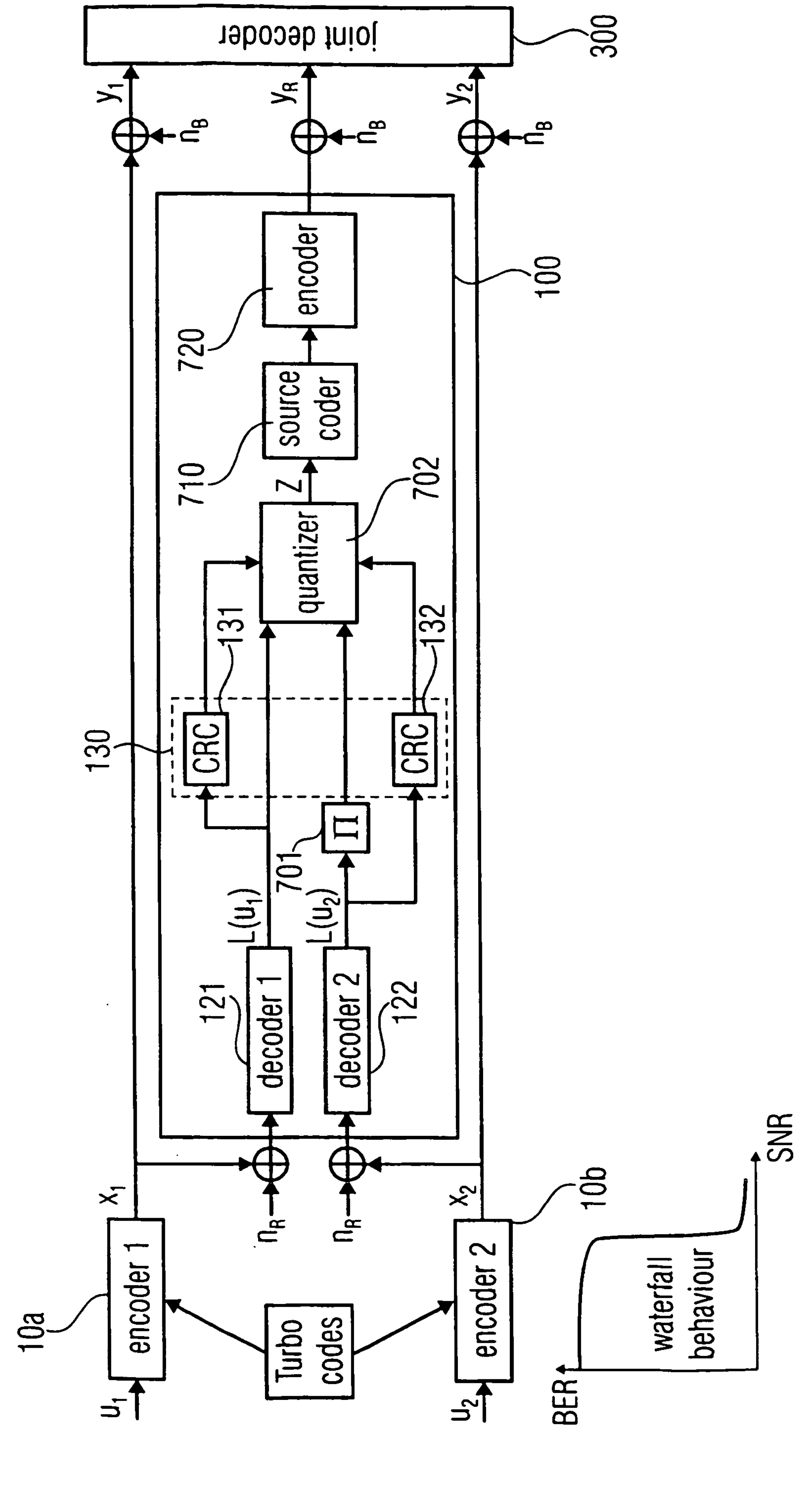
joint decoder
300
y1
yR
y2
nB
nB
nB
encoder
720
source coder
710
Z
702
quantizer
131
132
CRC
CRC
130
Π
701
L(u1)
L(u2)
decoder 1
decoder 2
121
122
100
x1
x2
nR
nR
encoder 1
encoder 2
10a
10b
Turbo codes
u1
u2
BER
SNR
waterfall behaviour

FIG 8B

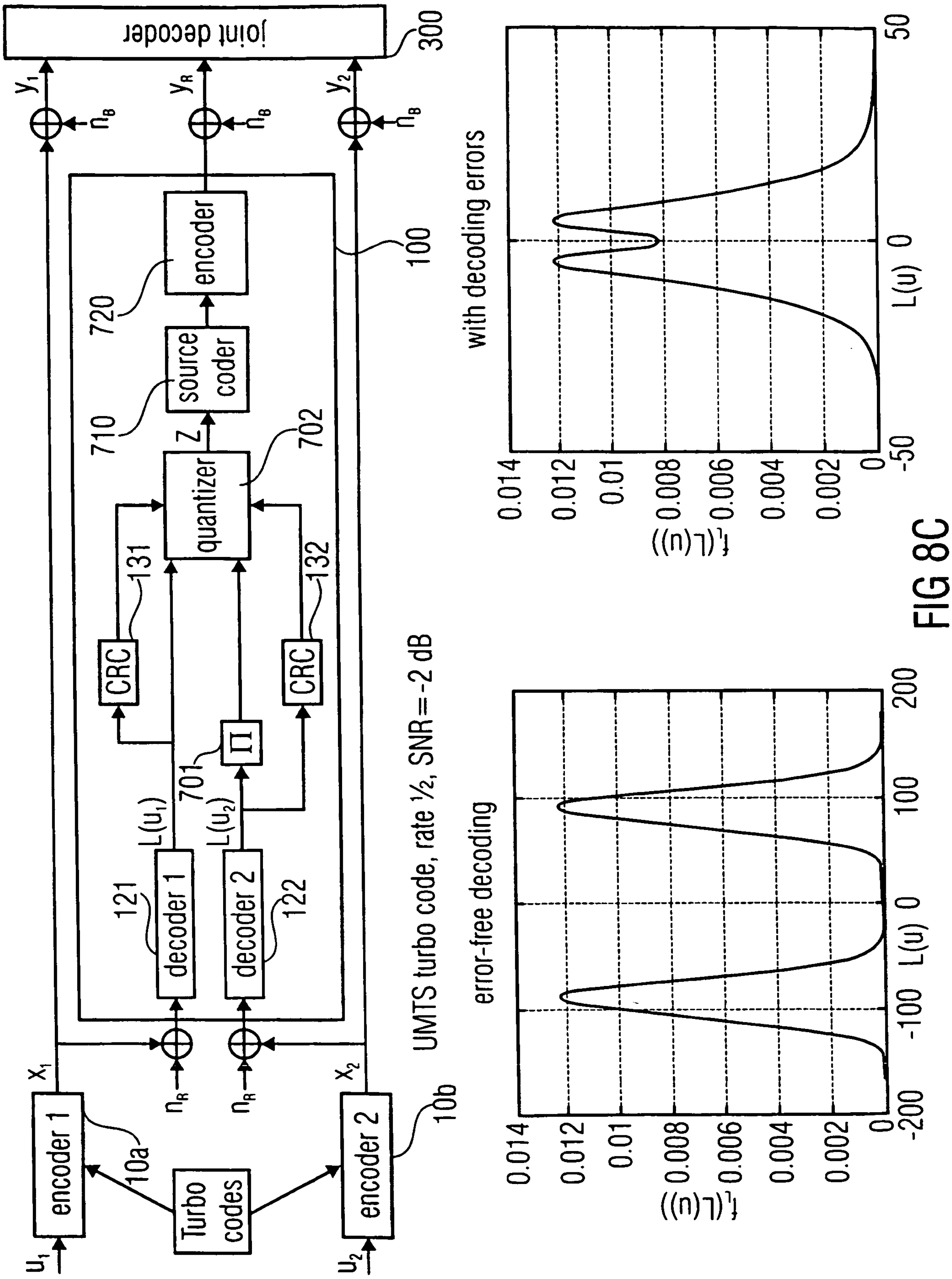
joint decoder
300
$y_1$
$y_R$
$y_2$
$n_B$
$n_B$
$n_B$
encoder
720
source coder
710
Z
quantizer
702
100
CRC
131
CRC
132
Π
701
$L(u_1)$
$L(u_2)$
decoder 1
121
decoder 2
122
$x_1$
$x_2$
$n_R$
$n_R$
encoder 1
10a
Turbo codes
encoder 2
10b
$u_1$
$u_2$
UMTS turbo code, rate ½, SNR=-2 dB
with decoding errors
error-free decoding
$f_L^1(L(u))$
L(u)
0.014
0.012
0.01
0.008
0.006
0.004
0.002
0
-50
0
50
-200
-100
0
100
200

FIG 8C

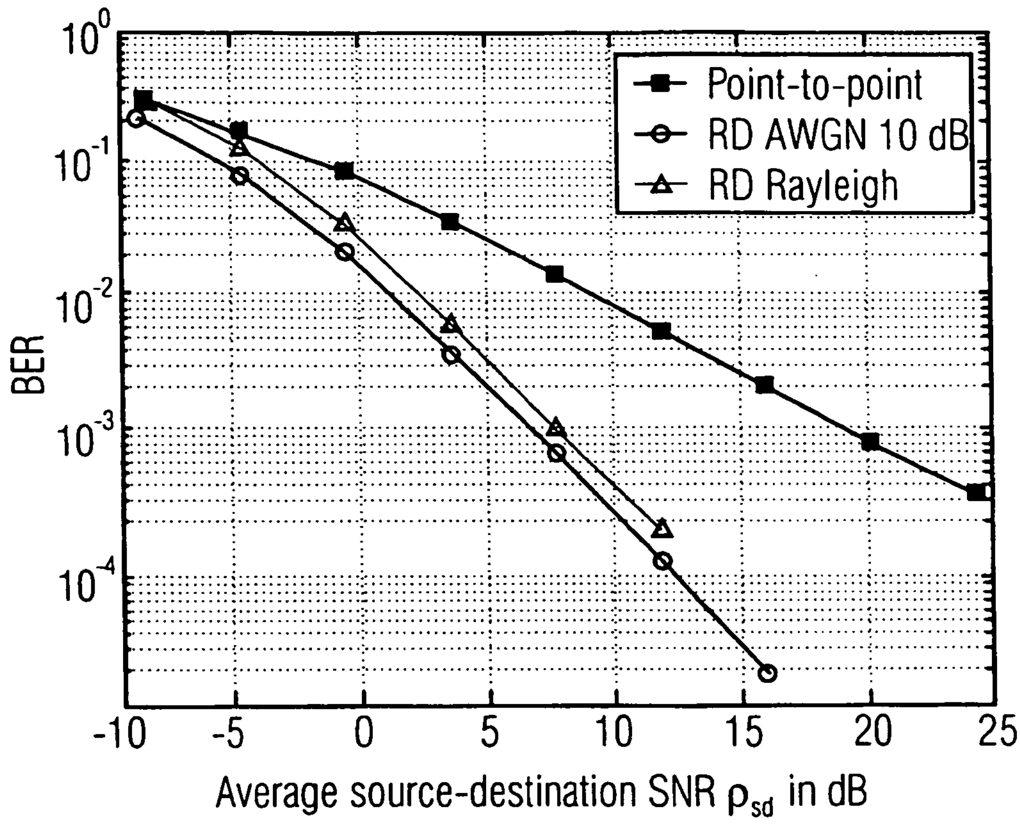

10^0
10^-1
10^-2
10^-3
10^-4
BER
Point-to-point
RD AWGN 10 dB
RD Rayleigh
-10
-5
0
5
10
15
20
25
Average source-destination SNR ρsd in dB


FIG 9

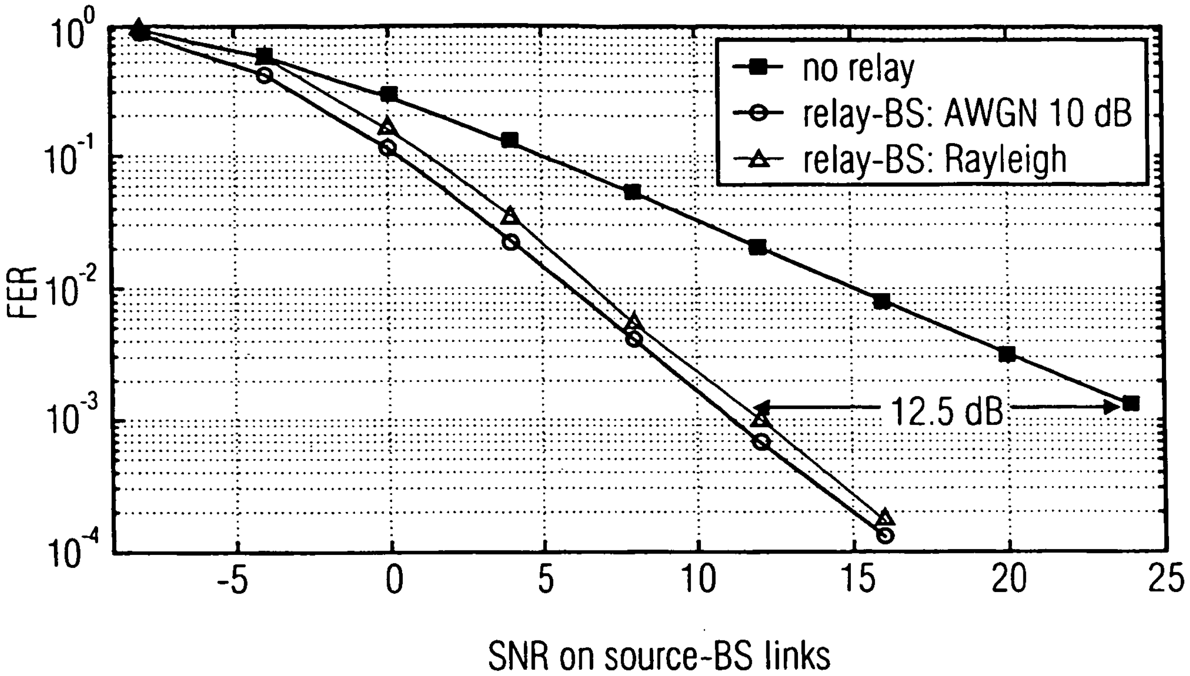
no relay
relay-BS: AWGN 10 dB
relay-BS: Rayleigh
12.5 dB
FER
$10^0$
$10^{-1}$
$10^{-2}$
$10^{-3}$
$10^{-4}$
-5
0
5
10
15
20
25
SNR on source-BS links

FIG 10

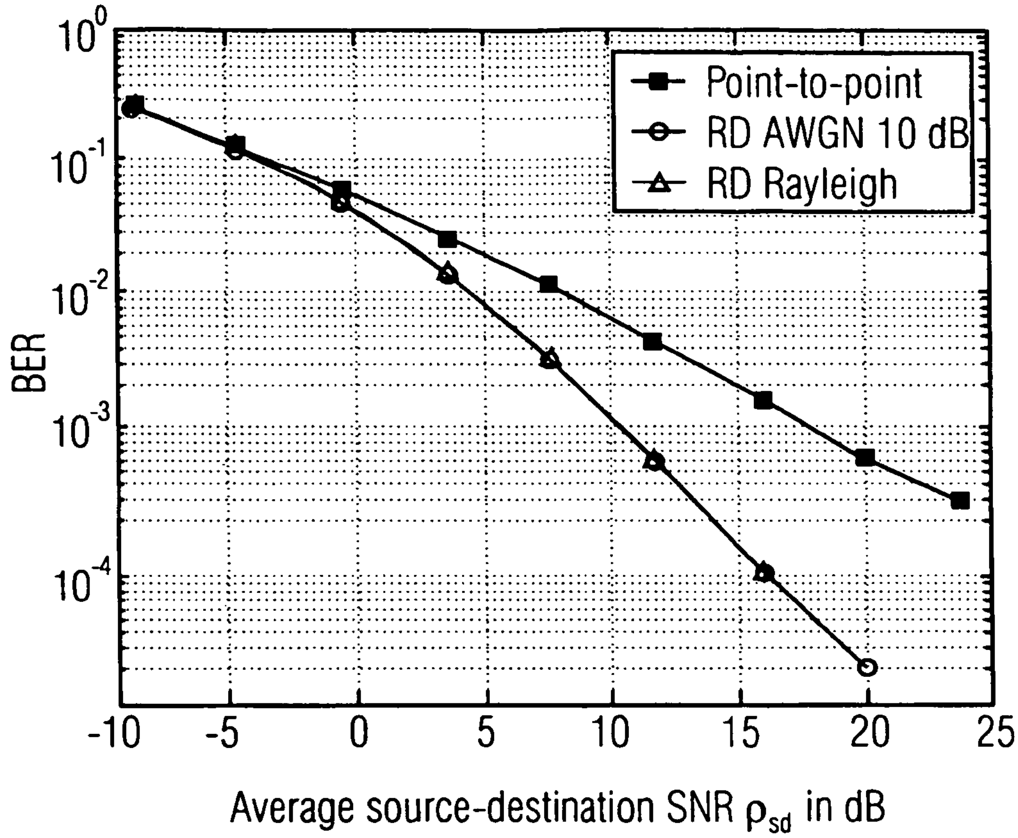

BER
Average source-destination SNR $\rho_{sd}$ in dB
Point-to-point
RD AWGN 10 dB
RD Rayleigh
$10^{0}$
$10^{-1}$
$10^{-2}$
$10^{-3}$
$10^{-4}$
-10
-5
0
5
10
15
20
25


FIG 11

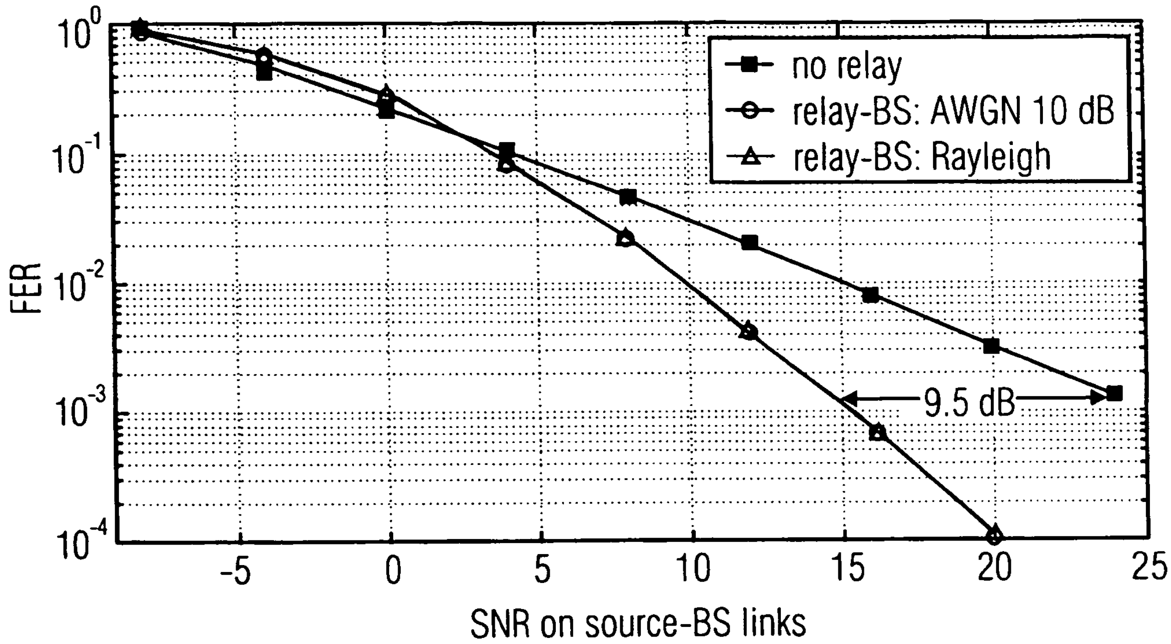

no relay
relay-BS: AWGN 10 dB
relay-BS: Rayleigh
9.5 dB
$10^0$
$10^{-1}$
$10^{-2}$
$10^{-3}$
$10^{-4}$
FER
-5
0
5
10
15
20
25
SNR on source-BS links


FIG 12A

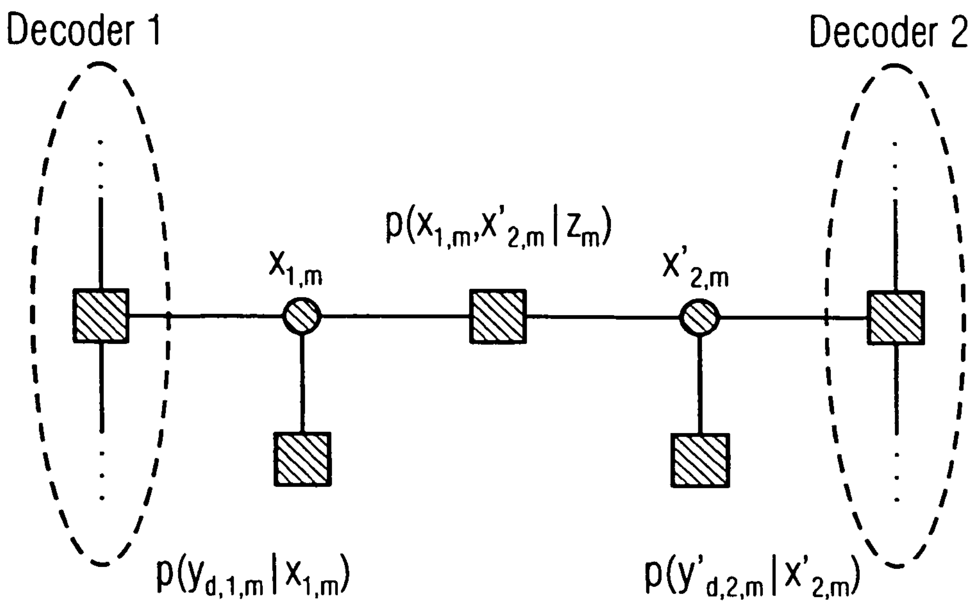


FIG 12B

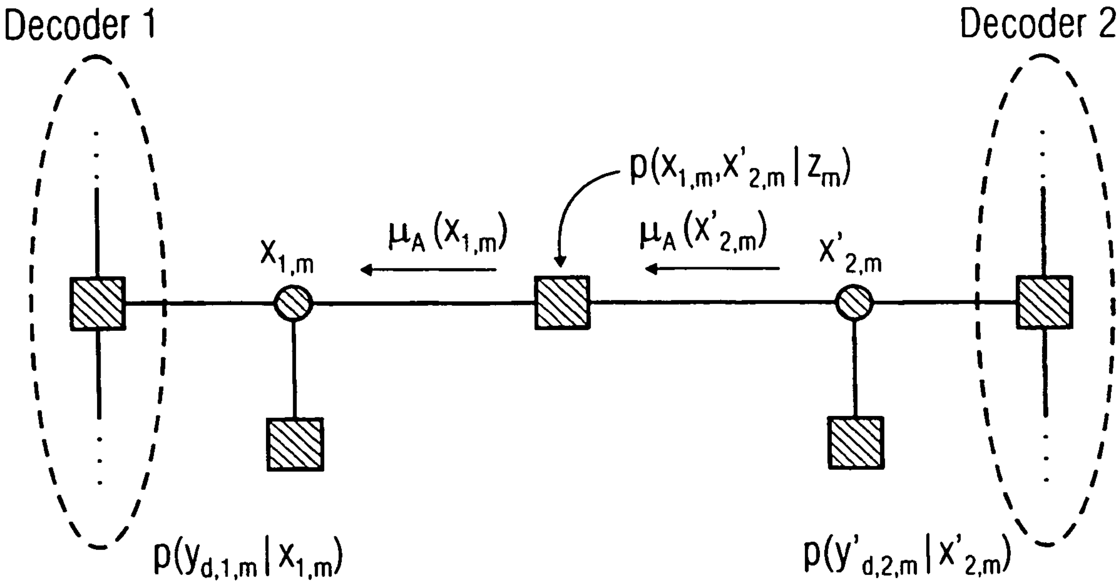
Decoder 1
Decoder 2
$p(x_{1,m}, x'_{2,m} | z_m)$
$\mu_A (x_{1,m})$
$\mu_A (x'_{2,m})$
$x_{1,m}$
$x'_{2,m}$
$p(y_{d,1,m} | x_{1,m})$
$p(y'_{d,2,m} | x'_{2,m})$

FIG 12C

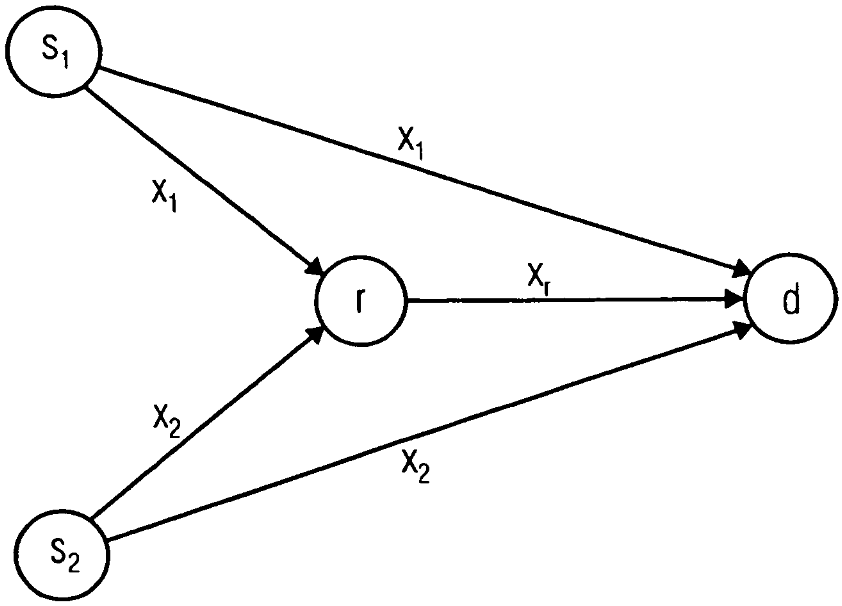


FIG 13
(PRIOR ART)

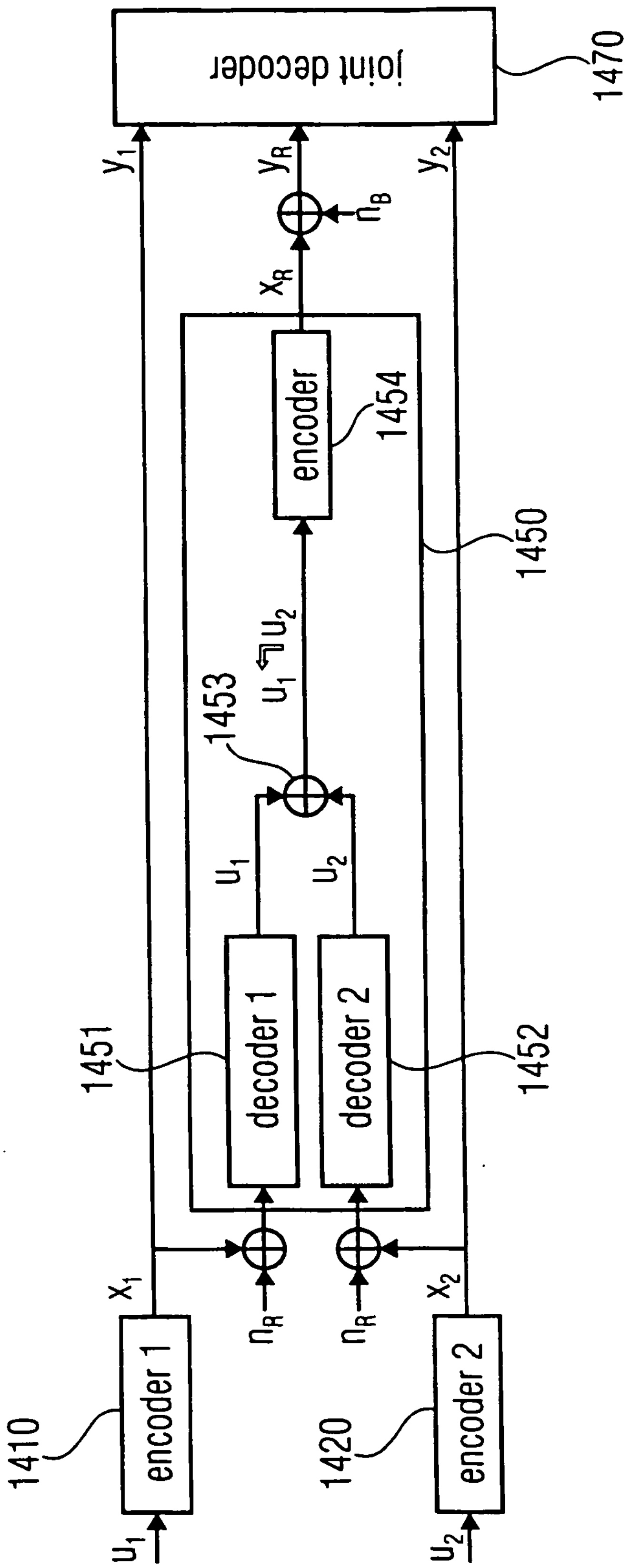


FIG 14
(PRIOR ART)

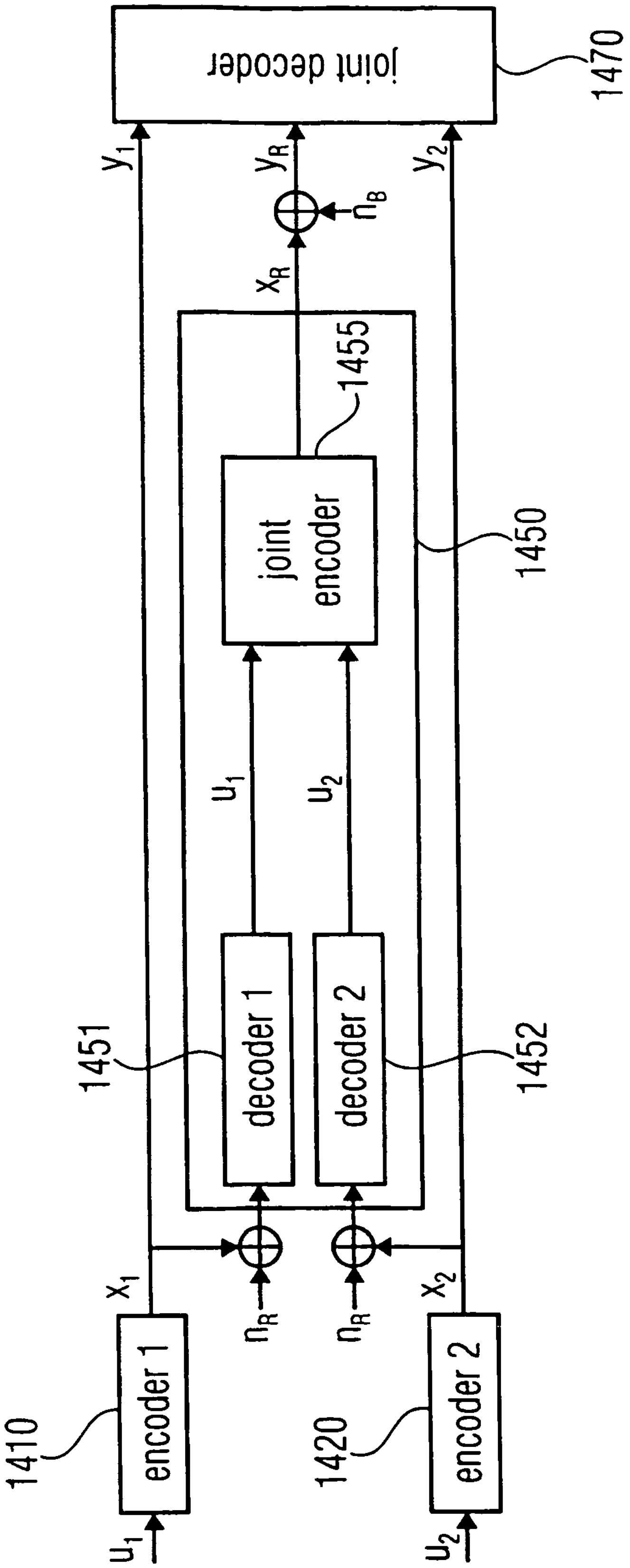


FIG 15
(PRIOR ART)

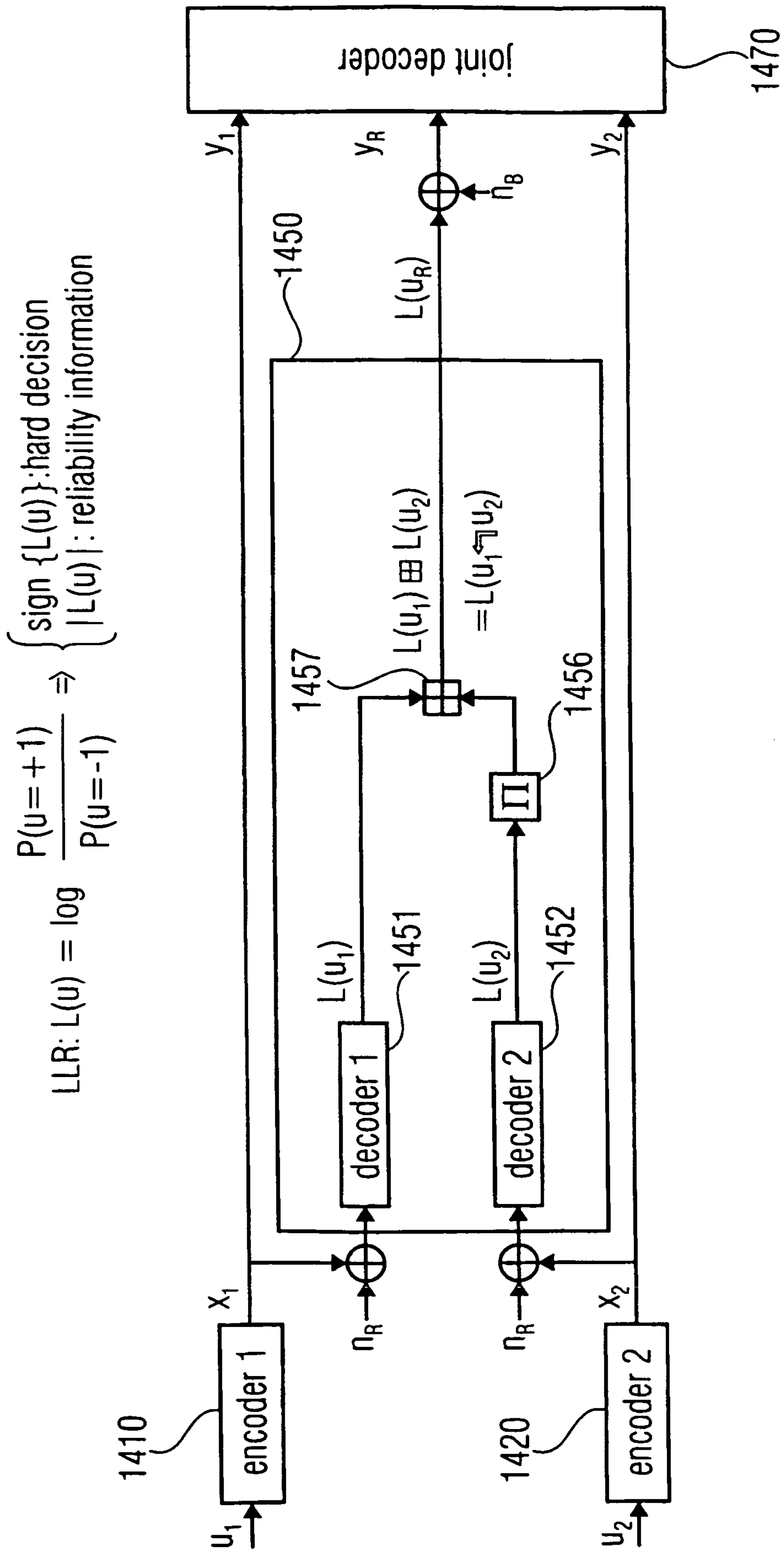


FIG 16
(PRIOR ART)

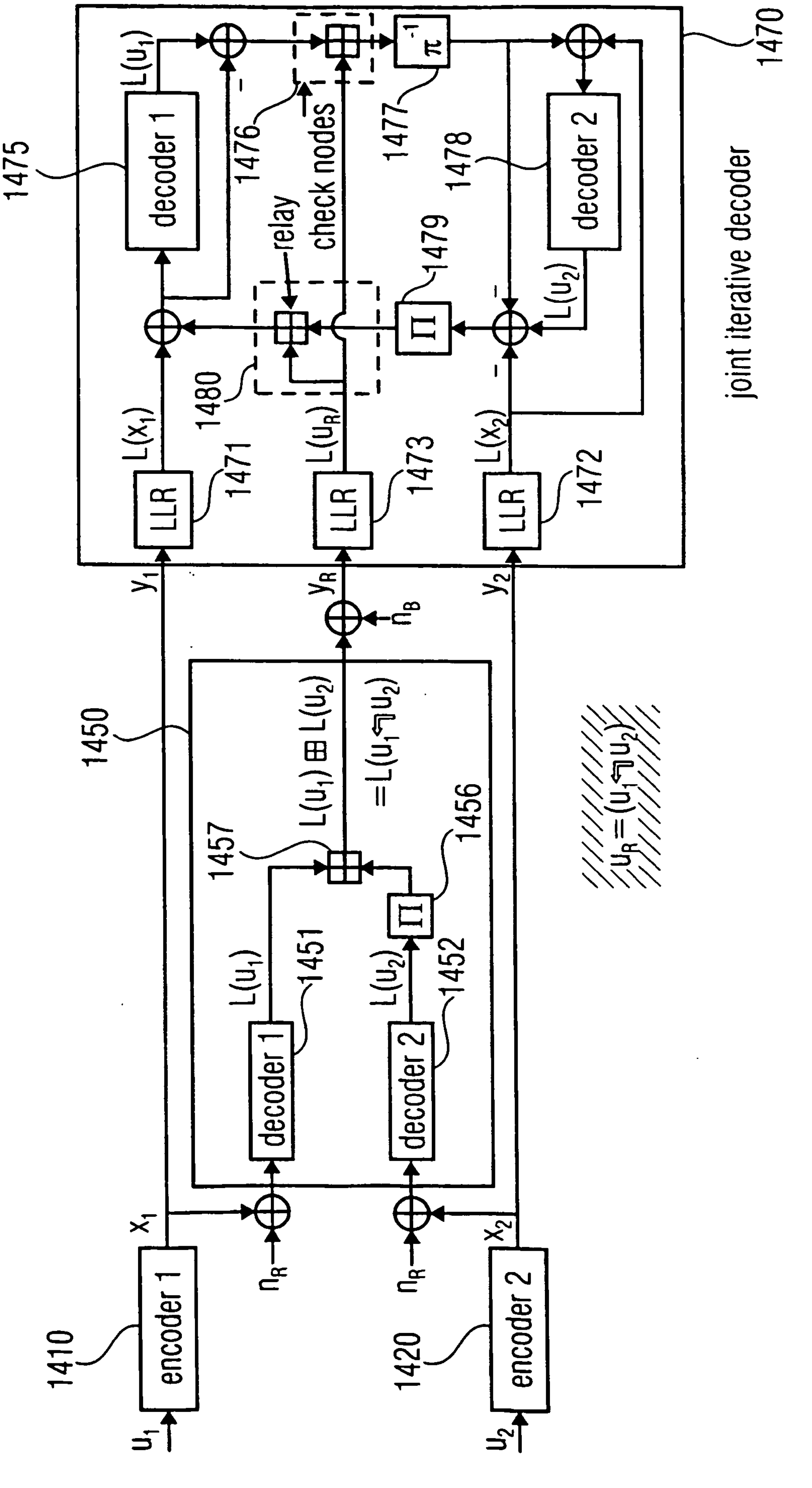


FIG 17
(PRIOR ART)

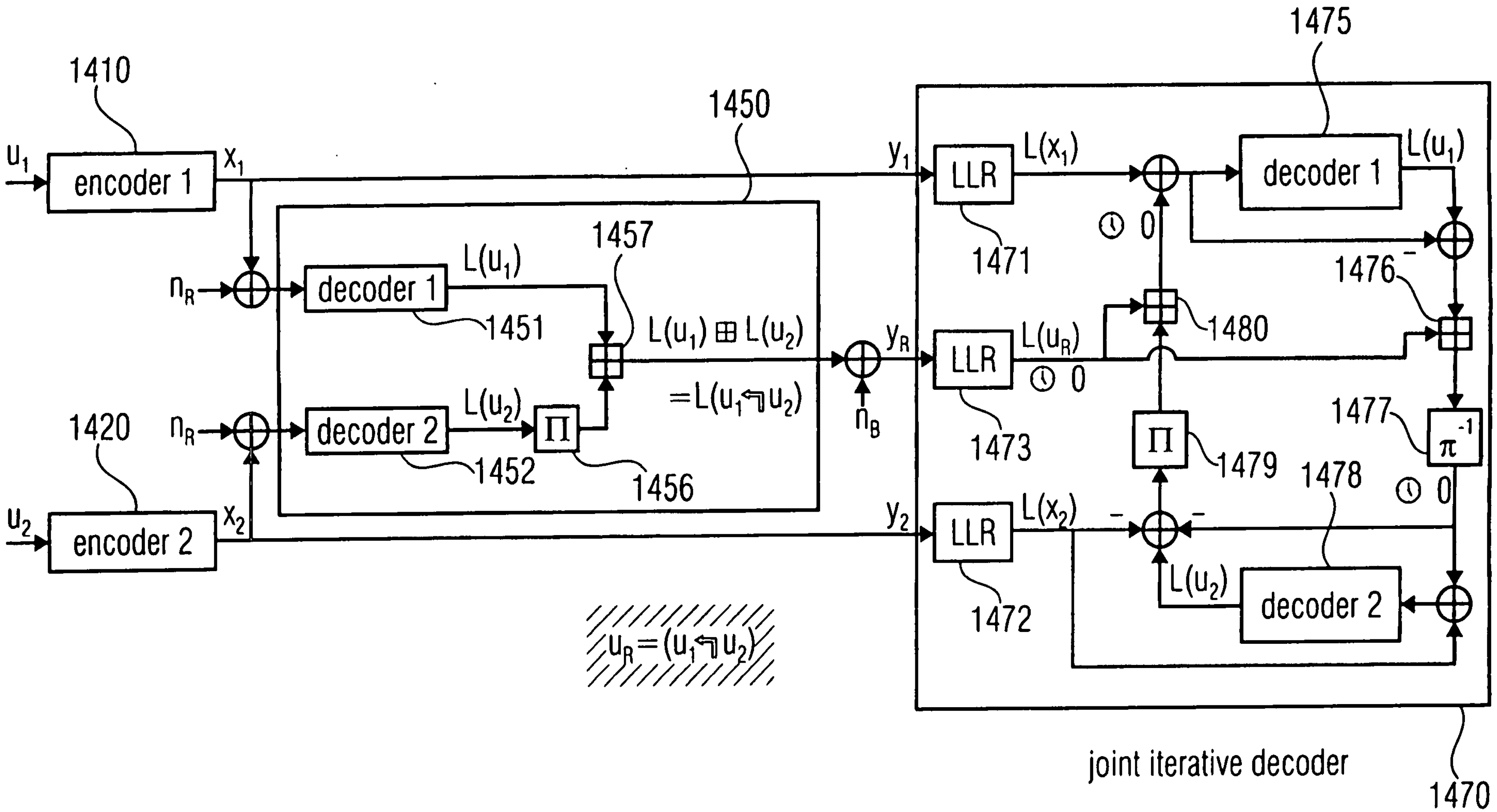


FIG 18
(PRIOR ART)

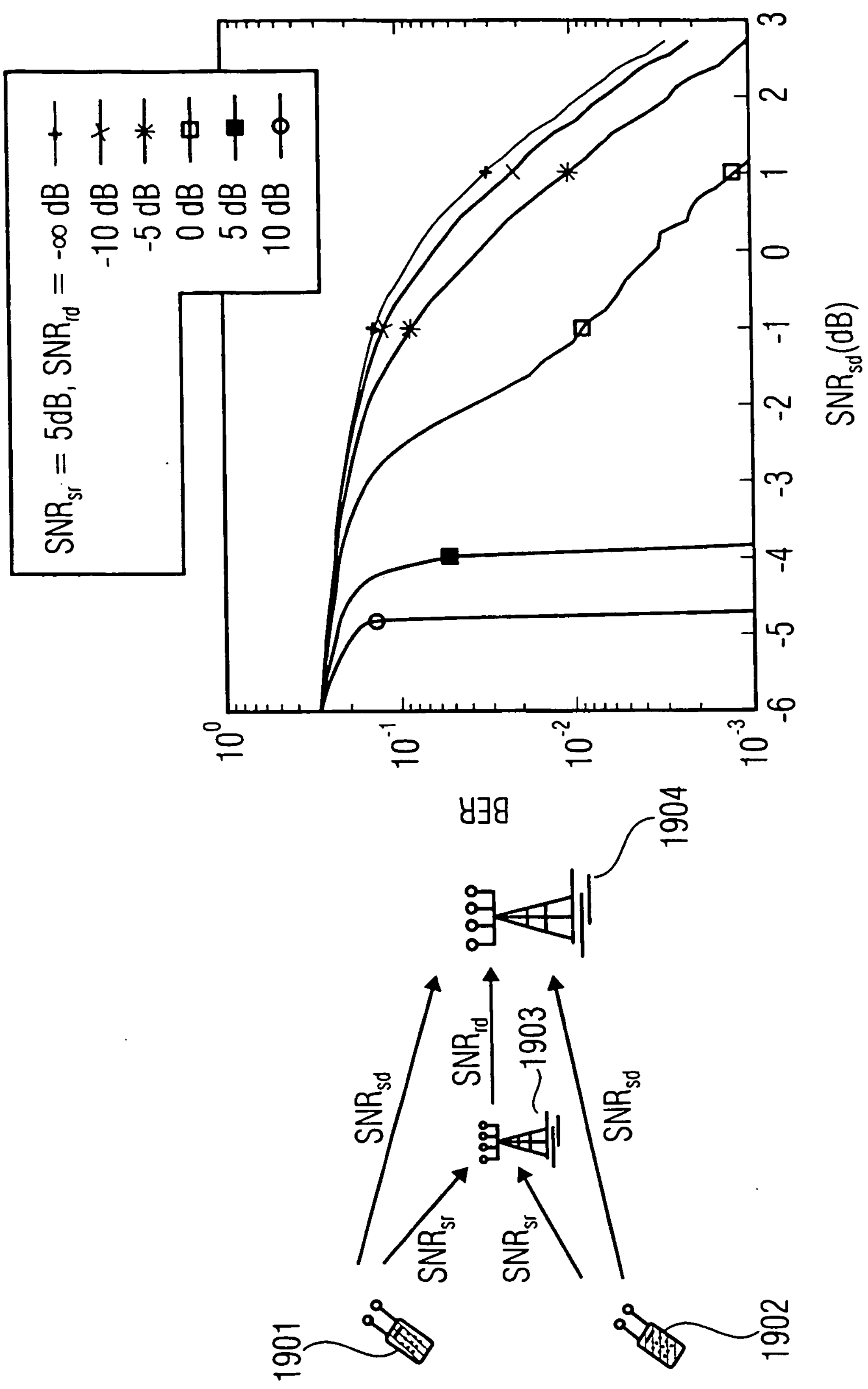


FIG 19
(PRIOR ART)

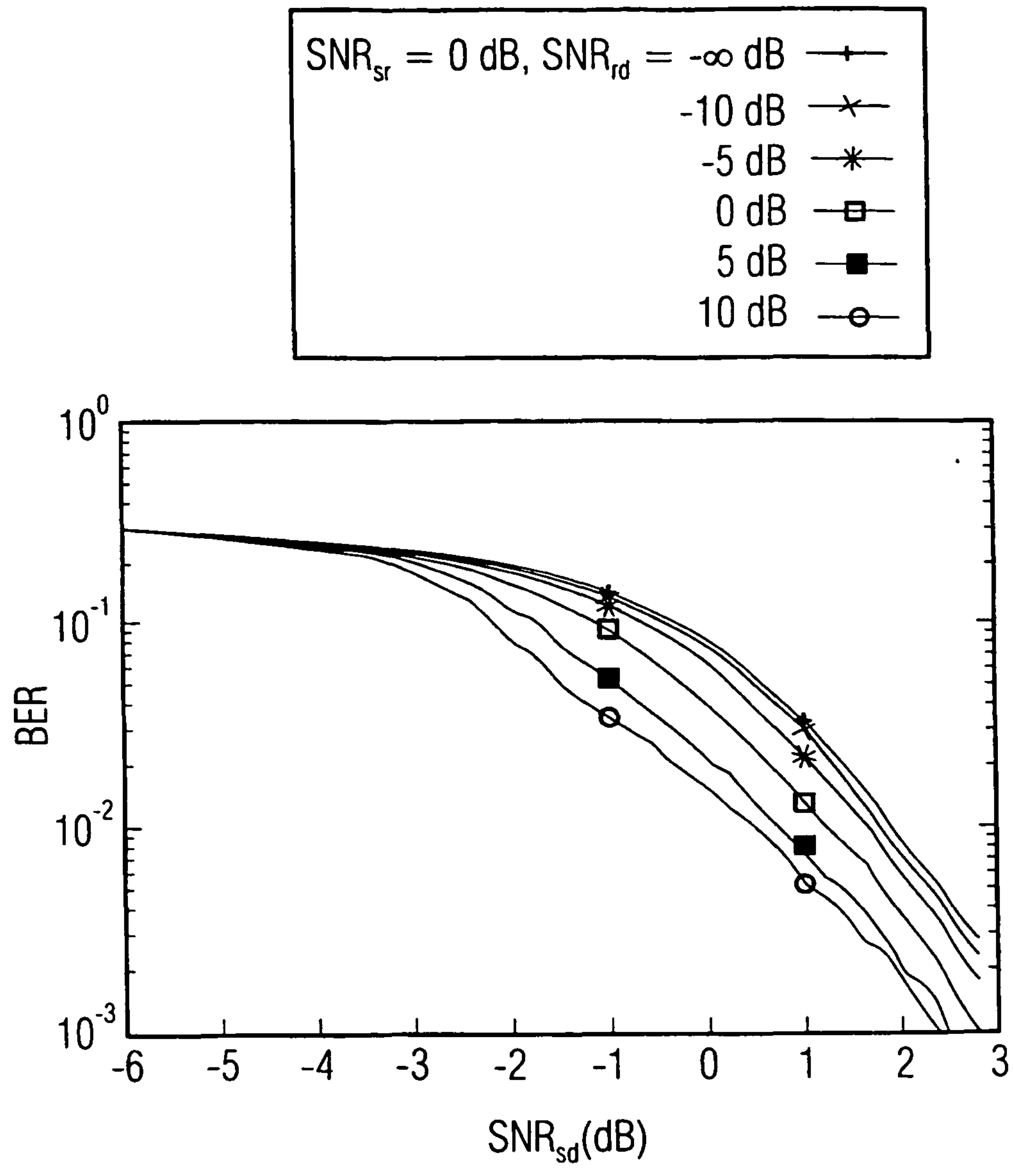


FIG 20
(PRIOR ART)

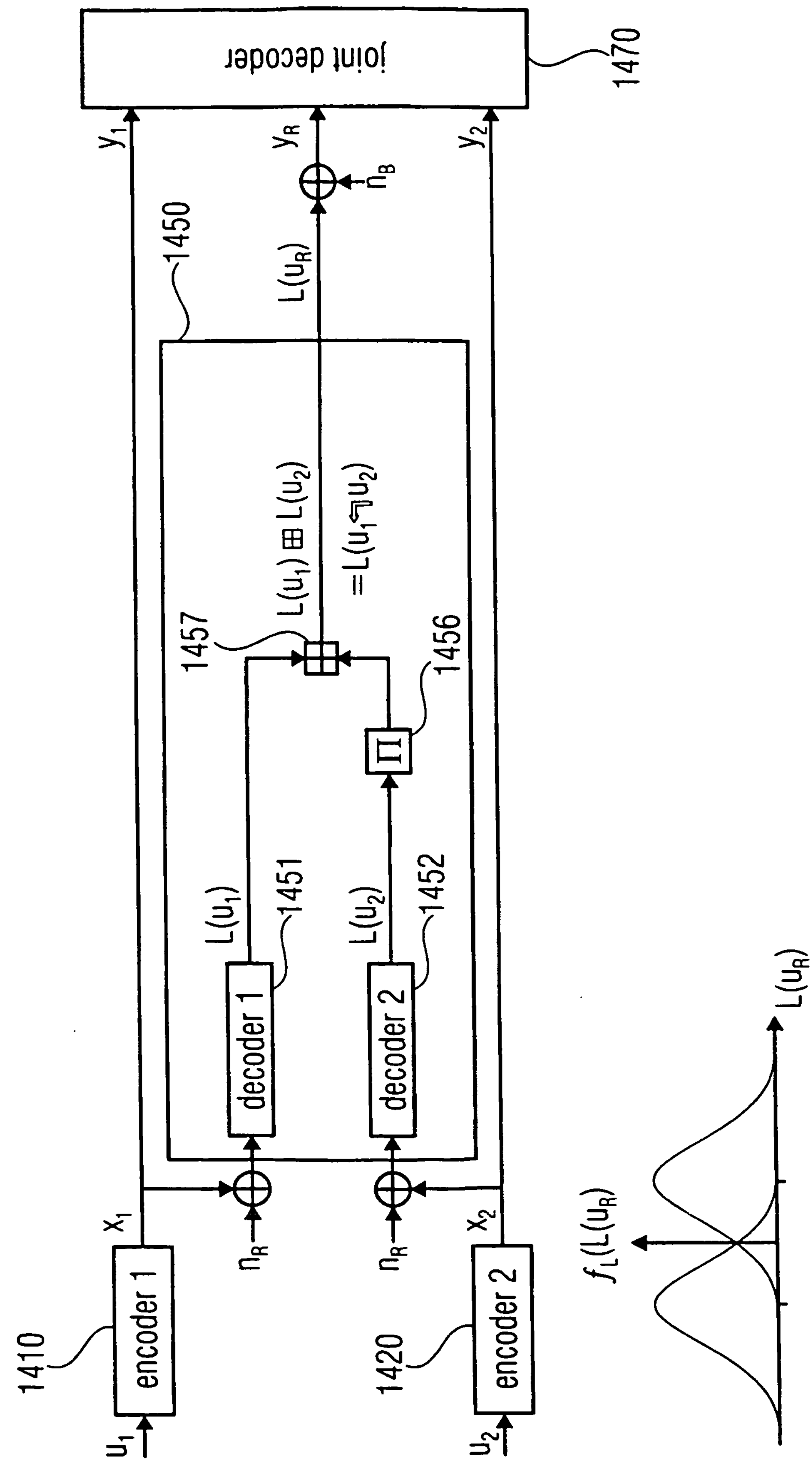


FIG 21
(PRIOR ART)

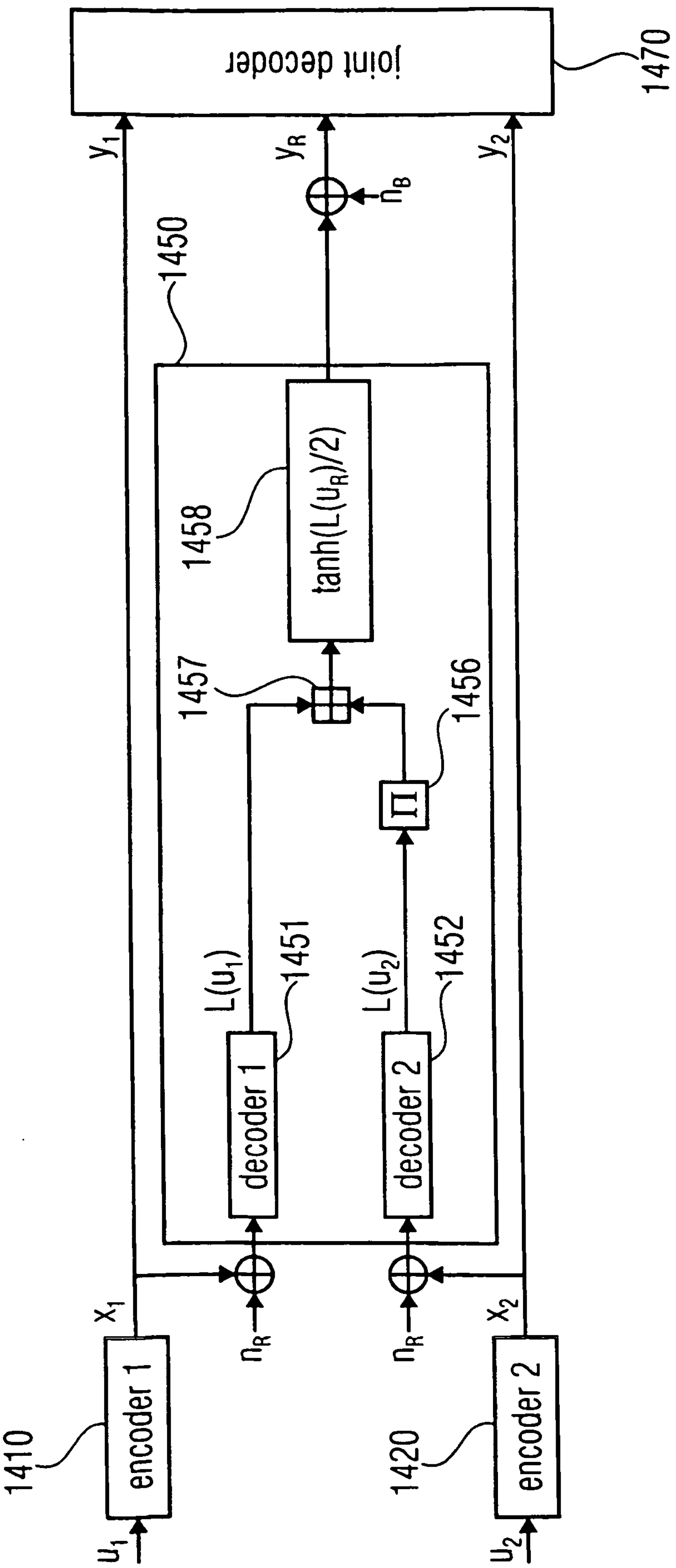


FIG 22
(PRIOR ART)

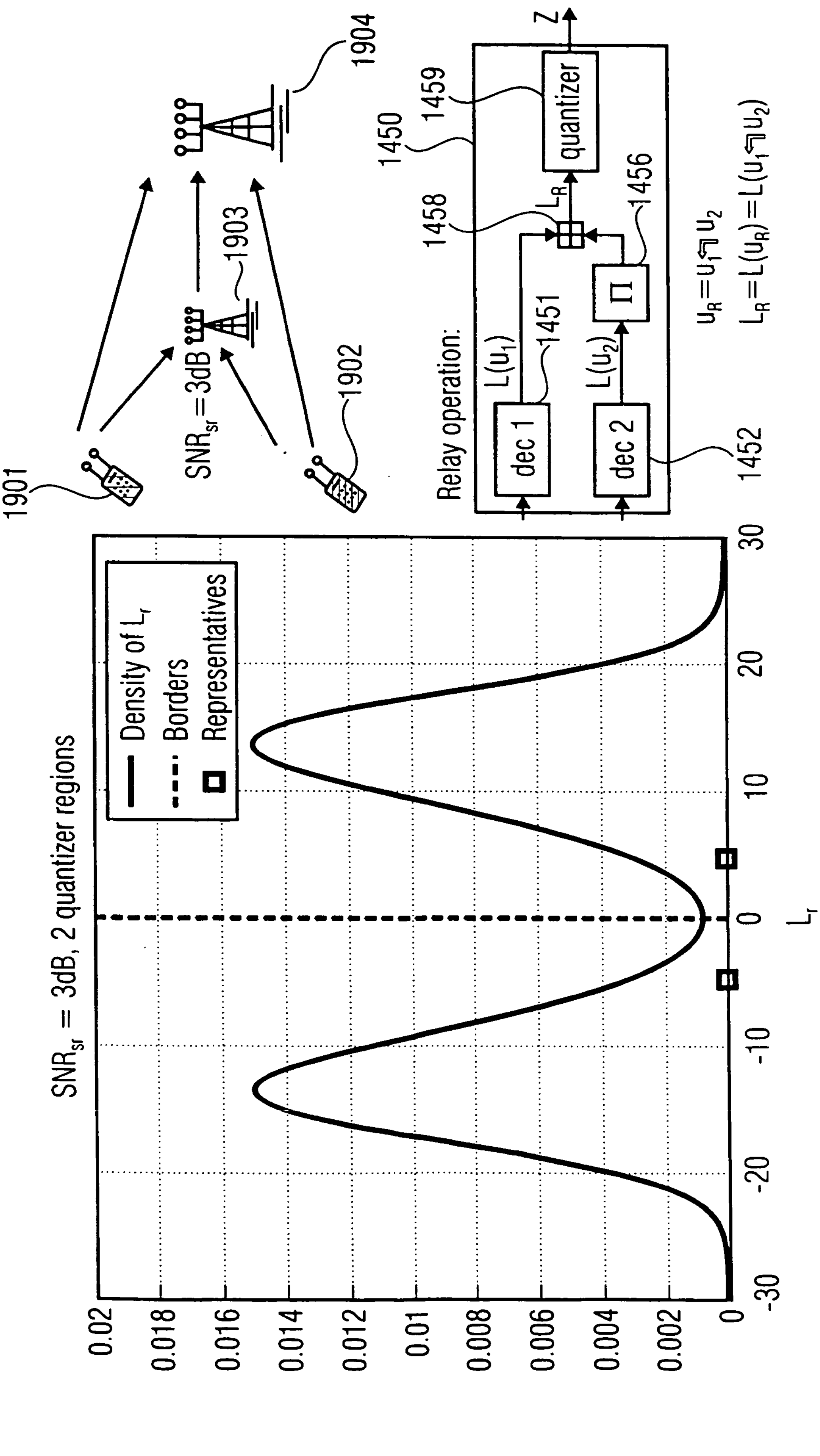


FIG 23
(PRIOR ART)

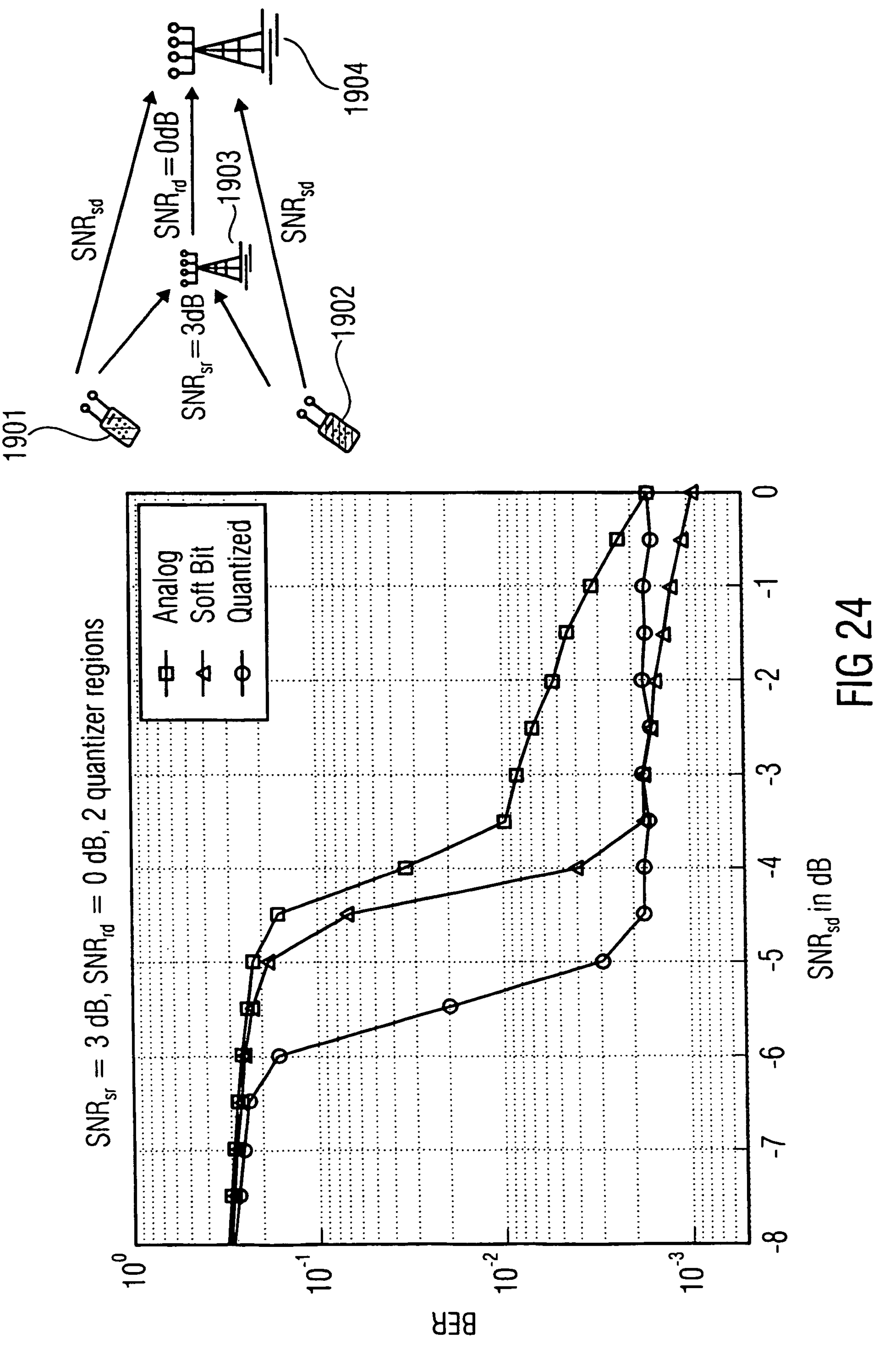


FIG 24
(PRIOR ART)

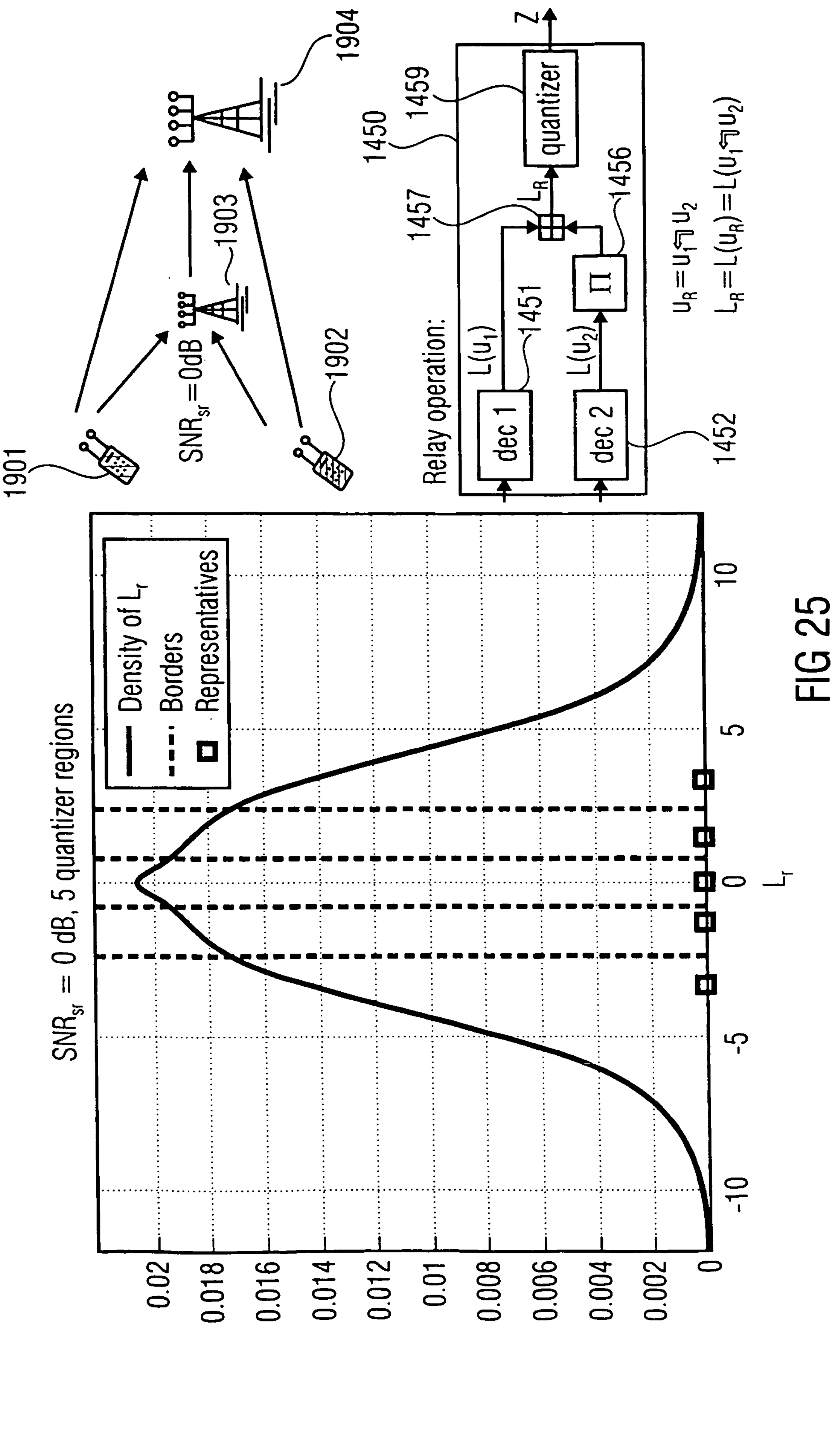


FIG 25
(PRIOR ART)

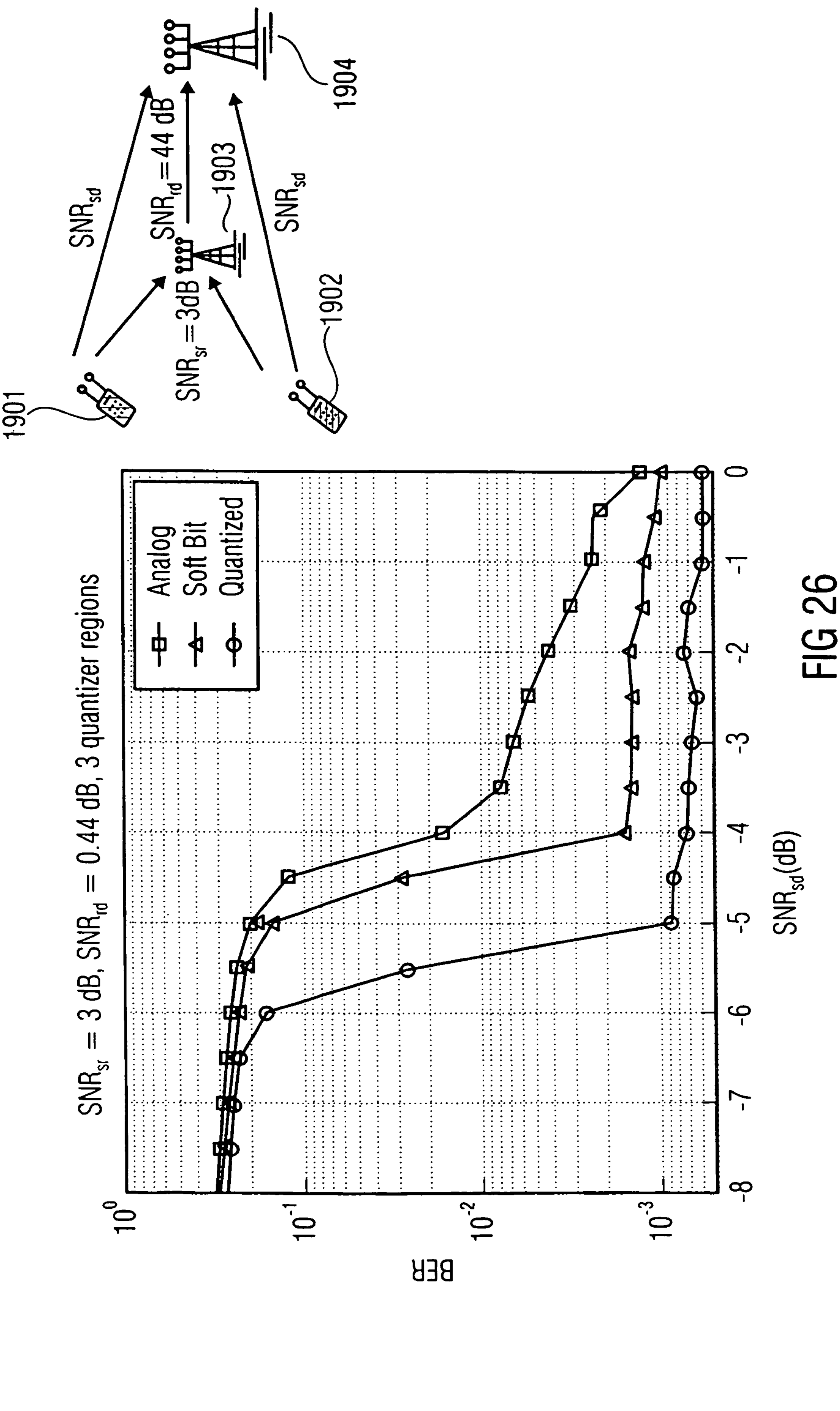


FIG 26
(PRIOR ART)

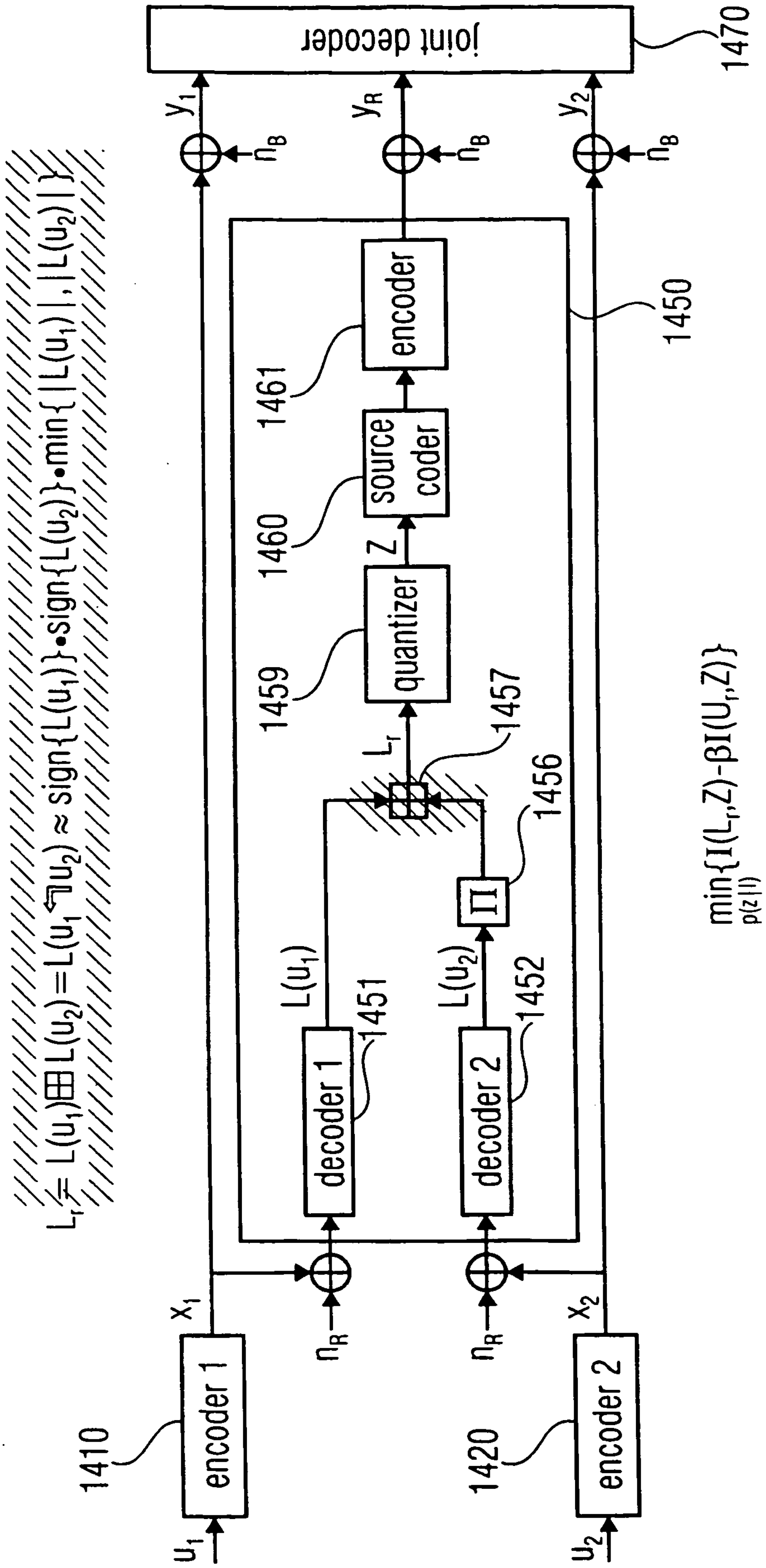


FIG 27
(PRIOR ART)

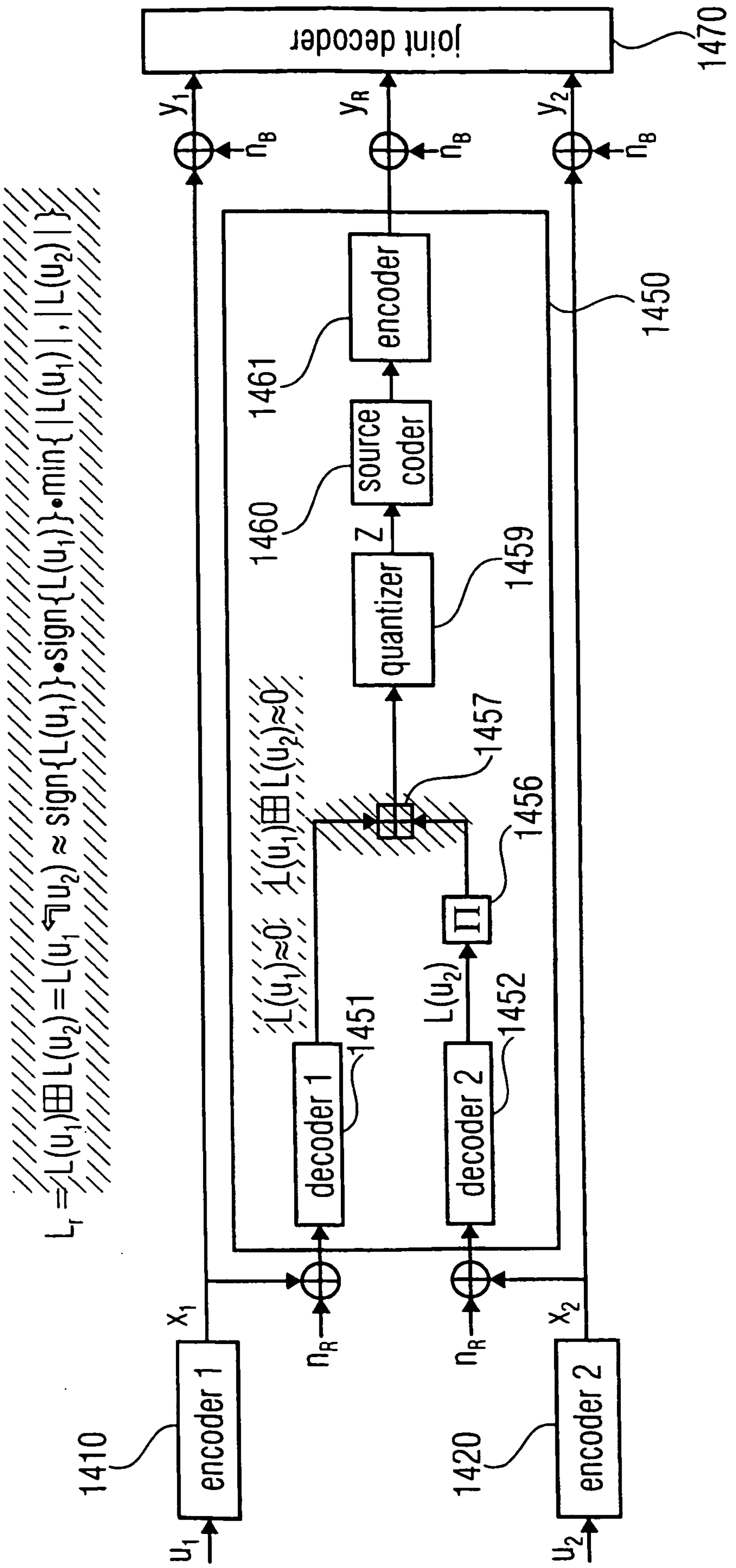


FIG 28
(PRIOR ART)

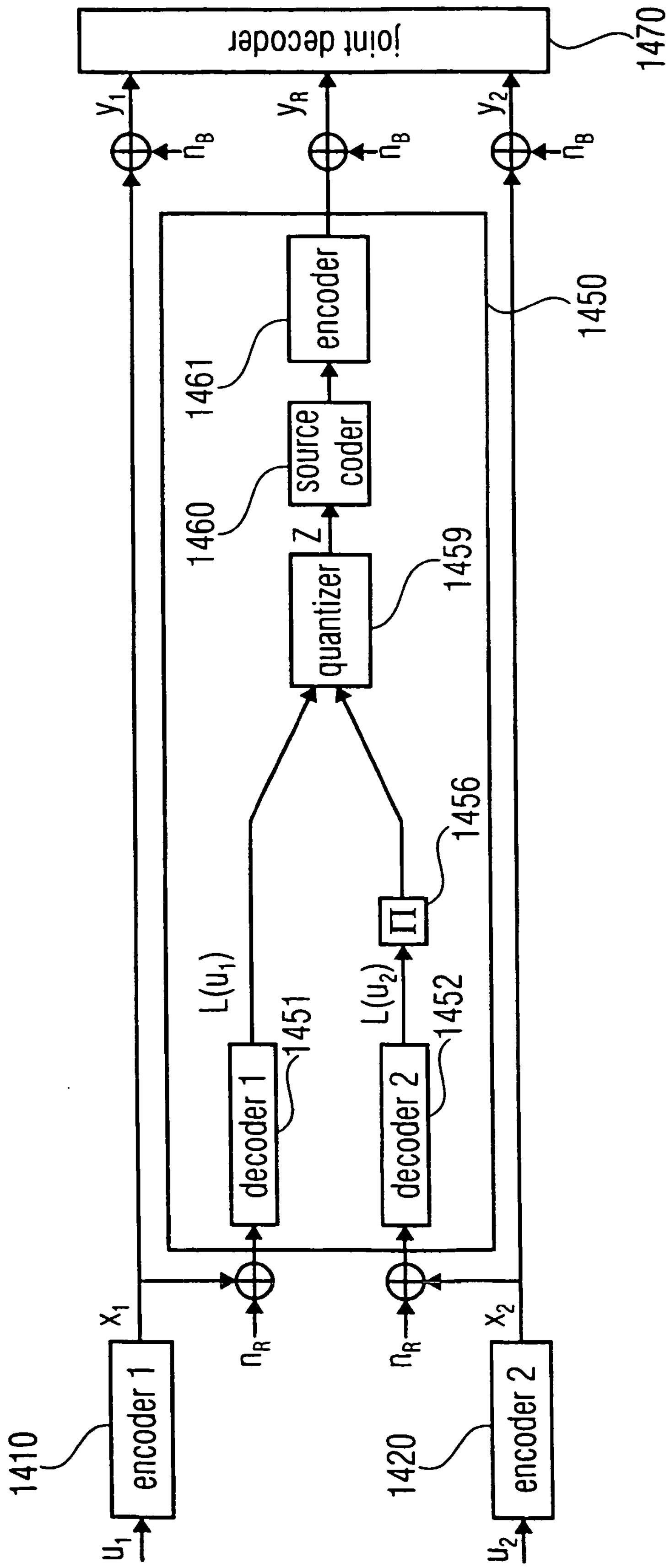


FIG 29
(PRIOR ART)

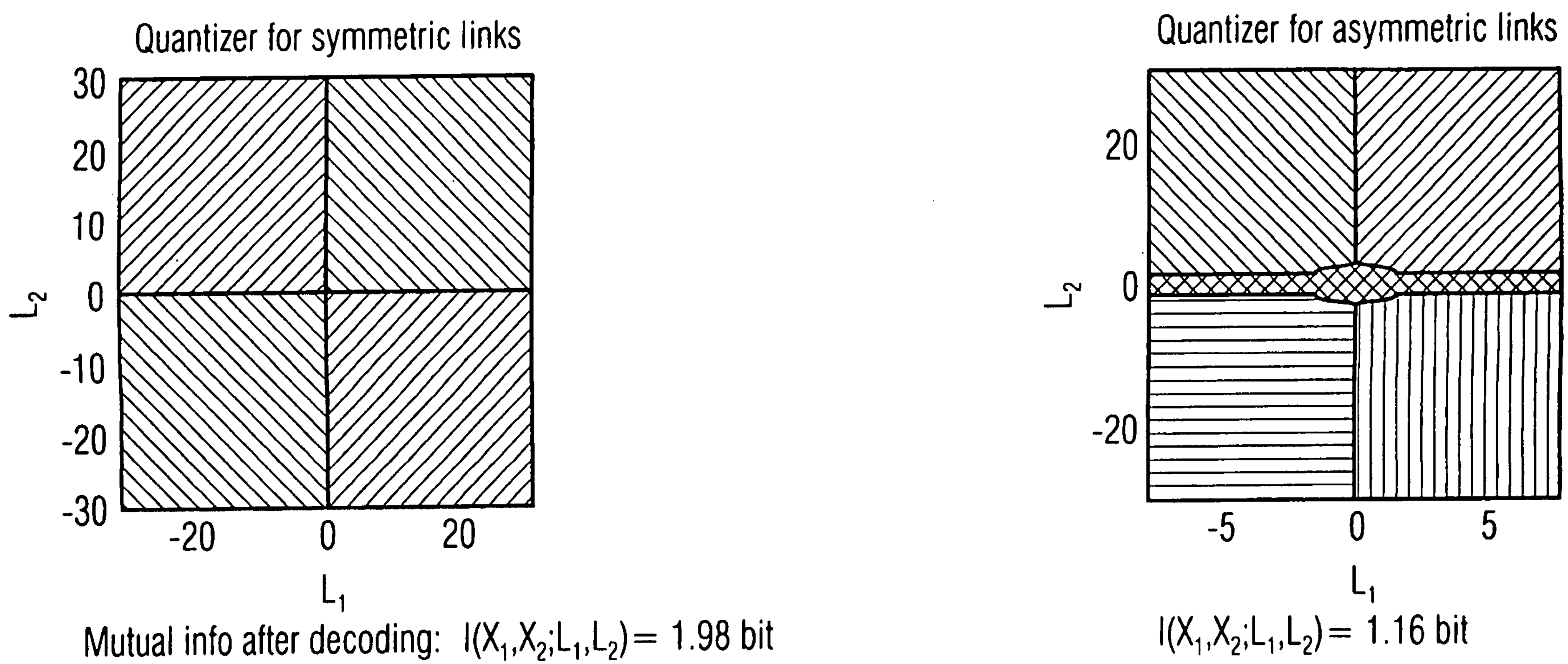


Mutual info after decoding: $I(X_1,X_2;L_1,L_2) = 1.98$ bit | $I(X_1,X_2;L_1,L_2) = 1.16$ bit

Relevant mutual info after quantization: $I_{rel} = 1.93$ bit | $I_{rel} = 1.08$ bit

Required number of source-coded bits on relay-BS link: $H(Z) = 1$ bit | $H(Z) = 2.1$ bit

FIG 30
(PRIOR ART)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **A. SENDONARIS ; E. ERKIP ; B. AAZHANG.** Increasing uplink capacity via user cooperation diversity. *Proc. IEEE Int. Symp. on Information Theory,* 1998
- **R. AHLSWEDE ; N. CAI ; S. R. LI ; R. W. YEUNG.** Network information flow. *IEEE Trans. Inf. Theory,* April 2000, vol. 46 (4), 1204-1216
- **X. BAO ; J. LI.** Matching code-on-graph with network-on-graph: Adaptive network coding for wireless relay networks. *Proc. 43rd Ann. Allerton Conf. on Communications, Control, and Computing,* 2005
- **C. HAUSL ; F. SCHRECKENBACH ; I. OIKONOMIDIS ; G. BAUCH.** Iterative network and channel decoding on a tanner graph. *Proc. 43rd Ann. Allerton Conf. on Communications, Control, and Computing,* 2005
- **Y. CHEN ; S. KISHORE ; J. LI.** Wireless diversity through network coding. *Proc. IEEE Wireless Communications and Networking Conf.,* 2006
- **L. XIAO ; T. E. FUJA ; J. KLIEWER ; D. J. COSTELLO, JR.** Nested codes with multiple interpretations. *Proc. 40th Ann. Conf. on Information Sciences and Systems,* 2006
- **T. M. COVER ; A. A. EL GAMAL.** Capacity theorems for the relay channel. *IEEE Trans. Inf. Theory,* September 1979, vol. IT-25 (5), 572-584
- **G. KRAMER ; M. GASTPAR ; P. GUPTA.** Cooperative strategies and capacity theorems for relay networks. *IEEE Trans. Inf. Theory,* September 2005, vol. 51 (9), 3037-3063
- **L. SANKARANARAYANAN ; G. KRAMER ; N. B. MANDAYAM.** Hierarchical sensor networks: Capacity bounds and cooperative strategies using the multiple-access relay network. *IEEE Conf. on Sensor Networks,* 2004
- **S. YANG ; R. KOETTER.** Network coding over a noisy relay: a belief propagation approach. *Proc. IEEE Int. Symp. on Information Theory,* 2007
- **A. D. WYNER ; J. ZIV.** The rate-distortion function for source coding with side information at the decoder. *IEEE Trans. Inf. Theory,* June 1976, vol. IT-22 (1), 1-10
- **A. CHAKRABARTI ; A. DE BAYNAST ; A. SABHARWAL ; B. AAZHANG.** Half-duplex estimate-and-forward relaying: Bounds and code design. *Proc. IEEE Int. Symp. on Information Theory,* 2006, 1239-1243
- **N. TISHBY ; F. C. PEREIRA ; W. BIALEK.** The information bottleneck method. *Proc. 37th Ann. Allerton Conf. on Communications, Control, and Computing,* 1999
- **G. ZEITLER ; R. KOETTER ; G. BAUCH ; J. WIDMER.** Design of network coding functions in multihop relay networks. *Proc. 5th symposium Turbo Codes and Related Topics,* 2008
- **E. AYANOGLU.** Diversity Coding of Transparent Self-Healing and Fault Tolerant Communication Networks. *IEEE Transactions on Communications,* November 1993, vol. 41 (11
- **GEORGE ZEITLER et al.** Design of Network Coding Functions in Multihop Relay Networks. *5th International Symposium on Turbo Codes and Related Topics,* 2008
- **RUIYUAN HU et al.** Practical Compress-Forward in User Cooperation: Wyner-Ziv Cooperation. *ISIT, Seattle, USA,* 09 July 2006
- **G. ZEITLER ; R. KOETTER ; G. BAUCH ; J.WIDMER.** On quantizer design for soft values in the multiple-access relay channel. *International Conference on Communications,* 2009
- Universal mobile telecommunications system (UMTS): Multiplexing and channel coding (FDD. *3GPP TS 125.212 version 3.4.0, Tech. Rep.,* 2000
- **P. E. TAWK.** Decoding of turbo codes for maximum extrinsic information at codes rates above capacity. *Master's thesis,* 2008
- **S. TEN BRINK.** Convergence behavior of iteratively decoded parallel concatenated codes. *IEEE Trans. Comm.,* October 2001, vol. 49 (10), 1727-1737
- **S. YANG ; R. KOETTER.** Network coding over a noisy relay: a belief propagation approach. *Proc. IEEE Int. Symp., on Information Theory,* 2007
- **Y. LI ; B. VUCETIC ; T. F. WONG ; M. DOHLER.** Distributed turbo coding with soft information relaying in multihop relay networks. *IEEE Journal on Sel. Areas in Comm.,* November 2006, vol. 24 (11), 2040-2050
- **R. E. BLAHUT.** Computation of channel capacity and rate-distortion functions. *IEEE Trans. Inf. Theory,* July 1972, vol. IT-18 (4), 460-473